# EUROPEAN PATENT SPECIFICATION

(11) **EP 0 491 842 B1**
(45) Date of publication and mention of the grant of the patent: **09.04.1997**
(21) Application number: 90914596.3
(22) Date of filing: 13.09.1990
(51) Int. Cl.: C07F 7/00, C07F 7/28, C08F 10/00, C08F 4/642

(54) **MONOCYCLOPENTADIENYL TRANSITION METAL OLEFIN POLYMERIZATION CATALYSTS**
KATALYSATOREN ZUR POLYMERISATION VON OLEFINEN
CATALYSEURS DE POLYMERISATION D'OLEFINES A BASE DE METAUX DE TRANSITION DE MONOCYCLOPENTADIENYLE

(30) Priority: 13.09.1989 US 406945; 04.06.1990 US 533245
(43) Date of publication of application: 01.07.1992
(60) Divisional application: 94203508.0
(73) Proprietor: EXXON CHEMICAL PATENTS INC., Linden,New Jersey 07036-0710 (US)
(72) Inventor: CANICH, Jo Ann Marie, Houston, TX 77058 (US)
(74) Representative: Veldhuizen, Albert Dirk Willem
(86) International application number: PCT/US90/05208
(87) International publication number: WO 91/04257

(56) References cited:
- EP-A- 416 815
- WO-A-87/03887
- Chemische Berichte, volume 123, no. 8, August 1990, (Weinheim, DE), J. Okuda: "Synthesis and complexation of linked cyclopentadienyl-amido ligands", pages 1649-1651
- Organometallics, volume 9, no. 3, 1990, (Washington, DC, US), P.J. Shapiro et al.: "[ (n5-C5Me4,Me2Si(n1-NCMe3) (PMe3)ScH]2: A unique example of a single-
- component x-Olefin polymerization catalyst", pages 869-871
- T.Kükenhöhner "Untersuchungen zur Darstellung chiraler Organotitan (IV)-Verbindungen für enantioselektive Synthesen"

## Description

### FIELD OF THE INVENTION

This invention relates to uses of certain monocyclopentadienyl metal compounds of a Group IV B transition metal of the Periodic Table of Elements, to a catalyst system comprising a monocyclopentadienyl Group IV B transition metal compound and an alumoxane, and to a process using such catalyst system for the production of polyolefins, particularly polyethylene, polypropylene and a-olefin copolymers of ethylene and propylene having a high molecular weight. The catalyst system is highly active at low ratios of aluminum to the Group IV B transition metal, hence catalyzes the production of a polyolefin product containing low levels of catalyst metal residue. Titanium species of the catalyst are stable at high pressures in unsupported form, unlike their bis-cyclopentadienyl titanium compound counterparts, and exhibit the ability to catalyze the incorporation of higher a-olein comonomer contents for production of higher molecular weight a-olefin copolymers than analogous zirconium and hafnium species of a monocyclopentadienyl transition metal compound.

### BACKGROUND OF THE INVENTION

As is well known, various processes and catalysts exist for the homopolymerization or copolymerization of olefins. For many applications it is of primary importance for a polyolefin to have a high weight average molecular weight while having a relatively narrow molecular weight distribution. A high weight average molecular weight, when accompanied by a narrow molecular weight distribution, provides a polyolefin or an ethylene-a-olefin copolymer with high strength properties.

Traditional Ziegler-Natta catalysts system -- a transition metal compound cocatalyzed by an aluminum alkyl -- are capable of producing polyolefins having a high molecular weight but a broad molecular weight distribution.

Recently a catalyst system has been developed wherein the transition metal compound has two or more cyclopentadienyl ring ligands -- such transition metal compound being referred to as a metallocene -- which catalyzes the production of olefin monomers to polyolefins. Accordingly, metallocene compounds of a Group IV B metal, particularly, titanocenes and zirconocenes, have been utilized as the transition metal component in such "metallocene" containing catalyst system for the production of polyolefins and ethylene-a-olefin copolymers. When such metallocenes are cocatalyzed with an aluminum alkyl -- as is the case with a traditional type Ziegler-Natta catalyst system -- the catalytic activity of such metallocene catalyst system is generally too low to be of any commercial interest.

It has since become known that such metallocenes may be cocatalyzed with an alumoxane -- rather than an aluminum alkyl -- to provide a metallocene catalyst system of high activity for the production of polyolefins.

The zirconium metallocene species, as cocatalyzed or activated with an alumoxane, are commonly more active than their hafnium or titanium analogous for the polymerization of ethylene alone or together with an a-olefin comonomer. When employed in a non-supported form -- i.e., as a homogeneous or soluble catalyst system -- to obtain a satisfactory rate of productivity even with the most active zirconium species of metallocene typically requires the use of a quantity of alumoxane activator sufficient to provide an aluminum atom to transition metal atom ratio (A1:TM) of at least greater than 1000:1: often greater than 5000: 1, and frequently on the order of 10,000:1. Such quantities of alumoxane impart to a polymer produced with such catalyst system an undesirable content of catalyst metal residue, i.e., an undesirable "ash" content (the nonvolatile metal content). In high pressure polymerization procedures using soluble catalyst systems wherein the reactor pressure exceeds about 500 bar only the zirconium or hafnium species of metallocenes may be used. Titanium species of metallocenes are generally unstable at such high pressures unless deposited upon a catalyst support. A wide variety of Group IV B transition metal compounds have been named as possible candidates for an alumoxane cocatalyzed catalyst system. Although bis(cyclopentadienyl) Group IV B transition metal compounds have been the most preferred and heavily investigated for use in alumoxane activated catalyst systems for polyolefin production, suggestions have appeared that mono and tris(cyclopentadienyl) transition metal compounds may 5 also be useful. See, for example U.S. Patent Nos. 4,522,982; 4,530,914 and 4,701,431. Such mono (cyclopentadienyl) transition metal compounds as have heretofore been suggested as candidates for an alumoxane activated catalyst system are mono(cyclopenta-dienyl) transition metal trihalides and trialkyls.

More recently, International Publication No. WO 87/03887 describes the use of a composition comprising a transition metal coordinated to at least one cyclopentadienyl and at least one heteroatom ligand as a transition metal component for use in an alumoxane activated catalyst system for a-olefin polymerization. The composition is broadly defined as a transition metal, preferably of Group IV B of the Periodic Table, which is coordinated with at least one cyclopentadienyl ligand and one to three heteroatom ligands, the balance of the transitionmetal coordination requirement being satisfied with cyclopentadienyl or hydrocarbyl ligands. Catalyst systems described by this reference are illustrated solely with reference to transition metal compounds which are metallocenes, i.e., bis(cyclopentadienyl) Group IV B transition metal compounds.

Even more recently, at the Third Chemical Congress of North American held in Toronto, Canada in June 1988, John Bercaw reported upon efforts to use a compound of a Group III B transition metal- coordinated to a single cyclopentadienyl heteroatom bridged ligand as a catalyst system forthe polymerization of olefins. Although some catalytic activity was observed under the conditions employed, the degree of activity and the properties observed in the resulting polymer product were discouraging of a belief that such monocyclopentadienyl transition metal compounds could be usefully employed for commercial polymerization processes.

EP 416815 published after the priority dates of this European patent application discloses polymerization with a limited range of monocyclopentadienyl compounds and alumoxane.

A thesis by Mr. Kükenhöhner from the University of Marburg, Germany discloses a limited number of cyclopentadienyl compounds in which a hydrocarbyl bridge links the cyclopentadienyl group and and oxygen atom bonded to a titanium transition metal which is Π-bonded to the cyclopentadienyl group. Utility in polymerization is not disclosed.

A need still exists for discovering catalyst systems that permit the production of higher molecular weight polyolefins and desirably with a narrow molecular weight distribution It is further desirable that a catalyst be discovered which, within reasonable ranges of ethylene to a-olefin monomer ratios, will catalyze the incorporation of higher contents of a-olefin comonomers in the production of ethylene-a-olefin copolymers.

### Summary of the invention

The catalyst system of this invention comprises in a first aspect of the invention, a transition metal component from Group IV B of the Periodic Table of the Elements (CRC Handbook of Chemistry and Physics, 68th ed. 1987 - 1988) and an alumoxane component which may be employed in solution, slurry or bulk phase polymerization procedure to produce a polyolefin of high weight average molecular weight and relatively narrow molecular weight distribution.

The Group IV B transition metal compound or catalyst component of the catalyst system is represented by the formula: 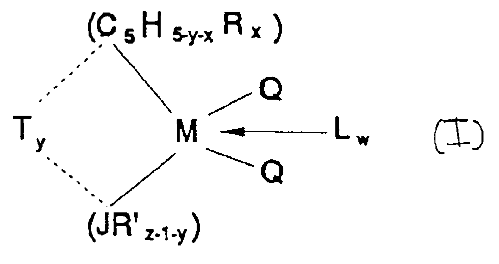 wherein: M is Zr, Hf or Ti in its highest formal oxidation state (+4, d° complex);
(C₂H_{5-y-x}Rₓ) is a cyclopentadienyl ring which is substituted with from zero to five substituent groups R, "x" is 0, 1, 2, 3, 4 or 5 denoting the degree of substitution, and each substituent group R is, independently, a radical selected from a group consisting of C₁-C₂₀ hydrocarbyl radicals, substituted C₁-C₂₀ hydrocarbyl radicals wherein one or more hydrogen atoms is replaced by a halogen radical, an amido radical, a phosphido radical, and alkoxy radical or any other radical containing a Lewis acidic or basic functionality, C₁-C₂₀ hydrocarbyl-substituted metalloid radicals wherein the metalloid is selected from the Group IV A of the Periodic Table of Elements; halogen radicals, amido radicals, phosphido radicals, alkoxy radicals, alkylborido radicals or any other radical containing Lewis acidic or basic functionality; or (C₅H_{5-y-x}Rₓ) is a cyclopentadienyl ring in which at least two adjacent R-groups are joined forming a C₄-C₂₀ ring to give a saturated or unsaturated polycyclic cyclopentadienyl ligand such as indenyl, tetrahydroindenyl, fluorenyl or octahydrofluorenyl;
(JR'_{z-1-y}) is a heteroatom ligand in which J is an element with a coordination number of three from Group V A or an element with a coordination number of two from Group VI A of the Periodic Table of Elements, preferably nitrogen, phosphorus, oxygen or sulfur, and each R' is, independently a radical selected from a group consisting of C₁-C₂₀ hydrocarbyl radicals, substituted C₁-C₂₀ hydrocarbyl radicals wherein one or more hydrogen atoms are replaced by a halogen radical, an amido radical, a phosphido radical, an alkoxy radical or any other radical containing a Lewis acidic or basic functionality, and "z" is the coordination number of the element J;
each Q or Q' may be independently any univalent anionic ligand such as a halide, hydride, or substituted or unsubstituted C₁-C₂₀ hydrocarbyl, alkoxide, aryloxide, amide, arylamide, phosphide or arylphosphide, provided that where any Q is a hydrocarbyl such Q is different from (C₅H_{5-y-x}Rₓ) or Q and Q' together may be an alkylidene or a cyclometallated hydrocarbyl or any other divalent anionic chelating ligand;
"y" is 0 or 1 when w is greater than 0; y is 1 when w is 0; when "y" is 1, T is a covalent bridging group containing a Group IV A or V A element such as, but not limited to, a dialkyl, alkylaryl or diaryl silicon or germanium radical, alkyl or aryl phosphine or amine radical, or a hydrocarbyl radical such as methylene, ethylene and the like;
L is a neutral Lewis base such as diethylether, tetraethylammonium chloride, tetrahydrofuran, dimethylaniline, aniline, trimethylphosphine, n-butylamine, and the like; and "w" is a number from 0 to 3. L can also be a second transition metal compound of the same type such that the two metal centers M and M' are bridged by Q and Q', wherein M' has the same meaning as M and Q' has the same meaning as Q. Such dimeric compounds are represented by the formula:

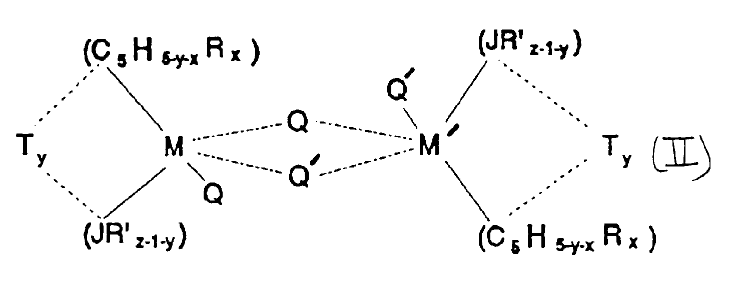

The alumoxane component of the catalyst may be represented by the formulas: (R³⁻AI-O)ₘ; R⁴(R⁵⁻AI-O)ₘ- AIR⁶ or mixtures thereof, wherein R³⁻R⁶ are, independently, a C₁-C₅ alkyl group or halide and "m" is an integer ranging from 1 to about 50 and preferably is from about 13 to about 25.

Catalyst systems of the invention may be prepared by placing the "Group IV B transition metal component" and the alumoxane component in common solution in a normally liquid alkane or aromatic solvent, which solvent is preferably suitable for use as a polymerization diluent for the liquid phase polymerization of an olefin monomer Those species of the Group IV B transition metal component wherein the metal is titanium have been found to impart beneficial properties to a catalyst system which are unexpected in view of what is known about the properties of bis(cyclopentadienyl) titanium compounds which are cocatalyzed by alumoxanes. Whereas titanocenes in their soluble form are generally unstable in the presence of aluminum alkyls, the monocyclopentadienyl titanium metal components of this invention, particularly those wherein the heteroatom is nitrogen, generally exhibit greater stability in the presence of aluminum alkyls, higher catalyst activity rates and higher a-olefin comonomer incorporation.

Further, the titanium species of the Group IV B transition metal component catalyst of this invention generally exhibit higher catalyst activities and the production of polymers of greater molecular weight and a-olefin comonomer contents than catalyst systems prepared with the zirconium or hafnium species of the Group IV B transition metal component.

A typical polymerization process of the invention such as for the polymerization or copolymerization of ethylene comprises the steps of contacting ethylene or C₃-C₂₀ a-olefins alone, or with other unsaturated monomers including C₃-C₂₀ a-olefins, C₅-C₂₀ diolefins, and/or acetylenically unsaturated monomers either alone or in combination with other olefins and/or other unsaturated monomers, with a catalyst comprising, in a suitable polymerizaion diluent, the Group IV B transition metal component illustrated above; and a methylalumoxane preferably in an amount to provide a molar aluminum to transition metal ratio of from 1:1 to 20,000:1 or more; and reacting such monomer in the presence of such catalyst system at a temperature of from -100°C to 300°C for a time of from 1 second to about 10 hours to produce a polyolefin having a weight average molecular weight of from 1,000 or less to 5,000,000 or more and a molecualr weight distribution of from 1.5 to 15.0.

The invention provides in a second aspect of the invention the use for the production of polyolefins of a catalyst component of the general formula (I) and (II).

### Catalyst Component

Examples of the T group which are suitable as a constituent group of the Group IV B transition metal component of the catalyst system are identified in column 1 of Table 1 under the heading "T".

Exemplary hydrocarbyl radicals for Q are methyl, ethyl, propyl, butyl, amyl, isoamyl, hexyl, isobutyl, heptyl, octyl, nonyl, decyl, cetyl and 2-ethylhexyl, phenyl, with methyl being preferred. Exemplary halogen atoms for Q include chlorine, bromine, fluorine and iodine, with chlorine being preferred. Exemplary alkoxides and aryloxides for Q are methoxide, phenoxide and substituted phenoxides such as 4-methylphenoxide. Exemplary amides of Q are dimethylamide, diethylamide, methylethylamide, di-t-butylamide and diisoproylamide. Exemplary aryl amides are diphenylamide and any other substituted phenyl amides. Exemplary phosphides of Q are diphenylphosphide, dicyclohexylphosphide, di- ethylphosphide and dimethylphosphide. Exemplary alkyldiene radicals for both Q together are methylidene, ethylidene and propylidene. Examples of the Q group which are suitable as a constituent group or element of the Group IV B transition metal component of the catalyst system are identified in column 4 of Table 1 under the heading "Q".

Suitable hydrocarbyl and substituted hydrocarbyl radicals, which may be substituted as an R group for at least one hydrogen atom in the cyclopentadienyl ring, will contain from 1 to 20 carbon atoms and include straight and branched alkyl radicals, cyclic hydrocarbon radicals, alkyl-substituted cyclic hydrocarbon radicals, aromatic radicals and alkyl-substituted aromatic radicals, amido-substituted hydrocarbon radicals, phosphido-substituted hydrocarbon radicals, alkoxy-substituted hydrocarbon radicals, and cyclopentadienyl rings containing one or more fused saturated or unsaturated rings. Suitable organometallic radicals, which may be substituted as an R group for at least one hydrogen atom in the cyclopentadienyl ring, include trimethylsilyl, triethylsilyl, ethyldimethylsilyl, methyldiethylsilyl, triphenylger- myl and trimethylgermyl. Other suitable radicals that may be substituted for one or more hydrogen atom in the cyclopentadienyl ring include halogen radicals, amido radicals, phosphido radicals, alkoxy radicals and alkyl boride radicals. Examples of cyclopentadienyl ring groups (C₅H_{5-y-x}Rₓ) which are suitable as a constituent group of the Group IV B transition metal component of the catalyst system are identified in Column 2 of Table 1 under the heading (CsHs-y-xRx)

Suitable hydrocarbyl and substituted hydrocarbyl radicals, which may be substituted as an R' group for at least one hydrogen atom in the heteroatom J ligand group, will contain from 1 to 20 carbon atoms and include straight and branched alkyl radicals, cyclic hydrocarbon radicals, alkyl-substituted cyclic hydrocarbon radicals, aromatic radicals, alkyl-substituted aromatic radicals, halogen radicals, amido radicals and phosphido radicals. Examples of heteroatom ligand groups (JR'_{z-1-y}) which are suitable as a constituent group of the Group IV B transition metal component of the catalyst system are identified in column 3 of Table 1 under the heading (JR'_{z-1-y}).

Table 1 depicts representative constituent moieties for the "Group IV B transition metal component", the list is for illustrative purposes only and should not be construed to be limiting in any way. A number of final components may be formed by permuting all possible combinations of the constituent moieties with each other. Illustrative compounds are: dimethylsilyltetramethylcyclopentadienyl-tert-butylamido zirconium dichloride, dimethylsilyltetramethylcyclopentadienyl-tert-butylamido hafnium dichloride, dimethylsilyl-tert-butylcyclopentadienyl-tert-butylamido zirconium dichloride, dimethylsilyl-tert-butylcyclopentadienyl-tert-butylamido hafnium dichloride, dimethyl-silyltrimethylsilylcy- clopentadienyl-tert-butylamido zirconium dichloride, dimethylsilyltetramethyl-cyclopentadienylphenylamido zirconium dichloride, dimethylsilyltetramethylcyclopentadienylphenylamido hafnium dichloride, methylphenylsilyltetramethyl-cyclopentadienyl-tert-butylamido zirconium dichloride, methylphenylsilyltetramethylcyclopentadienyl-tert-butylamido hafnium dichloride, methylphenylsilyltetra-methylcyclopentadienyl-tert-butylamido hafnium dimethyl, dimethylsilyltetramethylcyclopentadienyl-p-n-butylphenylamido zirconium dichloride, dimethylsilyltetramethylcyclopentadienyl-p-n-butylphenylamido hafnium dichloride.

As noted, titanium species of the Group IV B transition metal compound have generally been found toyield catalyst systems which in comparison to their zirconium or hafnium analogus, are of higher activity and a-olefin comonomer incorporating ability. Illustrative, but not limiting of the titanium species which exhibit such superior properties are methylphenylsilyltetramethylcyclopentadienyl-tert-butylamido titanium dichloride, dimethyisilyl-tetramethylcyclopentadienyl-p-n-butylphenylamidotitanium dichloride, dimethylsilyltetramethyicyclopentadienyl-p-methoxyphenylamidotita- nium dichloride, dimethylsilyl-tert-butylcyclopentadienyl-2, 5-di-tert-butylphenylamido titanium dichloride, dimethylsi- lylindenyl-tert-butyl-amido titanium dichloride, dimethylsilyltetramethylcyclopentadienylcyclohexylamido titanium dichloride, dimethylsilylfluorenylcyclohexylamido titanium dichloride, dimethylsilyltetramethyl-cyclopentadienylpheny- lamidotitanium dichloride and dimethylsilyltetramethylcyclopentadienyl-tert-butylamidotitanium dichloride and dimethylsilyltetramethyl-cyclopentadienylcyclododecylamide titanium dichloride.

For illustrative purposes, the above compounds and those permuted from Table 1 do not include the neutral Lewis base ligand (L). The conditions under which complexes containing neutral Lewis base ligands such as ether or those which form dimeric compounds is determined by the steric bulk of the ligands about the metal center. For example, the t-butyl group in Me₂Si(Me₄C_{.}) (N-t-Bu) ZrCl₂ has greater steric requirements than the phenyl group in Me₂Si(Me₄Cₛ) (NPh) ZrC₂·Et₂O thereby not permitting ether coordination in the former compound Similarly, due to the decreased steric bulk of the trimethylsilylcyclopentadienyl group in [Me₂Si(Me₃SiC₅H₃) (N-t-Bu)ZrCl₂]₂ versus that of the tetramethylcyclopentadienyl group in Me₂Si(Me₄C₅) (N-t-Bu)ZrCl₂, the former compound is dimeric and the latter is not.

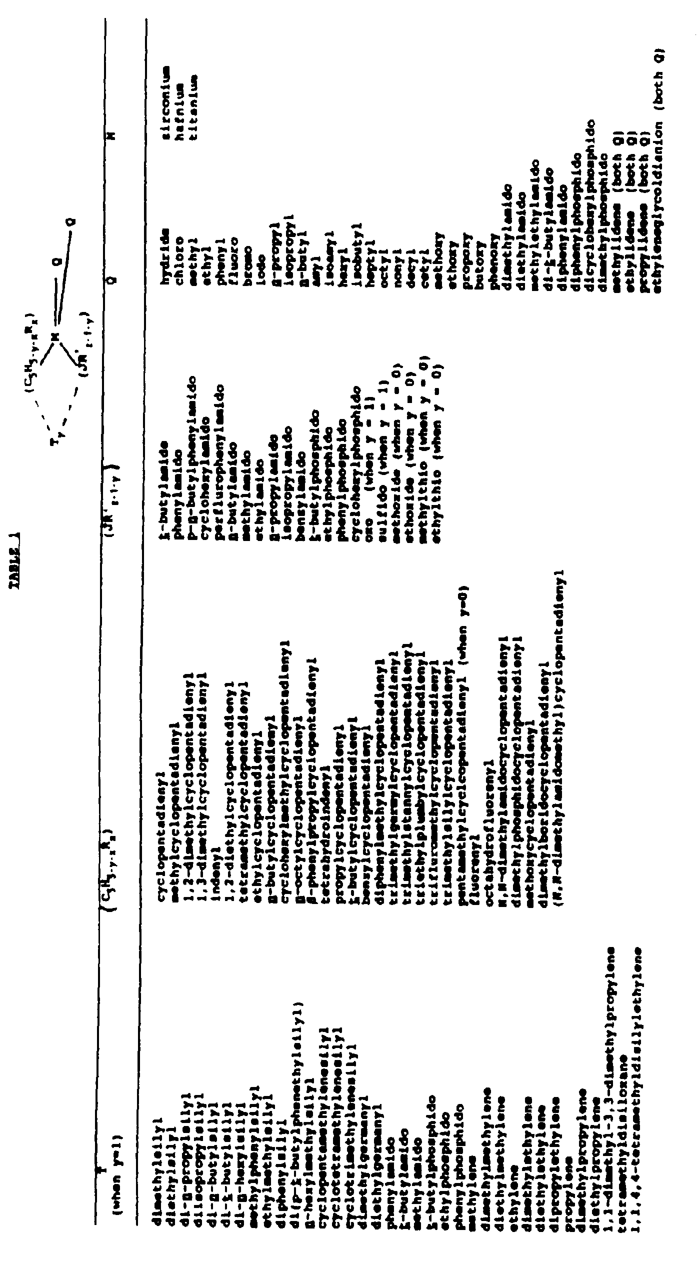

Generally the bridged species of the Group IV B transition metal compound ("y" = 1) are preferred. These compounds can be prepared by reacting a cyclopentadienyl lithium compound with a dihalo compound whereupon a lithium halide salt is liberated and a monohalo substituent becomes covalently bound to the cyclopentadienyl compound. The so substituted cyclopentadienyl reaction product is next reacted with a lithium salt of a phosphide, oxide, sulfide or amide (for the sake of illustrative purposes, a lithium amide) whereupon the halo element of the monohalo substituent group of the reaction product reacts to liberate a lithium halide salt and the amine moiety of the lithium amide salt becomes covalently bound to the substituent of the cyclopentadienyl reaction product. The resulting amine derivative of the cyclopentadienyl product is then reacted with an alkyl lithium reagent whereupon the labile hydrogen atoms, at the carbon atom of the cyclopentadienyl compound and at the nitrogen atom of the amine moiety covalently bound to the substituent group react with the alkyl of the lithium alkyl reagent to liberate the alkane and produce a dilithium salt of the cyclopentadienyl compound. Thereafter the bridged species of the Group IV B transition metal compound is produced by reacting the dilithium salt cyclopentadienyl compound with a Group IV B transition metal preferably a Group IV B transition metal halide.

Unbridged species of the Group IV B transition metal compound can be prepared from the reaction of a cyclopentadienyl lithium compound and a lithium salt of an amine with a Group IV B transition metal halide.

Suitable, but not limiting, Group IV B transition metal compounds which may be utilized in the catalyst system of this invention include those bridged species ("y" = 1) wherein the T group bridge is a dialkyl, diaryl or alkylaryl silane, or methylene or ethylene. Exemplary of the more preferred species of bridged Group IV B transition metal compounds are dimethylsilyl, methylphenylsilyl, diethylsilyl, ethylphenylsilyl, diphenylsilyl, ethylene or methylene bridged compounds. Most preferred of the bridged species are dimethylsilyl, diethylsilyl and methylphenylsilyl bridged compounds.

Suitable Group IV B transition metal compounds which are illustrative of the unbridged ("y" = 0) species which may be utilized in the catalyst systems of this invention are exemplified by pentamethylcyclopentadienyldi-t-butylphos- phinodimethyl hafnium; pentamethylcyclopentadienyldi-t-butylphosphinomethylethyl hafnium ; cyclopentadienyl-2-methylbutoxide dimethyl titanium.

To illustrate members of the Group IV B transition metal component, select any combination of the species in Table 1. An example of a bridged species would be dimethylsilyclopentadienyl-t-butylamidodichloro zirconium; an example of an unbridged species would be cyclopentadienyldi-t-butylamidodichloro zirconium.

Generally, wherein it is desired to produce an a-olefin copolymer which incorporates a high content of a-olefin, the species of Group IV B transition metal compound preferred is one of titanium. The most preferred species of titanium metal compounds are represented by the formula: 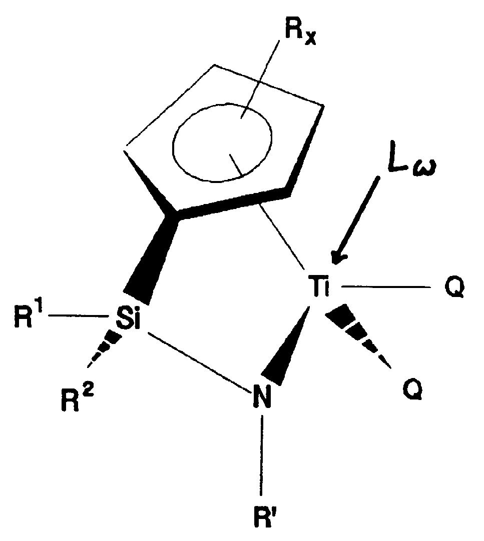 wherein Q, L, R', R, "x" and "w" are as previously defined and R¹ and R² are each independently a C₁ to C₂₀ hydrocarbyl radicals, substituted C₁ to C₂₀ hydrocarbyl radicals wherein one or more hydrogen atom is replaced by a halogen atom; R¹ and R² may also be joined forming a C₃ to C₂₀ ring which incorporates the silicon bridge.

The alumoxane component of the catalyst system is an oligomeric compound which may be represented by the general formula (R³⁻AI-O)ₘ which is a cyclic compound, or may be R⁴(R⁵⁻AI-O-)ₘ-AIR⁶₂ which is a linear compound. An alumoxane is generally a mixture of both the linear and cyclic compounds. In the general alumoxane formula R³, R⁴, R⁵ and R⁶ are, independently a Cᵢ-C₅ alkyl radical, for example, methyl, ethyl, propyl, butyl or pentyl and "m" is an integer from 1 to 50. Most preferably, R³, R⁴, R⁵ and R⁶ are each methyl and "m" is at least 4. When an alkyl aluminum halide is employed in the preparation of the alumoxane, one or more R³⁻⁶ groups may be halide.

As is now well known, alumoxanes can be prepared by various procedures. For example, a trialkyl aluminum may be reacted with water, in the form of a moist inert organic solvent; or the trialkyl aluminum may be contacted with a hydrated salt, such as hydrated copper sulfate suspended in an inert organic solvent, to yield an alumoxane. Generally however prepared, the reaction of a trialkyl aluminum with a limited amount of water yields a mixture of both linear and cyclic species of alumoxane.

Suitable alumoxanes which may be utilized in the catalyst systems of this invention are those prepared by the hydrolysis of a trialkylaluminum; such as trimethylaluninum, triethyaluminum, tripropylaluminum; triisobutylaluminium, dimethylaluminumchloride, diisobutylaluminumchloride, diethylaluminumchloride, and the like. The most preferred alumoxane for use is methylalumoxane (MAO). Methylalumoxanes having an average degree of oligomerization of from 4 to 25 ("m" = 4 to 25), with a range of 13 to 25, are the most preferred.

### Catalyst Systems

The catalyst systems employed in the method of the invention comprise a complex formed upon admixture of the Group IV B transition metal component with an alumoxane component. The catalyst system may be prepared by addition of the requisite Group IV B transition metal and alumoxane components to an inert solvent in which olefin polymerization can be carried out by a solution, slurry or bulk phase polymerization procedure.

The catalyst system may be conveniently prepared by placing the selected Group IV B transition metal component and the selected alumoxane component, in any order of addition, in an alkane or aromatic hydrocarbon solvent -preferably one which is also suitable for service as a polymerization diluent. Where the hydrocarbon solvent utilized is also suitable for use as a polymerization diluent, the catalyst system may be prepared in situ in the polymerization reactor. Alternatively, the catalyst system may be separately prepared, in concentrated form, and added to the polymerization diluent in a reactor. Or, if desired, the components of the catalyst system may be prepared as separate solutions and added to the polymerization diluent in a reactor, in appropriate ratios, as is suitable for a continuous liquid phase polymerization reaction procedure. Alkane and aromatic hydrocarbons suitable as solvents for formation of the catalyst system and also as a polymerization diluent are exemplified by, but are not necessarily limited to, straight and branched chain hydrocarbons such as isobutane, butane, pentane, hexane, heptane, octane and the like, cyclic and alicyclic hydrocarbons such as cyclohexane, cycloheptane, methylcyclohexane and methylcycloheptane , and aromatic and alkyl-substituted aromatic compounds such as benzene, toluene and xylene. Suitable solvents also include liquid olefins which may act as monomers or comonomers including ethylene, propylene, 1-butene and 1-hexene.

In accordance with this invention optimum results are generally obtained wherein the Group IV B transition metal compound is present in the polymerization diluent in a concentration of from 0.0001 to 1.0 millimolesAiter of diluent and the alumoxane component is present in an amount to provide a molar aluminum to transition metal ratio of from 1:1 to 20,000:1. Sufficient solvent should be employed so as to provide adequate heat transfer away from the catalyst components during reaction and to permit good mixing.

The catalyst system ingredients -- that is, the Group IV B transition metal, the alumoxane, and polymerization diluent -- can be added to the reaction vessel rapidly or slowly. The temperature maintained during the contact of the catalyst components can vary widely, such as, for example, from -10° to 300°C. Greater or lesser temperatures can also be employed. Preferably, during formation of the catalyst system, the reaction is maintained within a temperature of from 25° to 100°C, most preferably 25°C approximately.

At all times, the individual catalyst system components, as well as the catalyst system once formed, are protected from oxygen and moisture. Therefore, the reactions to prepare the catalyst system are performed in an oxygen and moisture free atmosphere and, where the catalyst system is recovered separately it is recovered in an oxygen and moisture free atmosphere. Preferably, therefore, the reactions are performed in the presence of an inert dry gas such as, for example, helium or nitrogen.

### Polymerization Process

In a preferred embodiment of the process of this invention the catalyst system is utilized in the liquid phase (slurry solution, suspension or bulk phase or combination thereof), high pressure fluid phase or gas phase polymerization of an olefin monomer. These processes may be employed singularly or in series. The liquid phase process comprises the steps of contacting an olefin monomer with the catalyst system in a suitable polymerization diluent and reacting said monomer in the presence of said catalyst system for a time and at a temperature sufficient to produce a polyolefin of high molecular weight.

The monomer for such process may comprise ethylene alone, for the production of a homopolyethylene, or ethylene in combination with an a-olefin having 3 to 20 carbon atoms for the production of an ethylene-a-olefin copolymer. Homopolymers of higher a-olefin such as propylene, butene, styrene and copolymers thereof with ethylene and/or C₄ or higher a-olefins and diolefins can also be prepared. Conditions most preferred for the homo-or copolymerization of ethylene are those wherein ethylene is submitted to the reaction zone at pressures of from 1.3 X 10-³ bar (0.019 psia) to 3445 bar (50,000 psia) and the reaction temperature is maintained at from -100° to 300°C. The aluminum to transition metal molar ratio is preferably from 1:1 to 18,000 to 1. A more preferable range would be 1:1 to 2000:1. The reaction time is preferably from 10 seconds to 1 hour. Without limiting in any way the scope of the invention, one means for carrying out the process of the present invention for production of a copolymer is as follows: in a stirred-tank reactor liquid a-olefin monomer is introduced, such as 1-butene. The catalyst system is introduced via nozzles in either the vapor or liquid phase. Feed ethylene gas is introduced either into the vapor phase of the reactor, or sparged into the liquid phase as is well known in the art. The reactor contains a liquid phase composed substantially of liquid a-olefin comonomer, together with dissolved ethylene gas, and a vapor phase containing vapors of all monomers. The reactor temperature and pressure may be controlled via reflux of vaporizing a-olefin monomer (autorefrigeration), as well as by cooling coils, jackets etc. The polymerization rate is controlled by the concentration of catalyst. The ethylene content of the polymer product is determined by the ratio of ethylene to a-olefin comonomer in the reactor, which is controlled by manipulating the relative feed rates of these components to the reactor.

As before noted, a catalyst system wherein the Group IV B transition metal component is a titanium species has the ability to incorporate high contents of a-olefin comonomers. Accordingly, the selection of the Group IV B transition metal component is another parameter which may be utlized as a control over the ethylene content of a copolymer within a reasonable ratio of ethylene to a-olefin comonomer.

### EXAMPLES

In the examples which illustrate the practice of the invention the analytical techniques described below were employed for the analysis of the resulting polyolefin products. Molecular weight determinations for polyolefin products were made by Gel Permeation Chromatography (GPC) according to the following technique. Molecular weights and molecular weight distributions were measured using a Waters 150 gel permeation chromatograph equipped with a differential refractive index (DRI) detector and a Chromatix KMX-6 on-line light scattering photometer. The system was used at 135°C with 1,2,4-trichlorobenzene as the mobile phase. Shodex (Registered Trade Mark of (Showa Denko America, Inc.) polystyrene gel columns 802, 803, 804 and 805 were used. This technique is discussed in "Liquid Chromatography of Polymers and Related Materials III", J. Cazes editor, Marcel Dekker. 1981, p. 207, which is incorporated herein by reference. No corrections for column spreading were employed; however, data on generally accepted standards, e.g. National Bureau of Standards Polyethylene 1484 and anionically produced hydrogenated polyisoprenes (an alternating ethylene-propylene copolymer) demonstrated that such corrections on Mw/Mn (= MWD) were less than 0.05 units. Mw/Mn was calculated from elution times. The numerical analyses were performed using the commercially available Beckman/CIS customized LALLS software in conjunction with the standard Gel Permeation package, run on a HP 1000 computer.

The following examples are intended to illustrate specific embodiments of the invention and are not intended to limit the scope of the invention.

All procedures were performed under an inert atmosphere of helium or nitrogen Solvent choices are often optional, for example, in most cases either pentane or 30-60 petroleum ether can be interchanged. The lithiated amides were prepared from the corresponding amines and either n-BuLi or MeLi. Published methods for preparing LiHC₅Me₄ include C.M. Fendrick et al. Organometallics, 3, 819 (1984) and F.H. Kohler and K. H. Doll, Z. Naturforich, 376, 144 (1982). Other lithiated substituted cyclopentadienyl compounds are typically prepared from the corresponding cyclopentadienyl ligand and n-BuLi or MeLi, or by reaction of MeLi with the proper fulvene. TiCl₄, ZrCI₄ and HfCI₄ were purchased from either Aldrich Chemical Company or Cerac. TiCl₄ was typically used in its etherate form. The etherate, TiCl4·2Et₂0, can be prepared by gingerly adding TiCl₄ to diethylether. Amines, silanes and lithium reagents were purchased from Aldrich Chemical Company or Petrarch Systems Methylalumoxane was supplied by either Sherring or Ethyl Corp. Examples A-L and AT-IT of Group IV B

### Transition Metal-Components

### Example A

Compound A: Part 1. Me₄HC₅Li (10.0 g, 0.078 mol) was slowly added to a Me₂SiCl₂ (11.5 ml, 0.095 mol, in 225 ml of tetrahydrofuran (thf) solution). The solution was stirred for 1 hour to assure complete reaction. The thf solvent was then removed via a vacuum to a cold trap held at -196°C. Pentane was added to precipitate out the LiCI. The mixture was filtered through Celite. The solvent was removed from the filtrate. Me₄HC₅SiMe₂Cl (15.34 g. 0.071 mol) was recovered as a pale yellow liquid.

Part 2. Me₄HC₅SiMe₂Cl (10.0 g, 0.047 mol) was slowly added to a suspension of LiHN-t-Bu (3.68 g, 0.047 mol, ~100 ml thf). The mixture was stirred overnight. The thf was then removed via a vacuum to a cold trap held at -196°C. Petroleum ether (~100 ml) was added to precipitate out the LiCl. The mixture was filtered through Celite. The solvent was removed from the filtrate. Me₂Si(Me₄HC₅)(HN-t-Bu) (11,14 g. 0.044 mol) was isolated as a pale yellow liquid.

Part 3. Me₂Si(Me₄HC₅)(HN-t-Bu) (11.14 g, 0.044 mol) was diluted with~100 ml Et₂0. MeLi (1.4 M, 64 ml, 0.090 mol) was slowly added. The mixture was allowed to stir for 1/2 hour after the final addition of MeLi. The ether was reduced in volume prior to filtering off the product. The product, [Me₂Si(Me₄C₅)(N-t-Bu)]Li₂, was washed with several small portions of ether, then vacuum dried.

Part 4. [Me₂Si(Me₄C₅)(N-t-Bu)]Li₂ (3.0 g, 0.011 mol) was suspended in -150 ml Et₂0. ZrCl₄ (2.65 g, 0.011 mol) was slowly added and the resulting mixture was allowed to stir overnight. The ether was removed via a vacuum to a cold trap held at -196°C. Pentane was added to precipitate out the LiCl. The mixture was filtered through Celite twice. The pentane was significantly reduced in volume and the pale yellow solid was filtered off and washed with solvent. Me₂Si(Me₄C₅)(N-t-Bu)ZrCl₂ (1.07 g, 0.0026 mole) was recovered. Additional Me₂Si(Me₄C₅)(N-t-Bu)ZrCl₂ was recovered from the filtrate by repeating the recrystallization procedure. Total yield, 1.94 g, 0.0047 mol.

### Example B

Compound B: The same procedure of Example A for preparing compound A was followed with the exception of the use of HfCl₄ in place of ZrCl₄ in Part 4. Thus, when [Me₂Si(Me₄C₅)(N-t-Bu)]Li₂ (2.13 g, 0.0081 mol) and HfCl₄ (2.59 g, 0.0081 mol) were used, Me₂Si(Me₄C₅)(N-t-Bu)HfCl₂ (0.98 g, 0.0020 mol) was produced.

### Example C

Compound C: Part 1. Me₂SiCl₂ (7.5 ml, 0.062 mol) was diluted with ~30 ml thf. A t-BuH₄C₅Li solution (7.29 g, 0.056 mol, ~100 ml thf) was slowly added, and the resulting mixture was allowed to stir overnight. The thf was removed via a vacuum to a trap held at -196°C. Pentane was added to precipitate out the LiCl, and the mixture was filtered through Celite. The pentane was removed from the filtrate leaving behind a pale yellow liquid, t-BuH₄C₅SiMe₂Cl (10.4 g, 0.048 mol).

Part 2. To a thf solution of LiHN-t-Bu (3.83 g, 0.048 mol, ~125 ml), t-BuH₄C₅SiMe₂Cl (10.4 g, 0.048 mol) was added drop wise. The resulting solution was allowed to stir overnight. The thf was removed via a vacuum to a trap held at -196°C. Pentane was added to precipitate out the LiCl, and the mixture was filtered through Celite. The pentane was removed from the filtrate leaving behind a pale yellow liquid, Me2Si(t-BuH₄C₅)(NH-t-Bu) (11.4 g, 0.045 mol).

Part 3. Me₂Si(t-BuH₄C₅)(NH-t-Bu) (11.4 g, 0.045 mol) was diluted with ~100 ml Et₂0. MeLi (1.4 M, 70 ml, 0.098 mol) was slowly added. The mixture was allowed to stir overnight. The ether was removed via a vacuum to a trap held at -196°C, leaving behind a pale yellow solid, [Me2Si(t-BuH₃C₅)(N-t-Bu)]Li2 (11.9 g, 0.045 mol).

Part 4. [Me2Si(t-BuH₃C₅)(N-t-Bu)]Li₂ (3.39 g 0.013 mol) was suspended in -100 ml Et₂0. ZrCl₄ (3.0 g, 0.013 mol) was slowly added. The mixture was allowed to stir overnight. The ether was removed and pentane was added to precipitate out the LiCI. The mixture was filtered through Celite. The pentane solution was reduced in volume, and the pale tan solid was filtered off and washed several times with small quantities of pentane. The product of empirical formula Me₂Si(t-BuH₃C₅)-(N-t-Bu)ZrCl₂ (2.43 g, 0.0059 mol) was isolated.

### Example D

Compound D: The same procedure of Example C for preparing compound C was followed with the exception of the use of HfCl₄ in Part 4. Thus, when [Me2Si(t-BuH₃C₅)-(N-t-Bu)]Li₂(3.29 g, 0.012 mol) and HfCl₄ (4.0 g, 0.012 mol) were used, the product of the empirical formula Me₂Si(t-BuH₃C₅)(N-t-Bu)HfCl₂ (1.86 g, 0.0037 mol) was produced.

### Example E

Compound E: Part 1. Me₂siCl₂ (7.0 g. 0.054 mol) was diluted with -100 ml of ether. Me₃SiC₅H₄Li (5.9 g, 0.041 mol) was slowly added. Approximately 75 ml of thf was added and the mixture was allowed to stir overnight. The solvent was removed via a vacuum to a cold trap held at -196°C. Pentane was added to precipitate out the LiCl. The mixture was filtered through Celite. The solvent was removed from the filtrate giving Me₂Si(Me₃SiC₅H₄)Cl (8.1 g, 0.035 mol) as a pale yellow liquid.

Part 2. Me₂Si(Me₃SiC₅H₄)CI (3.96 g. 0.017 mol) wasdiluted with -50 ml of ether. LiHN-t-Bu (1.36 g, 0.017 mol) was slowly added, and the mixture was allowed to stir overnight. The ether was removed via a vacuum and pentane was added to precipitate the LiCl. The mixture was filtered through Celite, and the pentane was removed from the filtrate. Me₂Si-(Me₃SiC₅H₄) (NH-t-Bu) (3.7 g, 0.014 mol) was isolated as a pale yellow liquid.

Part 3. Me₂Si(Me₃SiC₅H₄)(NH-t-Bu) (3.7 g, 0.014 mol) as diluted with ether. MeLi (25 ml, 1.4 M in ether, 0.035 mol) was slowly added. The mixture was allowed to stir for 1.5 hours after the final addition of MeLi. The ether was removed via vacuum producing 4.6 g of a white solid formulated as Li2[Me₂Si-(Me₃SiC₅H₃)(N-t-Bu)]·3/4Et₂0 and unreacted MeLi which was not removed from the solid.

Part 4. Li₂[Me₂Si(Me₃SiC₅H₃)(N-t-Bu)]·3/4Et₂0 (1.44 g, 0.0043 mol) was suspended in -50 ml of ether. ZrCl₄ (1 0 g, 0.0043 mol) was slowly added and the reaction was allowed to stir for a few hours. The solvent was removed via vacuum and pentane was added to precipitate the LiCl. The mixture was filtered through Celite, and the filtrate was reduced in volume. The flask was placed in the freezer (-40°C) to maximize precipitation of the product. The solid was filtered off giving 0.273 g of an off white solid. The filtrate was again reduced in volume, the precipitate filtered off to give an additional 0.345 g for a total of 0.62 g of the compound with empirical formula Me₂Si(Me₃SiC₅H₃) - (N-t-Bu) ZrCl₂. The x-ray crystal structure of this product reveals that the compound is dimeric in nature.

### Example F

Compound F: Part 1. Me₄HC₅SiMe₂Cl was prepared as described in Example A for the preparation of compound A, Part 1.

Part 2. LiHNPh (4.6 g, 0.0462 mol) was dissolved in -100 ml of thf. Me₄HC₅SiMe₂Cl (10.0 g. 0.0466 mol) was slowly added. The mixture was allowed to stir overnight. The thf was removed via a vacuum. Petroleum ether and toluene were added to precipitate the LiCl, and the mixture was filtered through Celite. The solvent was removed, leaving behind a dark yellow liquid, Me₂Si(Me₄HC₅)(NHPh) (10.5 g, 0.0387 mol).

Part 3. Me₂Si(Me₄HC₅)(NHPh) (10.5g, 0.0387 mol) was diluted with -60 ml of ether. MeLi (1.4 M in ether, 56 ml, 0.0784 mol) was slowly added and the reaction was allowed to stir overnight. The resulting white solid, Li_{2[}Me₂Si (Me₄C₅)(NPh)·3/4Et₂O (11.0 g), was filtered off and was washed with ether.

Part 4. Li_{2[}Me₂Si(Me₄C₅)(NPh).3/4Et₂0 (2.81 g, 0.083 mol) was suspended in -40 ml of ether. ZrCl₄ (1.92 g. 0.0082 mol) was slowly added and the mixture was allowed to stir overnight. The ether was removed via a vacuum, and a mixture of petroleum ether and toluene was added to precipitate the LiCI. The mixture was filtered through Celite, the solvent mixture was removed via vacuum, and pentane was added. The mixture was placed in the freezer at -40°C to maximize the precipitation of the product. The solid was then filtered off and washed with pentane. Me₂Si(Me₄C₅)(NPh)ZrCl₂·Et₂0 was recovered as a pale yellow solid (1.89 g).

### Example G

Compound G: The same procedure of Example F for preparing compound F was followed with the exception of the use of HfC1₄ in place of ZrCl₄ in Part 4. Thus, when Li₂[Me₂Si(Me₄C₅) (NPh)]·3/4Et₂0 (2.0 g, 0.0059 mol) and HfCl₄ (1.89 g, 0.0059 mol) were used, Me₂Si(Me₄C₅)(NPh)HfCl₂·1/2Et₂0 (1.70 g) was produced.

### Example H

Compound H: Part 1. MePhSiCl₂ (14.9 g, 0.078 mol) was diluted with -250 ml of thf. Me₄C₅HLi (10.0 g. 0.078 mol) was slowly added as a solid. The reaction solution was allowed to stir overnight. The solvent was removed via a vacuum to a cold trap held at -196°C. Petroleum ether was added to precipitate out the LiCl. The mixture was filtered through Celite, and the pentane was removed from the filtrate. MePhsi(Me₄C₅H)cl (20.8 g, 0.075 mol) was isolated as a yellow viscous liquid.

Part 2. LiHN-t-Bu (4.28 g, 0.054 mol) was dissolved in -100 ml of thf. MePhSi(Me₄C₅H)CI (15.0 g, 0.054 mol) was added drop wise. The yellow solution was allowed to stir overnight. The solvent was removed via vacuum. Petroleum ether was added to precipitate out the LiCl. The mixture was filtered through Celite, and the filtrate was evaporated down. MePhSi(Me₄C₅H)(NH-t-Bu) (16.6 g, 0.053 mol) was recovered as an extremely viscous liquid.

Part 3. MePhSi(Me₄C₅H)(NH-t-Bu) (16.6 g, 0.053 mol) was diluted with ~100 ml of ether. MeLi (76 ml, 0.106 mol, 1.4 M) was slowly added and the reaction mixture was allowed to stir for _{~}3 hours. The ether was reduced in volume and the lithium salt was filtered off and washed with pentane producing 20.0 g of a pale yellow solid formulated as Li₂ [MePhSi(Me₄C₅)(N-t-Bu)].3/4Et₂0.

Part 4. Li₂[MePhsi(Me₄C₅) (N-t-Bu)]·3/4Et₂0 (5.0 g, 0.0131 mol) was suspended in ~100 ml of Et₂O ZrCl₄ (3.06 g, 0.0131 mol) was slowly added. The reaction mixture was allowed to stir at room temperature for ~1.5 hours over which time the reaction mixture slightly darkened in color. The solvent was removed via vacuum and a mixture of petroleum ether and toluene was added. The mixture was filtered through Celite to remove the LiCl. The filtrate was evaporated down to near dryness and filtered off. The off white solid was washed with petroleum ether. The yield of product, MePhSi(Me₄C₅)-(N-t-Bu)ZrCl₂, was 3.82 g (0.0081 mol).

### Example I

Compound I: Li₂[MePhSi(Me₄C₅)(N-t-Bu)]·3/4Et₂O was prepared as described in Example H for the preparation of compound H, Part 3.

Part 4. Li₂[MePhsi(Me₄C₅) (N-t-Bu)].3/4Et₂O (5.00 g, 0.0131 mol) was suspended in ~ 100 ml of Et₂0. HfCl₄ (4.20 g, 0.0131 mol) was slowly added and the reaction mixture was allowed to stir overnight. The solvent was removed via vacuum and petroleum ether was added to precipitate out the LiCl. The mixture was filtered through Celite. The filtrate was evaporated down to near dryness and filtered off. The off white solid was washed with petroleum ether. MePhSi (Me₄C₅)(N-t-Bu) HfCl₂ was recovered (3.54 g, 0.0058 mole).

### Example J

Compound J: MePhsi(Me₄C₅)(N-t-Bu)HfMe₂ was prepared by adding a stoichiometric amount of MeLi (1.4 M in ether) to MePhsi(Me₄C₅)(N-t-Bu)HfCl₂ suspended in ether. The white solid could be isolated in near quantitative yield.

### Example K

Compound K: Part 1. Me₄C₅SiMe₂Cl was prepared as described in Example A for the preparation of compound A, Part 1.

Part 2. Me₄C₅SiMe₂Cl (10.0 g, 0.047 mol) was diluted with -25 ml Et₂0. LiHNC₅H₄-p-n-Bu·1/IOEt₂O (7.57 g, 0.047 mol) was added slowly. The mixture was allowed to stir for -3 hours. The solvent was removed via vacuum. Petroleum ether was added to precipitate out the LiCl, and the mixture was filtered through Celite. The solvent was removed leaving behind an orange viscous liquid, Me₂Si(Me₄C₅H)(HNC₆H₄-p-n-Bu) (12.7 g, 0.039 mol).

Part 3. Me₂Si(Me₄C₅H)(HNC₆H₄-p-n-Bu) (12.7 g. 0.039 mol) was diluted with ~50 ml of Et₂0. MeLi (1.4 M, 55 ml, 0.077 mol) was slowly added. The mixture was allowed to stir for ~3 hours. The product was filtered off and washed with Et₂0 producing Li₂[Me₂Si(Me₄C₅)-(NC₆H₄-p-n-Bu)]·3/4Et₂O as a white solid (13.1 g, 0.033 mol).

Part 4. Li₂[Me₂Si(Me₄C₅)(NC₆H₄-p-n-Bu)]·3/4Et₂O (3.45 g, 0.0087 mol) was suspended in -50 ml of Et₂0. ZrCl₄ (2.0 g, 0.0086 mol) was slowly added and the mixture was allowed to stir overnight. The ether was removed via vacuum, and petroleum ether was added to precipitate out the LiCl. The mixture was filtered through Celite. The filtrate was evaporated to dryness to give a yellow solid which was recrystallized from pentane and identified as Me₂Si(Me₄C₅) (NC₆H₄-p-n-Bu)ZrCl₂·3Et₂O (4.2 g).

### Example L

Compound L: Li₂[MeSi(Me₄C₅)(NC₆H₄-p-n-Bu]·3/4Et₂O was prepared as described in Example K for the preparation of compound K, Part 3.

Part ₄. Li₂[Me₂Si(Me₄C₅)(NC₆H₄-p-n-Bu)·3/4Et₂O ₍₃.₇₇ g., _{0.0095 mol}) was suspended in -50 ml of Et₂O. HfCl₄ (3.0 g; 0.0094 mol) was slowly added as a solid and the mixture was allowed to stir overnight. The ether was removed via vacuum and petroluem ether was added to precipitate out the LiCl. The mixture was filtered through Celite. Petroleum ether was removed via a vacuum giving an off white solid which was recrystallized from pentane. The product was identified as Me₂Si(Me₄C₅)-(NC₆H₄-p-n-Bu)HfCl₂ (1 54 g, 0.0027 mol.).

### EXAMPLE AT

Compound AT: Part 1. MePhSiCl₂ (14.9 g, 0.078 mol) was diluted with 250 ml of thf. Me₄HC₅Li (10.0 g, 0.078 mol) was slowly added as a solid. The reaction solution was allowed to stir overnight. The solvent was removed via a vacuum to a cold trap held at - 196°C. Petroleum ether was added to precipitate out the LiCl. The mixture was filtered through Celite and the pentane was removed from the filtrate. MePhSi(Me₄C₅H)CI (20.8 g, 0.075 mol) was isolated as a yellow viscous liquid.

Part 2. LiHN-t-Bu (4.28 g, 0.054 mol) was dissolved in -100 ml of thf. MePhSi(C₅Me₄H)CI (15.0 g, 0.054 mol) was added dropwise. The yellow solution was allowed to stir overnight. The solvent was removed in vacuo. Petroleum ether was added to precipitate the LiCl. The mixture was filtered through Celite, and the filtrate was evaporated. MePhSi (C₅Me₄H)(NH-t-Bu) (16.6 g, 0.053 mol) was recovered as an extremely viscous liquid.

Part 3. MePhSi(C₅Me₄H)(NH-t-Bu)(17.2 g, 0.055 mol) was diluted with -20 ml of ether. n-BuLi (60 ml in hexane, 0.096 mol, 1.6 M) was slowly added and the reaction mixture was allowed to stir for ~3 hours. The solvent was removed in vacuo to yield 15.5 g (0.48 mol) of a pale tan solid formulated as Li₂[MePhSi(C₅Me₄)(N-t-Bu)].

Part 4. Li₂[MePhSi(C₅Me₄)(N-t-Bu)](8.75 g, 0.027 mol) was suspended in -125 ml of cold ether (--30°C). TiCl₄·2Et₂O(9.1 g, 0.027 mol) was slowly added. The reaction was allowed to stir for several hours prior to removing the ether via vacuum. A mixture of toluene and dichloromethane was then added to solubilize the product. The mixture was filtered through Celite to remove the LiCl. The solvent was largely removed via vacuum and petroleum ether was added. The mixture was cooled to maximize product precipitation. The crude product was filtered off and redissolved in toluene. The toluene insolubles were filtered off. The toluene was then reduced in volume and petroleum ether was added. The mixture was cooled to maximize precipitation prior to filtering off 3.34 g (7.76 mmol) of the yellow solid MePhSi(C₅Me₄)(N-t-Bu)TiCl₂.

### EXAMPLE BT

Compound BT: Part 1. C₅Me₄HLi(10.0g, 0.078 mol) was slowly added to a Me₂SiCl₂ solution (11.5 ml, 0.095 mol, in 225 ml of tetrahydrofuran). The solution was stirred for 1 hour to assure a complete reaction. The solvent was then removed in vacuo. Pentane was added to precipitate the LiCl. The mixture was filtered through Celite and the solvent was removed from the filtrate in vacuo. (C₅Me₄H)SiMe₂Cl (15.34 g, 0.071 mol) was recovered as a pale yellow liquid.

Part 2. (C₅Me₄H)SiMe₂Cl (10.0 g, 0.047 mol) was diluted with -25 ml of Et₂0. LiHNC₅H₄-p-n-Bu·1/10Et₂O (7.75 g, 0.048 mol) was added slowly. The mixture was allowed to stir for ~3 hours. The solvent was removed in vacuo. Petroleum ether was added to precipitate the LiCl, and the mixture was filtered through Celite. The solvent was removed leaving behind an orange viscous liquid, Me₂Si(C₅Me₄H)(HNC₆H₄-p-n-Bu)(12.7 g, 0.039 mol). Part 3. Me₂Si(C₅Me₄H) (HNC₆H₄-p-n-Bu)(12.7 g, 0.039 mol) was diluted with -50 ml of Et₂0. MeLi (1.4 M, 55 ml, 0.077 mol) was slowly added. The mixture was allowed to stir for ~3 hours. The product was filtered off and washed with Et₂0 and dried. Li₂ [Me₂Si(C₅Me₄)(NC₆H₄-p-n-Bu)]·3/4Et₂O was isolated as a white solid (13.1 g, 0.033 mol).

Part 4. Li₂[Me₂Si(C₅Me₄)(NC₆H₄-p-n-Bu)]·3/4Et₂O (2.36 g, 5.97 mmol) was suspended in cold ether. TiC1₄.2Et₂0 (2.0g, 5.92 mmol) was slowly added. The mixture was allowed to stir overnight. The solvent was removed via vacuum and petroleum ether and dichloromethane were added. The mixture was filtered through Celite to remove the LiCl. The solvent was removed via vacuum, and toluene and petroleum ether were added. After refrigeration, the mixture was filtered off, producing an off yellow product. This was redissolved in dichloromethane, followed by the addition of petroleum ether. The mixture was then refrigerated prior to filtering off 0.83 g (1.87 mmol) of the yellow solid, Me₂Si (C₅Me₄)(NC₆H₄-p-n-Bu)TiCl₂.

### EXAMPLE CT

Compound CT Part 1. (C₅Me₄H)SiMe₂Cl was prepared as described in Example BT for the preparation of compound BT, Part 1.

Part 2. (C₅Me₄H)SiMe₂Cl (8.14 g, 0.038 mol) was mixed with -100 ml of thf. LiHNC₆H₄-p-OMe (4 89 g, 0.038 mol) was slowly added and the mixture was allowed to stir for 2 hours. The solvent was removed via vacuum and petroleum ether was added to precipitate the LiCl which was filtered off. The solvent was removed from the filtrate via vacuum and the product Me₂Si(C₅Me₄H)(NC₆H₄-p-OMe)(9.8 g, 0.033 mol) was isolated as a viscous orange-yellow liquid.

Part 3. Me₂Si(C₅Me₄H)(HNC₆H₄-p-OMe) (10.0 g, 0.033 mol) was diluted with thf. MeLi (47 ml, 1.4 M in ether, 0.066 mol) was slowly added and the mixture was allowed to stir for a few hours. The solvent was then removed in vacuo leaving behind a white solid coordinated by thf. The product was formulated as Li₂[Me₂Si(C₅Me₄)(NC₆H₄-p-OMe) ].2thf (14.7 g, 0.032 mol).

Part 4. Li₂[Me₂Si(C₅Me₄)(NC₆H₄-p-OMe)]·2thf (7.0 g, 0.015 mol) was suspended in -125 ml of cold ether. TiCl₄·2Et₂O(5.1 g, 0.015 mol) was slowly added and the mixture was allowed to stir overnight. The solvent was removed via vacuum and petroleum ether, dichloromethane and toluene were added. The mixture was filtered through Celite to remove the LiCl. The solvent was reduced in volume and petroleum ether was added. The mixture was refrigerated, after which a brown solid was filtered off. Multiple extractions and recrystallizations from toluene and petroleum ether yielded 2.3 g (5.5 mmol) of Me₂Si(C₅Me₄)(NC₆H₄-p-OMe)TiCl₂.

### EXAMPLE DT

Compound DT: Part 1. Me₂SiCl₂ (7.5 ml, 0.062 mol) was diluted with ~30 ml of thf. A t-BuH₄C₅Li solution (7.29 g, 0.057 mol, ~100 ml of thf) was slowly added, and the resulting mixture was allowed to stir overnight. The thf was removed in vacuo. Pentane was added to precipitate the LiCl, and the mixture was filtered through Celite. The pentane was removed from the filtrate leaving behind a pale yellow liquid, (t-BuC₅H₄)SiMe₂Cl (10.4 g, 0.048 mol).

Part 2. (t-BuC₅H₄)SiMe₂Cl (5.0 g, 0.023 mol) was added to -50 ml of thf. LiHN-2,5-t-Bu₂C₆H₃ (4.94 g, 0.023 mol) was slowly added and the reaction mixture was allowed to stir for 2 hours. The solvent was removed via vacuum and petroleum ether was added to precipitate the LiCl which was filtered off. The solvent was removed from the filtrate yielding an oily/solid material, Me₂Si(t-BuC₅H₄)(HN-2,5-t-Bu₂C₆H₃).

Part 3. To the above material, Me₂Si(t-BuC₅H₄)(HN-2,5-t-Bu₂C₆H₃) (assumed to be -8 g, 0.021 mol), MeLi (30 ml, 1.4 M in ether, 0.042 mol) was slowly added. The mixture was allowed to stir for a few hours prior to removing the solvent via vacuum. The slightly pinkish solid was washed with ether, filtered and dried yielding 4.42 g (0.011 mol) of Li₂[Me₂Si(t-BuC₅H₃)(N-2,5-t-Bu₂C₆H₃].

Part 4. Li₂[Me₂Si(t-BuC₅H₃)(N-2,5-t-Bu₂C₆H₃)](7.6 g, 0.019 mol) was suspended in cold ether. TiCl₄.2Et₂O (6.5 g, 0.019 mol) was slowly added and the mixture was allowed to stir overnight. The solvent was removed via vacuum and toluene and dichloromethane were added. The mixture was filtered through Celite to remove the LiCl. The filtrate was reduced in volume and petroleum ether was added. The mixture was chilled to maximize precipitation. A dark yellow solid was filtered off and was recrystallized from toluene and petroleum ether giving a tan solid. A total of 1.6 g (3.2 mmol) of Me₂Si(t-BuC₅H₃)(N-2,5-t-Bu₂C₆H₃)TiCl₂ was isolated.

### EXAMPLE ET

Compound ET: Part 1. LiC₉H₇ (40 g, 0.33 mol, lithiated indene = Li(Hind)) was slowly added to Me₂SiCl₂ (60 ml, 0.49 mol) in ether and thf. The reaction was allowed to stir for 1.5 hours prior to removing the solvent via vacuum. Petroleum ether was then added, and the LiCl was filtered off. The solvent was removed from the filtrate via vacuum, leaving behind the pale yellow liquid, (Hind)Me₂SiCl(55.7 g 0.27 mol).

Part 2. (Hind)Me₂SiCl(20.0 g, 0.096 mol) was diluted with ether. LiHN-t-Bu(7.6 g, 0.096 mol) was slowly added and the mixture was allowed to stir overnight. The solvent was removed via vacuum and petroleum ether and toluene were added. The LiCl was filtered off and the solvent was removed via vacuum to give the product, Me₂Si(Hind)(HN- t-Bu).

Part 3. Me₂Si(Hind)(HN-t-Bu)(21 g, 0.086 mol) was diluted with a mixture of petroleum ether and diethyl ether. t-BuLi (108 ml, 1.6 M in hexanes, 0.17 mol) was slowly added and the mixture was allowed to stir overnight. The solvent was removed via vacuum and the remaining solid was washed with petroleum ether and filtered off. Li_{2[}Me₂Si(ind) (N-t-Bu)].1/4Et₂0 was isolated as a pale yellow solid (26 g, 0.094 mol).

Part 4. Li_{2[}Me₂Si(ind)(N-t-Bu)].1/4Et₂0(10 g, 0.036 mol) was dissolved in ether. TiCl₄·2Et₂O(12.1 g, 0.036 mol) was aded to the cold solution. The reaction was allowed to stir overnight prior to removal of the solvent via vacuum. A mixture of toluene and dichloromethane were added and the mixture was filtered through Celite to remove the LiCl. The solvent was removed and hot toluene was added. The insolubles were filtered off. The solution was reduced in volume and petroleum ether was added. The mixture was chilled prior to filtering off the solid, Me₂Si(ind)(N-t-Bu)TiCl₂, which was recrystallized several times. The final yield was 2.5 g (6.8 mmol).

### EXAMPLE FT

Compound FT: Part 1. (C₅Me₄H)SiMe₂Cl was prepared as described in Example BT for the preparation of compound BT, Part 1.

Part 2. (C₅Me₄H)SiMe₂Cl (5.19 g, 0.024 mol) was slowly added to a solution of LiHNC₆H₁₁ (2.52 g, 0.024 mol) in ~125 ml of thf. The solution was allowed to stir for several hours. The thf was removed via vacuum and petroleum ether was added to precipitate the LiCl which was filtered off. The solvent was removed from the filtrate via vacuum yielding 6.3 g (0.023 mol) of the yellow liquid, Me₂Si(C₅Me₄H)(HNC₆H₁₁).

Part 3. Me₂Si(C₅Me₄H)(HNC₆H₁₁)(6.3 g, 0.023 mol) was diluted with -100 ml of ether. MeLi (33 ml, 1.4 M in ether, 0.046 mol) was slowly added and the mixture was allowed to stir for 0.5 hours prior to filtering off the white solid. The solid was washed with ether and vacuum dried. Li₂[Me₂Si(C₅Me₄)(NC₆H₁₁)] was isolated in a 5.4 g (0.019 mol) yield.

Part 4. Li₂[Me₂Si(C₅Me₄)(NC₆H₁₁)] (2.57 g 8.90 mmol) was suspended in -50 ml of cold ether. TiC1₄.2Et₂0 (3.0 g, 8.9 mmol) was slowly added and the mixture was allowed to stir overnight. The solvent was removed via vacuum and a mixture of toluene and dichloromethane was added. The mixture was filtered through Celite to remove the LiCl byproduct. The solvent was removed from the filtrate and a small portion of toluene was added followed by petroleum ether. The mixture was chilled in order to maximize precipitation. A brown solid was filtered off which was initially dissolved in hot toluene, filtered through Celite, and reduced in volume. Petroleum ether was then added. After refrigeration, an olive green solid was filtered off. This solid was recrystallized twice from dichloromethane and petroleum ether to give a final yield of 0.94 g (2.4 mmol) of the pale olive green solid, Me₂Si(C₅Me₄)(NC₆H₁ )TiCI.

### EXAMPLE GT

Compound GT: Part 1. Me₂SiCl₂ (150 ml, 1.24 mol) was diluted with -200 ml of Et₂0. Li(C₁₃H₉).Et₂O (lithiated fluorene etherate, 28.2 g, 0.11 mol) was slowly added. The reaction was allowed to stir for ~1 hour prior to removing the solvent via vacuum. Toluene was added and the mixture was filtered through Celite to remove the LiCl. The solvent was removed from the filtrate, leaving behind the off-white solid, Me₂Si(C₁₃H₉) Cl (25.4 g, 0.096 mol).

Part 2. Me₂Si(C₁₃H₉)Cl (8.0 g, 0.031 mol) was suspended in ether and thf in a ratio of 5:1. LiHNC₆H₁₁ (3.25 g, 0.031 mol) was slowly added. The reaction mixture was allowed to stir overnight. After removal of the solvent via vacuum, toluene was added and the mixture was filtered through Celite to remove the LiCl. The filtrate was reduced in volume to give a viscous orange liquid. To this liquid which was diluted in Et₂0, 43 ml of 1.4 M MeLi (0.060 mol) was added slowly. The mixture was allowed to stir overnight. The solvent was removed in vacuo to produce 13.0 g (0.031 mol) of Li₂[Me₂Si(C₁₃H₈)(NC₆H₁₁)]·1.25 Et₂0

Part 3. Li₂[Me₂Si(C₁₃H₈)(NC₆H₁₁)]·1.25 Et₂0 (6.5 g, 0.015 mol) was dissolved in cold ether. TiCl₄·2Et₂O (5.16 g, 0.015 mol) was slowly added. The mixture was allowed to stir overnight. The solvent was removed via vacuum and methylene chloride was added. The mixture was filtered through Celite to remove the LiCl. The filtrate was reduced in volume and petroleum ether was added. This was refrigerated to maximize precipitation prior to filtering off the solid. Since the solid collected was not completely soluble in toluene, it was mixed with toluene and filtered. The filtrate was reduced in volume and petroleum ether was added to induce precipitation. The mixture was refrigerated prior to filtration. The red-brown solid Me₂Si(C₁₃H₈)(NC₆H₁₁)TiCl₂ was isolated (2.3 g, 5.2 mol).

### EXAMPLE HT

Compound HT Part 1. (C₅Me₄H)SiMe₂Cl was prepared as described in Example BT for the preparation of compound BT, Part 1.

Part. 2 LiHNPh (4.6 g, 0.046 mol) was dissolved in -100 ml of thf. (C₅Me₄H)SiMe₂Cl (10.0 g, 0.047 mol) was slowly added. The mixture was allowed to stir overnight. The thf was removed in vacuo. Petroleum ether and toluene were added to precipitate the LiCl, and the mixture was filtered through Celite. The solvent was removed, leaving behind a dark yellow liquid, Me₂Si(C₅Me₄H)(NHPh) (10.5 g, 0.039 mol).

Part 3. Me₂Si(C₅Me₄H)(NHPh) (9.33 g, 0.034 mol) was diluted with -30 ml of ether. MeLi (1.4 M in ether, 44 ml, 0.062 mol) was slowly added and the reaction was allowed to stir for 2 hours. After reducing the volume of the solvent, the resulting white solid, Li₂[Me₂Si(C₅Me₄)(NPh)]·1/2Et₂O (9.7 g, 0.030 mol), was filtered off washed with ether and dried.

Part 4. Li₂[Me₂Si(C₅Me₄(NPh)]·1/2Et₂O (4.3 g, 0.013 mol) was suspended in -50 ml of cold ether. TiCl₄·2Et₂O (4.10 g, 0.012 mol) was slowly added, and the mixture was allowed to stir for several hours. The solvent was removed in vacuo, and toluene and dichloromethane were added to solubilize the product. The mixture was filtered through Celite to remove the Licl. The solvent was removed in vacuo and a small portion of toluene was added along with petroleum ether. The mixture was refrigerated in order to maximize precipitation of a tan solid which was filtered off. The solid was washed with a small portion of toluene and the remaining solid was redissolved in hot toluene and filtered through Celite to remove the toluene insolubles. The toluene was then removed to produce 2.32 g (5.98 mmol) of the yellow solid, Me₂Si(C₅Me₄)(NPh)TiCl₂.

### EXAMPLE IT

Compound IT: Part 1. (C₅Me₄H)SiMe₂Cl was prepared as described in Example BT for the preparation of Compound BT, part 1.

Part 2. (C₅Me₄H)Sime₂Cl (10.0 g, 0.047 mol) was slowly added to a suspension of LiHN-j-Bu (3.68 g, 0.047 mol, ~ 100 ml thf). The mixture was stirred overnight. The thf was then removed via a vacuum to a cold trap held at -196°C. Petroleum ether was aded to precipitate out the LiCl. The mixture was filtered through Celite. The solvent was removed from the filtrate. Me₂Si(C₅Me₄H)(NH-t-Bu) (11.14 g 0.044 mol) was isolated as a pale yellow liquid.

Part 3. Me₂Si(C₅Me₄H)(NH-t-Bu)(11.14 g; 0.044 mol) was diluted with ~ 100 ml of ether. MeLi (1.4 M,64 ml, 0.090 mol) was slowly added. The mixture was allowed to stir for 1/2 hour after the final addition of MeLi. The ether was reduced in volume prior to filtering off the product. The product, [Me₂Si(C₅Me₄)(N-t-Bu)]Li₂, was washed with several small portions of ether, then vacuum dried.

Part 4. [Me₂Si(C₅Me₄)(N-t-Bu)Li₂ (6.6 g, 0.025 mol) was suspended in cold ether. TiCl₄·2Et₂O (8.4 g, 0.025 mol) was slowly added and the resulting mixture was allowed to stir overnight. The ether was removed via a vacuum to a cold trap held at -196°C. Methylene chloride was added to precipitate out the LiCl. The mixture was filtered through Celite. The solvent was significantly reduced in volume and petroleum ether was added to precipitate out the product. This mixture was refrigerated prior to filtration in order to maximize precipitation. Me₂Si(C₅Me₄)(N-t-Bu)TiCl₂ was isolated (2.1 g 5.7 mmol).

### EXAMPLE JT

Compound JT: Part 1. (C₅Me₄H)SiMe₂Cl was prepared as described in Example BT for the preparation of Compound BT, Part 1.

Part 2. (C₅Me₄H)SiMe₂Cl (8.0 g, 0.037 mol) was slowly added to a suspension of LiHNC₁₂H₂₃ (C₁₂H₂₃=cyclododecyl, 7.0 g, 0.037 mol, ~ 80 ml thf). The mixture was stirred overnight. The thf was then removed via a vacuum to a cold trap held at -196°C. Petroleum ether and toluene was added to precipitate out the LiCl. The mixture was filtered through Celite. The solvent was removed from the filtrate. Me₂Si(C₅Me₄H)(NHC₁₂H₂₃)(11.8 g, 0.033 mol) was isolated as a pale yellow liquid.

Part 3. Me₂Si(C₅Me₄H)(NHC₁₂H₂₃)(11.9 g, 0.033 mol) was diluted with ~150 ml of ether. MeLi (1.4 M, 47 ml, 0.066 mol) was slowly added. The mixture was allowed to stir for 2 hours after the final addition of MeLi. The ether was reduced in volume prior to filtering off the product. The product, [Me₂Si(C₅Me₄)(NC₁₂H₂₃)]Li₂, was washed with several small portions of ether, then vacuum dried to yield 11.1 g (0.030 mol) of product.

Part 4. [Me₂Si(C₅Me₄)(NC₁₂H₂₃)]Li₂ (3.0 g, 0.008 mol) was suspended in cold ether. TiCl₄·2Et₂O (2.7 g, 0.008 mol) was slowly added and the resulting mixture was allowed to stir overnight. The ether was removed via a vacuum to a cold trap held at -196°C. Methylene chloride was added to precipitate out the LiCI. The mixture was filtered through Celite. The solvent was significantly reduced in volume and petroleum ether was added to precipitate out the product. This mixture was refrigerated prior to filtration in order to maxmize precipitation. The solid collected was recrystallized from methylene chloride and Me₂Si(CₛMe₄)(NC₁₂H₂₃)TiCI₂ was isolated (1.0 g, 2.1 mmol).

### Examples 1-70 of Polymerization

### EXAMPLE 1

### Polymerization - Compound A

The polymerization run was performed in a 1-liter autoclave reactor equipped with a paddle stirrer, an external water jacket for temperature contorl, a regulated supply of dry nitrogen, ethylene, propylene, 1-butene and hexane, and a septum inlet for introduction of other solvents, transition metal compound and alumoxane solutions. The reactor was dried and degassed thoroughly prior to use. A typical run consisted of injecting 400 ml of toluene, 6 ml of 1.5 M MAO,and 0.23 mg of compound A (0.2 ml of a 11.5 mg in 10 ml of toluene solution) into the reactor The reactor was then heated to 80°C and the ethylene 4.13 bar (60 psi) was introduced into the system. The solvent was evaporated off of the polymer by a stream of nitrogen. Polyethylene was recovered (9.2 g, MW = 257,200, MWD = 2.275).

### EXAMPLE 2

### Polymerization Compound A

The polymerization was carried out as in Example 1 with the following changes: 300 ml of toluene, 3 ml of 1.5 M MAO, and 0.115 mg of compound A (0.1 ml of a 11.5 mg in 10 ml of toluene solution). Polyethylene was recovered (3.8 g, MW = 359,800, MWD = 2.425).

### EXAMPLE 3

### Polymerization - Compound A

The polymerization was carried out as in Example 2 using the identical concentrations. The difference involved running the reaction at 40°C rather than 80°C as in the previous example. Polyethylene was recovered (2.4 g, MW = 635,000, MWD = 3.445).

### EXAMPLE 4

### Polymerization - Compound A

The polymerization was carried out as in Example 1 1 except for the use of 300 ml of hexane in place of 400 ml of toluene. Polyethylene was recovered (5.4 g MW = 212,600, MWD = 2.849).

### EXAMPLE 5

### Polymerization - Compound A

Using the same reactor design and general procedure as in Example 1, 300 ml of toluene, 200 ml of propylene, 6.0 ml of 1.5 M MAO and 0.46 mg of compound A (0.4 ml of a 11.5 mg in 10 ml of toluene solution) was introduced into the reactor. The reactor was heated to 80°C, the ethylene was added 4.13 bar(60 psi), and the reaction was allowed to run for 30 minutes, followed by rapidly cooling and venting the system. After evaporation of the solvent, 13.3 g of an ethylene-propylene copolymer was recovered (MW = 24,900; MWD 2.027, 73.5 SCB/1000C by IR).

### EXAMPLE 6

### Polymerization - Compound A

The polymerization was carried out as in Example 5 except with the following changes: 200 ml of toluene and 0.92 mg of compound A (0.8 ml of a 11.5 mg in 10 ml of toluene solution). The reaction temperature was also reduce to 50°C. An ethylene-propylene copolymer was recovered (6.0 g, MW = 83,100, MWD = 2.370, 75.7 SCB/1000C by IR).

### EXAMPLE 7

### Polymerization - Compound A

Using the same reactor design and general procedure as in Example 1, 150 ml of toluene, 100 ml of 1-butene, 6.0 ml of 1.5 M MAO, and 2.3 mg of compound A (2.0 ml of a 11.5 mg in 10 ml of toluene solution) were added to the reactor. The reactor was heated at 50°C, the ethylene was introduced 4.48 bar (65 psi), and the reaction was allowed to run for 30 minutes, followed by rapidly cooling and venting the system. After evaporation of the toluene, 25.4 g of an ethylene-1-butene copolymer was recovered (MW = 184,500, MWD = 3.424, 23.5 SCB/1000C by ¹³C NMR and 21.5 SCB/1000C by IR).

### EXAMPLE 8

### Polymerization - Compound A

The polymerization was carred out as in Example 7 except with the following changes: 100 ml of toluene and 150 ml of 1-butene. An ethylene-1-butene copolyer was recovered (30.2 g, MW = 143,500, MWD = 3.097, 30.8 SCB/1000C by ¹³C NMR and 26.5 SCB/1000C by IR).

### EXAMPLE 9

### Polymerization - Compound A

The polymerization was carried out as in Example 7 except with the following changes: 200 ml of toluene, 8.0 ml of 1.0 M MAO, and 50 ml of 1-butene. An ethylene-1-butene copolymer was recovered (24.9 g, MW = 163,200, MWD = 3.290, 23.3 SCB/1000C by ¹³C NMR and 18.9 SCB/1000C by IR).

### EXAMPLE 10

### Polymeriztion - Compound A

The polymerization was carried out as in Example 9 except for the replacement of 200 ml of toluene with 200 ml of hexane. An ethylene-1-butene copolymer was recovered (19.5 g MW = 150,600, MWD = 3.510, 12.1 SCB/1000C by ¹³C NMR and 12.7 SCB/1000C by IR).

### EXAMPLE 11

### Polymerization - Compound A

The polymerization was carried out as in Example 10 except with the following changes: 150 ml of hexane, and 100 ml of 1-butene. An ethylene-1-butene copolymer was recovered (16.0 g, MW = 116,200, MWD = 3.158, 19.2 SCB/ 1000C by ¹³C NMR and 19.4 SCB/1000C by IR).

### EXAMPLE 12

### Polymerization - Compound A

Using the same reactor design and general procedure as described in Example 1, 400 ml of toluene, 5.0 ml of 1.0 M MAO, and 0.2 ml of a preactivated compound A solution (11.5 mg of compound A dissolved in 9.0 ml of toluene and 1.0 ml of 1.0 M MAO) were added to the reactor. The reactor was heated to 80°C, and ethylene was introduced (60 psi), and the reactor was allowed to run for 30 minutes, followed by rapidly cooling and venting the system. After evaporation of the solvent, 3.4 g of polyethylene was recovered (MW = 285,000, MWD = 2.808).

### EXAMPLE 13

### Polymerization - Compound A

A polymerization was carried out as in Example 12 with exception of aging the preactivated compound A solution by one day. Polyethylene was recovered (2.0 g, MW = 260,700, MWD = 2.738).

### EXAMPLE 14

### Polymerization - Compound A

Using the same reactor design and general procedure as described in Example 1, 400 ml of toluene, 0.25 ml of 1.0 M MAO, and 0.2 ml of a preactivated compound A solution (11.5 mg of compound A dissolved in 9.5 ml of toluene and 0.5 ml of 1.0 M MAO) were added into the reactor. The reactor was heated to 80°C and ethylene was introduced 4.13 bar(60 psi), and the reactior was allowed to run for 30 minutes, followed by rapidly cooling and venting the system. After evaporation of the solvent, 1.1 g of polyethylene was recovered (MW = ₄₇9,600, MWD = 3.₁30).

### EXAMPLE 15

### Polymerization - Compound A

Using the same reactor design and general procedure as described in Example 1, 400 ml of toluene and 2.0 ml of a preactivated compound A solution (11.5 mg of compound A dissolved in 9.5 ml of toluene and 0.5 ml of 1.0 M MAO) were added into the reactor. The reactor was heated to 80°C and ethylene was introduced 4.13 bar (60 psi), and the reaction was allowed to run for 30 minutes, followed by rapidly cooling and venting the system. After evaporation of the solvent, 1.6 g of polyethylene was recovered (MW 458,800, MWD - - 2.037).

### EXAMPLE 16

### Polymerization - Compound A

Using the general procedure as described in Example 1, 400 ml of toluene, 5.0 ml of 1.0 M MAO, 0.23 mg of compound A (0.2 ml of a 11.5 mg in lo ml of toluene solution) was added to the reactor. The reactor was heated to 80°C, the ethylene introduced 27.6 bar (400 psi), and the reaction was allowed to run for 30 minutes, followed by rapidly cooling and venting the system. After evaporation of the solvent, 19.4 g of polyethylene was recovered (MW = 343,700, MWD = 3.674).

### EXAMPLE 17

### Polymerization - Compound A

The polymerization was performed in a stirred 100 ml stainless steel autoclave which was equipped to perform polymerizations at pressures up to 40,000 psi and temperatures up to 300°C. The reactor was purged with nitrogen and heated to 160°C. Compound A and alumoxane solutions were prepared in separate vials. A stock solution was prepared by dissolving 26 mg of compound A in 100 ml of toluene. The compound A solution was prepared by diluting 0.5 ml of the stock solution with 5.0 ml of toluene. The alumoxane solution consisted of 2.0 ml of a 4% MAO solution added to 5.0 ml of toluene. The compound A solution was added to the alumoxane solution, then 0.43 ml of the mixed solutions were transferred by nitrogen pressure into a constant-volume injection tube. The autoclave was pressurized with ethylene to 1784 bar and was stirred at 1500 rpm. The mixed solutions were injected into the stirred reactor with excess pressure, at which time a temperature rise of 4°C was observed The temperature and pressure were recorded continuously for 120 seconds, at which time the contents of the autoclave were rapidly vented into a receiving vessel. The reactor was washed with xylene to recover any additional polymer remaining. These washings were combined with the polymer released when the autoclave was vented to yield 0.7 g of polyethylene (MW = 245,500, MWD = 2.257).

### EXAMPLE 18

### Polymerization - Compound B

Using the general procedure described in Example 1, 400 ml of toluene, 5.0 ml of 1.0 M MAO and 0.278 mg of compound B (0.2 ml of a 13.9 mg in 10 ml of toluene solution) were added to the reactor. The reactor was heated to 80°C and the ethylene 4.13 bar (60 psi) was introduced into the system. The polymerization reaction was limited to 10 minutes. The reaction was ceased by rapidly cooling and venting the system. The solvent was evaporated off the polymer by a stream of nitrogen. Polyethylene was recovered (9.6 g, MW = 241,200, MWD = 2.628).

### EXAMPLE 19

### Polymerization - Compound C

Using the general procedures described in Example 1, 300 ml of toluene, 4.0 ml of 1.0 M MAO and 0.46 mg of compound C (0.4 ml of a 11.5 mg in lo ml of toluene solution) was added to the reactor. The reactor was heated to 80°C and the ethylene 4.13 bar (60 psi) was introduced into the system. The polymerization reaction was limited to 30 minutes. The reaction was ceased by rapidly cooling and venting the system. The solvent was evaporated off the polymer by a stream of nitrogen. Polyethylene was recovered (1.7 g, MW = 278,400, MWD = 2.142).

### EXAMPLE 20

### Polymerization - Compound D

Using the general procedure described in Example 1, 400 ml of toluene, 5.0 ml of 1.0 M MAO and 0.278 mg of compound D (0.2 ml of a 13.9 mg in 10 ml of toluene solution) was added to the reactor. The reactor was heated to 80°C and ethylene 4.13 bar (60 psi) was introduced into the system. The polymerization reaction was limited to 30 minutes. The reaction was ceased by rapidly cooling and venting the system. The solvent was evaporated off the polymer by a stream of nitrogen. Polyethylene was recovered (1.9 g, MW 229,700, MWD 2.618).

### EXAMPLE 21

### Polymerization - Compound E

Using the general procedure described in Example 1, 300 ml of hexane, 9.0 ml of 1.0 M MAO and 0.24 mg of compound E (0.2 ml of a 12.0 mg in 10 ml of toluene solution) was added to the reactor. The reactor was heated to 80°C and ethylene 4.13 bar (60 psi) was introduced into the system. The polymerization reaction was limited to 30 minutes. The reaction was ceased by rapidly cooling and venting the system. The solvent was evaporated off the polymer by a stream of nitrogen. Polyethylene was recovered (2.2 g, MW = 258,200, MWD = 2.348).

### EXAMPLE 22

### Polymerization - Compound E

The polymerization was carried out as in Example 1 except with the following reactor conditions: 200 ml of toluene, 100 ml of 1-butene, 9.0 ml of 1.0 M MAO and 2.4 mg of compound E (2.0 ml of a 12.0 mg in 10 ml of toluene solution at 50°C. The reactor was pressurized with ethylene 4.48 bar (65 psi), and the reaction was allowed to run for 30 minutes, followed by rapidly cooling and venting the system. After evaporation of the solvent, 1.8 g of an ethylene-1-butene copolymer was recovered (MW = 323,600, MWD = 2.463, 33.5 SCB/1000C by IR).

### EXAMPLE 23

### Polymerization - Compound F

The polymerization was carried out as in Example 1 with the following reactor conditions: 400 ml of toluene, 5.0 ml of 1.0 M MAO, 0.242 mg of compound F (0.2 ml of a 12.1 mg in 10 ml of toluene solution), 80°C, 4.13 bar (60 psi) ethylene, 30 minutes. The run provided 5.3 g of polyethylene (MW = 319,900, MWD = 2.477).

### EXAMPLE 24

### Polymerization - Compound F

The polymerization was carried out as in Example 1 with the following reactor conditions: 150 ml of toluene, 100 ml of 1-butene, 9.0 ml of 1.0 M MAO, 2.42 mg of compound F (2.0 ml of a 12.1 mg in 10 ml of toluene solution), 50°C, 4.48 bar (65 psi) ethylene, 30 minutes. The run provided 3.5 g of an ethylene-1-butene copolymer (MW = 251,300, MWD = 3.341, 33.3 SCB/1000C by IR).

### EXAMPLE 25

### Polymerization - Compound G

The polymerization was carried out as in Example 1 with the following reactor conditions: 400 ml of toluene, 5.0 ml of 1.0 M MAO, 0.29 mg of compound G (0.2 of a 14.5 mg in 10 ml of toluene solution), 80°C, 4.13 bar (60 psi) ethylene, 30 minutes. The run provided 3.5 g of polyethylene (MW = 237,300, MWD = 2.549).

### EXAMPLE 26

### Polymerization - Compound G

The polymerization was carried out as in Example 1 with the following reactor conditions: 150 ml of toluene, 100 ml of 1-butene, 7.0 ml of 1.0 M MAO, 2.9 mg of compound G (2.0 ml of a 14.5 mg in 10 ml of toluene solution), 50°C, 4.48 bar (65 psi) ethylene, 30 minutes. The run provided 7.0 g of an ethylene-1-butene copolymer (MW = 425,000, MWD = 2.816, 27.1 SCB/1000C by IR).

### EXAMPLE 27

### Polymerization - Compound H

The polymerization was carried out as in Example 1 with the following reactor conditions: 400 ml of toluene, 5.0 ml of 1.0 M MAO, 0.266 mg of compound H (0.2 ml of a 13.3 mg in 10 nl of toluene solution), 80°C, 4.13 bar (60 psi) ethylene, 30 minutes. The run provided 11.1 g of polyethylene (MW = 299,800, MWD = 2.569).

### EXAMPLE 28

### Polymerization - Compound H

The polymerization was carried out as in Example 1 with the following reactor conditions: 150 ml of toluene, 100 ml of 1-butene, 7.0 ml of 1.0 M MAO, 2.66 mg of compound H (2.0 ml of a 13.3 mg in 10 ml of toluene solution), 50°C, 4.48 bar (65 psi)ethylene, 30 minutes. The run provided 15.4 g of an ethylene-1-butene copolymer (MW = 286,600, MWD = 2.980, 45.4 SCB/1000C by IR).

### EXAMPLE 29

### Polymerization - Compound I

The polymerization was carried out as in Example 1 with the following reactor conditions: 400 ml of toluene, 5.0 ml of 1.0 MAO, and 0.34 mg of compound I (0.2 ml of a 17.0 mg in 10 ml of toluene solution). The reactor was heated to 80°C, the ethylene was introduced 4.13 bar (60 psi), and the reaction was allowed to run for 30 minutes, followed by rapidly cooling and venting the system. After evaporation of the solvent, 0.9 g of polyethylene was recovered (MW = 377,000, MWD = 1.996).

### EXAMPLE 30

### Polymerization - Compound J

The polymerization was carried out as in Example 1 with the following reactor conditions: 400 ml of toluene, 5.0 ml of 1.0 M MAO, 0.318 mg of compound J (0.2 ml of a 15.9 mg in 10 ml of toluene solution), 80°C, 4.13 bar (60 psi) ethylene, 30 minutes. The run provided 8.6 g of polyethylene (MW = 321,000, MWD = 2.803).

### EXAMPLE 31

### Polymerization - Compound J

The polymerization was carried out as in Example 1 with the following reactor conditions: 150 ml of toluene, 100 ml of 1-butene, 7.0 ml of 1.0 M MAO, 3.18 mg of compound J (2.0 ml of a 15.9 mg in 10 ml of toluene solution), 50°C, 4.48 bar (65 psi) ethylene, 30 minutes. The run provided 11.2 g of an ethylene-1-butene copolymer (MW = 224,800, MWD = 2.512, 49.6 SCB/1000C by IR technique, 55.4 SCB/1000C by NMR).

### EXAMPLE 32

### Polymerization - Compound K

The polymerization was carried out as in Example 1 with the following reactor conditions: 300 ml of toluene, 5.0 ml of 1.0 M MAO, 0.272 mg of compound K (0.2 ml of a 13.6 mg in 10 ml of toluene solution), 80°C, 4.13 bar (60 psi) ethylene, 30 minutes. The run provided 26.6 g of polyethylene (MW = 187,300, MWD = 2.401).

### EXAMPLE 33

### Polymerization - Compound K

The polymerization was carried out as in Example 1 with the following reactor conditions: 150 ml of toluene, 100 ml of 1-butene, 7.0 ml of 1.0 M MAO, 2.72 mg of compound K (2.0 ml of a 13.6 mg in 10 ml of toluene solution), 50°C, 4.48 bar (65 psi)ethylene, 30 minutes. The run provided 3.9 g of an ethylene-1-butene copolymer (MW = 207,600, MWD = 2.394, 33.9 SCB/1000C by IR).

### EXAMPLE 34

### Polymerization - Compound L

The polymerization was carried out as in Example 1 with the following reactor conditions: 400 ml of toluene, 5.0 ml of 1.0 M MAO, 0.322 mg of compound L (0.2 ml of a 16.1 mg in 10 ml of toluene solution), 80°C, 4.13 bar (60 psi) ethylene, 30 minutes. The run provided 15.5 g of polyethylene (MW = 174,300, MWD = 2.193).

### EXAMPLE 35

### Polymerization - Compound A

The polymerization was carried out as in Example 1 with the following reactor contents: 250 ml of toluene, 150 ml of 1-hexene, 7.0 ml of 1.0 M MAO and 2.3 mg of compound A (2.0 ml of a 11.5 mg in 10 ml of toluene solution) at 50°C. The reactor was pressurized with ethylene 4.48 bar (65 psi), and the reaction was allowed to run for 30 minutes, followed by rapidly cooling and venting the system. After evaporation of the solvent, 26.5 g of an ethylene-1-hexane copolymer was recovered (MW = 222,800, MWD = 3.373, 39.1 SCB/1000C by IR).

### EXAMPLE 36

### Polymerization - Compound A

The polymerization was carried out as in Example 1 with the following reactor contents: 300 ml of toluene, 100 ml of 1-octene, 7.0 ml of 1.0 M MAO and 2.3 mg of compound A (2.0 ml of a 11.5 mg in 10 ml of toluene solution) at 50°C. The reactor was pressurized with ethylene 4.48 bar (65 psi), and the reaction was allowed to run for 30 minutes, followed by rapidly cooling and venting the system. After evaporation of the solvent, 19.7 g of an ethylene-1-octene copolymer was recovered (MW = 548,600; MWD = 3.007, 16.5 SCB/1000C by ¹³C NMR).

### EXAMPLE 37

### Polymerization - Compound A

The polymerization was carried out as in Example 1 with the following reactor conditions: 300 ml of toluene, 100 ml of 4-methyl-1-pentene, 7.0 ml of 1.0 M MAO and 2.3 mg of compound A (2.0 ml of a 11.5 mg in 10 ml of toluene solution) at 50°C. The reactor was pressurized with ethylene 4.48 bar (65 psi), and the reaction was allowed to run for 30 minutes, followed by rapidly cooling and venting the system. After evaporation of the solvent, 15.1 g of an ethylene-4-methyl-l-pentene copolymer was recovered (MW = 611,800, MWD = 1.683, 1.8 mole % determined by ¹³C NMR).

### EXAMPLE 38

### Polymerization - Compound A

The polymerization was carried out as in Example 1 with the following reactor conditions: 300 ml of toluene, 100 ml of a 2.2 M norbornene in toluene solution, 7.0 ml of 1.0 M MAO and 2.3 mg of compound A (2.0 ml of a 11.5 mg in 10 ml of toluene solution) at 50°C. The reactor was pressurized with ethylene 4.48 bar (65 psi), and the reaction was allowed to run for 30 minutes, followed by rapidly cooling and venting the system. After evaporation of the solvent, 12.3 g of an ethylene-norbornene copolymer was recovered (MW = 812,600, MWD = 1.711, 0.3 mole % determined by ¹³C NMR).

### EXAMPLE 39

### Polymerization - Compound A

The polymerization was carried out as in Example 1 with the following reactor contents: 300 ml of toluene, 100 ml of cis-1,4-hexadiene, 7.0 ml of 1.0 M MAO and 2.3 mg of compound A (2.0 ml of a 11.5 mg in 10 ml of toluene solution) at 50°C. The reactor was pressurized with ethylene 4.48 bar (65 psi) and the reaction was allowed to run for 30 minutes, followed by rapidly cooling and venting the system. After evaporation of the solvent, 13.6 g of an ethylene-cis-1,4-hexadiene copolymer was recovered (MW = 163,400, MWD = 2.388, 2.2 mole % determined ¹³C NMR).

### EXAMPLE 40

### Polymerization - Compound AT

The polymerization run was performed in a 12-liter autoclave reactor equippped with a paddle stirrer, an external water jacket for temperature control, a regulated supply of dry nitrogen, ethylene, propylene, 1-butene and hexane, and a septum inlet for introduction of other solvents or comonomers, transition metal compound and alumoxane solutions. The reactor was dried and degassed thoroughly prior to use. A typical run consisted of injecting 400 ml of toluene, 5 ml of 1.0 M MAO, 0.206 mg compound AT (0.2 ml of a 10.3 mg in 10 ml of toluene solution) into the reactor. The reactor was then heated to 80°C and the ethylene 4.13 bar (60 psi) was introduced into the system. The polymerization reaction was limited to 30 minutes. The reaction was ceased by rapidly cooling and venting the system. The solvent was evaporated off of the polymer by a stream of nitrogen. Polyethylene was recovered (11.8 g, MW 279,700, MWD = 2.676).

### EXAMPLE 41

### Polymerization - Compound AT

Using the same reactor design and general procedure as described in Example 40, 400 ml of toluene, 5.0 ml of 1.0 M MAO, and 0.2 ml of a preactivated compound AT solution (10.3 mg of compound AT dissolved in 9.5 ml of toluene and 0.5 ml of 1.0 M MAO) were added to the reactor. The reactor was heated to 80°C, the ethylene was introduced 4.13 bar(60 psi), and the reaction was allowed to run for 30 minutes, followed by rapidly cooling and venting the system. After evaporation of the solvent, 14.5 g of polyethylene was recovered (MW = 406,100, MWD = 2.486).

### EXAMPLE 42

### Polymerization - Compound AT

Using the same reactor design and general procedure described in Example 40, 300 ml of toluene, 100 ml of 1-hexene, 7.0 ml of 1.0 M MAO, and 1.03 mg of compound AT (1.0 ml of 10.3 mg in 10 ml of toluene solution) were added to the reactor. The reactor was heated at 80°C, the ethylene was introduced 4.48 bar (65 psi), and the reaction was allowed to run for 10 minutes, followed by rapidly cooling and venting the system. After evaporation of the toluene, 48.6 g of an ethylene-1-hexene copolymer was recovered (MW = 98,500, MWD = 1.745, 117 SCB/1000C by ¹³C NMR).

### EXAMPLE 43

### Polymerization - Compound AT

Using the same reactor design and general procedure described in Example 40, 375 ml of toluene, 25 ml of 1-hexene, 7.0 ml of 1.0 M MAO, and 1.03 mg of compound AT (1.0 ml of a 10.3 mg in 10 ml of toluene solution) were added to the reactor. The reactor was heated at 80°C, the ethylene was introduced 4.48 bar (65 psi), and the reaction was allowed to run for 10 minutes, followed by rapidly cooling and venting the system. After evaporation of the toluene, 29.2 g of an ethylene-1-hexene copolymer was recovered (MW = 129,800, MWD = 2.557, 53.0 SCB/1000C by ¹³C NMR).

### EXAMPLE 44

### Polymerization - Compound AT

Using the same reactor design and general procedure described in Example 40, 375 ml of toluene, 25 ml of 1-hexene, 7.0 ml of 1.0 M MAO, and 1.03 mg of compound AT (1.0 ml of 10.3 mg in 10 ml of toluene solution) were added to the reactor. The reactor was heated at 50°C, the ethylene was introduced 4.48 bar (65 psi), and the reaction was allowed to run for 10 minutes, followed by rapidly cooling and venting the system. After evaporation of the toluene, 15.0 g of an ethylene-1-hexene copolymer was recovered (MW = 310,000, MWD 2.579, 47.2 SCB/1000C by ¹³C NMR).

### EXAMPLE 45

### Polymerization - Compound AT

Using the same reactor design and general procedure described in Example 40, 300 ml of toluene, 100 ml of propylene, 7.0 ml of 1.0 M MAO, and 2.06 mg of compound AT (2.0 ml of a 10.3 mg in 10 ml of toluene solution) were added to the reactor. The reactor was heated at 80°C, the ethylene was introduced 4.48 bar (65 psi), and the reaction was allowed to run for 10 minutes, followed by rapidly cooling and venting the system. After evaporation of the toluene, 46.0 g of an ethylene-propylene copolymer was recovered (MW = 110,200, MWD 5.489, 20 wt% ethylene by IR).

### EXAMPLE 46

### Polymerization - Compound AT

Using the same reactor design and general procedure described in Example 40, 300 ml of toluene, 100 ml of 1-butene, 7.0 ml of 1.0 M MAO, and 1.03 mg of compound AT (1.0 ml of a 10.3 mg in 10 ml of toluene solution) were added to the reactor. The reactor was heated at 80°C, the ethylene was introduced 4.48 bar (65 psi), and the reaction was allowed to run for 10 minutes, followed by rapidly cooling and venting the system. After evaporation of the toluene, 35.1 g of an ethylene-1-butene copolymer was recovered (MW = 94,400, MWD = 2.405,165 SCB/1000C by ¹³C NMR).

### EXAMPLE 47

### Polymerization - Compound AT

Using the same reactor design and general procedure described in Example 40, 300 ml of toluene, 100 ml of 1-octene, 7.0 ml of 1.0 M MAO,and 1.04 mg of compound AT (1.0 ml of a 10.4 mg in 10 ml of toluene solution) were added to the reactor. The reactor was heated at 80°C, the ethylene was introduced 4.48 bar (65 psi), and the reaction was allowed to run for 10 minutes, followed by rapidly cooling and venting the system. After evaporation of the toluene, 30.6 g of an ethylene-1-octene copolymer was recovered (MW = 73,100, MWD =2.552, 77.7 SCB/1000C by ¹³C NMR).

### EXAMPLE 48

### Polymerization - Compound BT

Using the same reactor design and general procedure described in Example 40, 400 ml of toluene, 5.0 ml of 1.0 M MAO, and 0.248 mg of compound BT (0.2 ml- of a 12.4 mg in 10 ml of toluene solution) were added to the reactor. The reactor was heated at 80°C, the ethylene was introduced 4.13 bar (60 psi), and the reaction was allowed to run for 10 minutes, followed by rapidly cooling and venting the system. After evaporation of the toluene, 3.8 g of polyethylene was recovered (MW 451,400, MWD = 3.692).

### EXAMPLE 49

### Polymerization - Compound CT

Using the same reactor design and general procedure described in Example 40, 400 ml of toluene, 5.0 ml of 1.0 M MAO,and 0.234 mg of compound CT (0.2 ml of a 11.7 mg in 10 ml of toluene solution) were added to the reactor. The reactor was heated at 80°C, the ethylene was introduced 4.13 bar (60 psi), and the reaction was allowed to run for 10 minutes, followed by rapidly cooling and venting the system. After evaporation of the toluene, 2.7 g of polyethylene was recovered (MW = ₅29,₁00, MWD = 3.665).

### EXAMPLE 50

### Polymerization - Compound DT

Using the same reactor design and general procedure described in Example 40, 400 ml of toluene, 5.0 ml of 1.0 M MAO, and 0.28 mg of compound DT (0.2 ml of a 14.0 mg in 10 ml of toluene solution) were added to the reactor. The reactor was heated at 80°C, the ethylene was introduced 4.13 bar (60 psi), and the reaction was allowed to run for 10 minutes, followed by rapidly cooling and venting the system. After evaporation of the toluene, 9.0 g of polyethylene was recovered (MW = 427,800, MWD = 3.306).

### EXAMPLE 51

### Polymerization - Compound DT

Using the same reactor design and general procedure described in Example 40, 300 ml of toluene, 100 ml propylene, 7.0 ml of 1.0 M MAO, and 1.4 mg of compound DT (1.0 ml of a 14.0 mg in 10 ml of toluene solution) were added to the reactor. The reactor was heated at 30°C and the reaction was allowed to run for 1 hour, followed by rapidly cooling and venting the system. After evaporation of the toluene, 15 g of amorphous polypropylene was recovered (MW = 18,600, MWD = 1.657).

### EXAMPLE 52

### Polymerization - Compound ET

Using the same reactor design and general procedure described in Example 40, 300 ml of toluene, 100 m! 1 -hexene, 70 ml of 1.0 M MAO, and 1.0 mg of compound ET (1.0 ml of a 10.0 mg in 10 ml of toluene solution) were added to the reactor. The reactor was heated at 80°C and the ethylene was introduced 4.48 bar (65 psi) . During the polymerization, the reactor temperature increased by 20°C. After 10 minutes, the reactor was rapidly cooled and vented. After evaporation of the toluene, 106 g of an ethylene-1-hexene copolymer was recovered (MW = 17,900, MWD = 2.275, 39.1 SCB/1000C by NMR).

### EXAMPLE 53

### Polymerization - Compound AT

The polymerization was performed in a stirred 100 ml stainless steel autoclave which was equipped to perform polymerizations at temperatures up to 300°C and pressures up to 2500 bar. The reactor was evacuated, purged with nitrogen, purged with ethylene and heated to 200°C. 1-hexene (75 ml) was added to the reactor under ethylene pressure. A stock solution of compound AT was prepared by dissolving 6.5 mg of compound AT in 12.5 ml of toluene. The test solution was prepared by adding 1.0 ml of the compound AT stock solution to 1.9 ml of 1.0 M MAO solution, followed by 7.1 ml of toluene. The test solution (0.43 ml) was transferred by nitrogen pressure into a constant-volume injection tube. The autoclave was pressurized with ethylene to 1748 bar and was stirred at 1800 rpm. The test solution was injected into the autoclave with excess pressure, at which time a temperature rise of 16°C was observed. The temperature and pressure were recorded continuously for 120 seconds, at which time the contents of the autoclave were rapidly vented into a receiving vessel The reactor was washed with xylene to recover any polymer remaining within. These washings were combined with the polymer released when the reactor was vented. Precipitation of the polymer from the mixture by addition of acetone yielded 2.7 g of polymer (MW = 64,000, MWD = 3.16, 14.7 SCB/1000C by I R).

### EXAMPLE 54

### Polymerization - Compound AT

For this Example a stirred 1 L steel autoclave reaction vessel which was equipped to perform continuous Ziegler polymerization reactions at pressures to 2500 bar and temperatures up to 300°C was used. The reaction system was supplied with a thermocouple and pressure transducer to measure temperature and pressure continuously and with means to supply continuously purified compressed ethylene and 1-butene (or propylene). Equipment for continuously introducing a measured flow of catalysts solution, and equipment for rapidly venting and quenching the reaction, and of collecting the polymer product were also a part of the reaction system. The polymerization was performed with a molar ratio of ethylene to 1-butene of 1.6 without the addition of a solvent The temperature of the cleaned reactor containing ethylene and 1-butene was equilibrated at the desired reaction temperature of 180°C. The catalyst solution was prepared by mixing 0.888 g of solid compound AT with 0.67 L of a 30 wt% methylalumoxane solution in 4.3 L of toluene in an inert atmosphere This catalyst solution was continuously fed by a high pressure pump into the reactor at a rate of 0.56 L/hr which resulted in a temperature of 180°C in the reactor. During this run, ethylene and 1-butene were pressured into the autoclave at a total pressure of 1300 bar. The reactor contents were stirred at 1000 rpm. The yield of polymer products was 3.9 kg/hr of an ethylene-1-butene copolymer which had a weight average molecular weight of 50,200, a molecular weight distribution of 2.36 and 60.1 SCB/1000C as measured by ¹³C NMR.

### EXAMPLE 55

### Polymerization - Compound AT

Using the same reactor design as described in Example 54, and using a molar ratio of ethylene to propylene of 2.6 without the addition of a solvent The temperature of a cleaned reactor containing ethylene and propylene was equilibrated at the desired reaction temperature of 140°C. The catalyst solution was prepared by mixing 0.779 g of solid compound AT with 0.5 L of a 30 wt% methylalumoxane solution in 24.5 L of toluene in an inert atmosphere. This catalyst solution was continuously fed by a high pressure pump into the reactor at a rate of 0.9 L/hr which resulted in a temperature of 140°C in the reactor. During this run, ethylene and propylene were pressured into the autoclave at a total pressure of 2200 bar. The reactor contents were stirred at 1000 rpm The yield of polymer product was 2.3 kg/hr of an ethylene-propylene copolymer which had a weight average molecular weight of 102,700, a molecular weight distribution of 2.208 and a density of 0.863 g/ml.

### EXAMPLE 56

### Polymerization - Compound FT

Using the same reactor design as described in Example 54, and using a molar ratio of ethylene to 1-butene of 1.6 without the addition of a solvent. The temperature of the cleaned reactor containing ethylene and 1-butene was equilibrated at the desired reaction temperature of 180°C. The catalyst solution was prepared by mixing 0.859 g of solid FT with 30 wt% methylalumoxane solution and toluene such that the catalyst concentration was 0.162 g/L with an Al/ M molar ratio of 1200. The preparation was done under an inert atmosphere. This catalyst solution was continuously fed by a high pressure pump into the reactor at a rate of 1.15 L/hr which resulted in a temperature of 180°C in the reactor. During this run ethylene and 1-butene were pressured into the autoclave at a total pressure of 1300. The reactor contents were stirred at 1000 rpm. The yield of polymer product was 3.9 kg/hr of an ethylene-1-butene copolymer which had a weight average molecular weight of 61,400, a molecular weight distribution of 2.607 and 104.8 SCB/ 1000C by ¹³C NMR.

### Example 57

### Polymerization - Compound GT

Using the same reactor design and general procedure as described in Example 40, 300 ml of toluene, 100 ml of 1-hexene, 7.0 ml of 1.0 M MAO, and 1.23 mg of compound GT (1.0 ml of a 12.3 mg in 10 ml of toluene solution) were added to the reactor. The reactor was heated at 80°C, and ethylene was introduced 4.48 bar (65 psi), and the reaction was allowed to run for 30 minutes, followed by rapidly cooling and venting the system. After evaporation of the toluene, 47.2 g of an ethylene-1-hexene copolymer was recovered (MW 313,000, MWD 3.497, 41.0 SCB/1000C by ¹³C NMR.

### EXAMPLE 58

### Polymerization - Compound AT

Using the same reactor design as described in Example 54, and using a molar ratio of ethylene to 1-butene of 1.6 without the addition of a solvent, the temperature of the cleaned reactor containing ethylene and 1-butene was equilibrated at the desired reaction temperature of 170°C. The catalyst solution was prepared by mixing 0.925 g of solid compound AT with 2 L of a 10 wt% methylalumoxane solution in 8L of toluene in an inert atmosphere. This catalyst solution was continuously fed by a high pressure pump into the reactor at a rate of 0.28 L/hr which resulted in a temperature of 170°C in the reactor. During this run, ethylene and 1-butene were pressured into the autoclave at a total pressure of 1300 bar. The reactor contents were stirred at 1000 rpm. The yield of polymer product was 3.7 kg/hr of an ethylene-1-butene copolymer which had a weight average molecular weight of 69,500, a molecular weight distribution of 2.049 and 35.7 SCB/1000C by ¹³C NMR.

### EXAMPLE 59

### Polymerization - Compound BT

Using the same reactor design as described in Example 54, and using a molar ratio of ethylene to 1-butene of 1.6 without the addition of a solvent, the temperature of the cleaned reactor containing ethylene and 1-butene was equilibrated at the desired reaction temperature of 180°C. The catalyst solution was prepared by mixing 0.995 g of solid compound BT with 30 wt% methylalumoxane solution and toluene such that the catalyst concentration was 0.187 g/L and the Al/M molar ratio was 1300. The preparation was done under an inert atmosphere. This catalyst solution was continuously fed by a high pressure pump into the reactor at a rate of 1.0 L/hr which resulted in a temperature of 180°C in the reactor. During this run, ethylene and 1-butene were pressured into the autoclave at a total pressure of 1300 bar. The reactor contents were stirred at 1000 rpm. The yield of polymer product was 3.9 kg/hr of an ethylene-1-butene copolymer which had a weight average molecular weight of 65,000, a molecular weight distribution of 2.623 and 55.5 SCB/1000C as measured by ¹³C NMR.

### EXAMPLE 60

### Polymerization - Compound H

Using the same reactor design as described in Example 54, and using a molar ratio of ethylene to 1-butene of 1.6 without the addition of a solvent, the temperature of the cleaned reactor containing ethylene and 1-butene was equilibrated at the desired reaction temperature of 180°C. The catalyst solution was prepared by mixing 1.94 g of solid compound H with 2.0 L of a 10 wt% methylalumoxane solution in 3L of toluene in an inert atmosphere. This catalyst solution was continuously fed by a high pressure pump into the reactor at a rate of 1.5 L/hr which resulted in a temperature of 180°C in the reactor. During this run, ethylene and 1-butene were pressured into the autoclave at a total pressure of 1300 bar. The reactor contents were stirred at 1000 rpm. The yield of polymer product was 3.9 kg/hr of an ethylene-1-butene copolymer which had a weight average molecular weight of 31,900 and 46.5 SCB/1000C as measured by ¹³C NMR.

### EXAMPLE 61

### Polymerization - Compound I

Using the same reactor design as described in Example 54, and using a molar ratio of ethylene to 1-butene of 1.6 without the addition of a solvent, the temperature of the cleaned reactor containing ethylene and 1-butene was equilibrated at the desired reaction temperature of 180°C. The catalyst solution was prepared by mixing 1.92 g of solid compound I with 2.0 L of a 10 wt% methylalumoxane solution in 3 L of toluene in an inert atmosphere This catalyst solution was continuously fed by a high pressure pump into the reactor at a rate of 0.67 L/hr which resulted in a temperature of 180°C in the reactor. During this run, ethylene and 1-butene were pressured into the autoclave at a total pressure of 1300 bar. The reactor contents were stirred at 1000 rpm The yield of polymer product was 3.9 kg/hr of an ethylene-1-butene copolymer which had a weight average molecular weight of 40,800, a molecular weight distribution of 2.009 and 36.9 SCB/1000C as measured by ¹³C NMR.

### EXAMPLE 62

### Polymerization - Compound K

Using the same reactor design as described in Example 54, and using a molar ratio of ethylene to 1-butene of 1.6 without the addition of a solvent, the temperature of the cleaned reactor containing ethylene and 1-butene was equilibrated at the desired reaction temperature of 180°C. The catalyst solution was prepared by mixing 1.80 g of solid compound K with 2.0 L of a 10 wt% methylalumoxane solution in 3L of toluene in an inert atmosphere. This catalyst solution was continuously fed by a high pressure pump into the reactor at a rate of 1.7 L/hr which resulted in a temperature of 180°C in the reactor. During this run, ethylene and 1-butene were pressured into the autoclave at a total pressure of 1300 bar. The reactor contents were stirred at 1000 rpm. The yield of polymer product was 3.9 kg/hr of an ethylene-1-butene copolymer which had a weight average molecular weight of 51,700, a molecular weight distribution of 1.532 and 30.1 SCB/1000C as measured by ¹³C NMR.

### EXAMPLE 63

### Polymerization - Compound L

Using the same reactor design as described in Example 54, and using a molar ratio of ethylene to 1-butene of 1.6 without the addition of a solvent, the temperature of the cleaned reactor containing ethylene and 1-butene was equilibrated at the desired reaction temperature of 180°C. The catalyst solution was prepared by mixing 1.95 g of solid compound L with 2.0 L of a 10 wt% methylalumoxane solution in 3 L of toluene in an inert atmosphere This catalyst solution was continuously fed by a high pressure pump into the reactor at a rate of 1.2 L/hr which resulted in a temperature of 180°C in the reactor. During this run, ethylene and 1-butene were pressured into the autoclave at a total pressure of 1300 bar. The reactor contents were stirred at 1000 rpm. The yield of polymer product was 3.9 kg/hr of an ethylene-1-butene copolymer which had a weight average molecular weight of 38,800, a molecular weight distribution of 1.985 and 39.3 SCB/1000C as measured by ¹³C NMR.

### EXAMPLE 64

### Polymerization - Compound HT

Using the same reactor design as described in Example 54, and using a molar ratio of ethylene to 1-butene of 1.6 without the addition of a solvent, the temperature of the cleaned reactor containing ethylene and 1-butene was equilibrated at the desired reaction temperature of 180°C. The catalyst solution was prepared by mixing 2.01 g of solid compound HT with 30 wt% methylalumoxane solution and toluene such that the catalyst concentration was 0.354 g/ L and the Al/M molar ratio was 400. The preparation was done under an inert atmosphere. This catalyst solution was continuously fed by a high pressure pump into the reactor at a rate of 1.15 L/hr which resulted in a temperature of 180°C in the reactor. During this run, ethylene and 1-butene were pressured into the autoclave at a total pressure of 1300 bar. The reactor contents were stirred at 1000 rpm. The yield of polymer porudct was 3.9 kg_{/}hr of an ethylene-1-butene copolymer which had a weight average molecular weight of 61,700, a molecular weight distribution of 2 896 and 62.9 SCB/1000C as measured by ¹³C NMR.

### EXAMPLE 65

### Polymerization - Compound F

Using the same reactor design as described in Example 54, and using a molar ratio of ethylene to 1-butene of 1.6 without the addition of a solvent, the temperature of the cleaned reactor containing ethylene and 1-butene was equilibrated at the desired reaction temperature of 180°C. The catalyst solution was prepared by mixing 1.31 g of solid compound F with 2.0 L of a 10 wt% methylalumoxane soution in 3 L of toluene in an inert atmosphere. This catalyst solution was continuously fed by a high pressure pump into the reactor at a rate of 0.56 L/hr which resulted in a temperature of 180°C in the reactor. During this run, ethylene and 1-butene were pressured into the atuoclave at a total pressure of 1300 bar. The reactor contents were stirred at 1000 rpm. The yield of polymer product was 3.9 kg/hr of an ethylene-1-butene copolymer which had a weight average molecular weight of 43,400, a molecular weight distribution of 2.001 and 40.1 SCB/1000C as measured by ¹³C NMR.

### EXAMPLE 66

### Polymerization - Compound G

Using the same reactor design as described in Example 54, and using a molar ratio fo ethylene to 1-butene of 1.6 without the addition of a solvent, the temperature of the cleaned reactor containing ethylene and 1-butene was equilibrated at the desired reaction temperature of 180°C. The catalyst solution was prepared by mixing 1.53 g of solid compound G with 0.5 L of a 30 wt% methylalumoxane solution in 4.5 L of toluene in an inert atmosphere. This catalyst solution was continuously fed by a high pressure pump into the reactor at a rate of 0.58 L/hr which resulted in a temperature of 180°C in the reactor. During this run, ethylene and 1-butene were pressured into the autoclave at a total pressure of 1300 bar. The reactor contents were stirred at 1000 rpm. The yield of polymer product was 3.9 kg/hr of an ethylene-1-butene copolymer which had a weight average molecular weight of 47,400, a molecular weight distribution of 2.198 and 37.6 SCB/1000C as measured by ¹³C NMR.

### EXAMPLE 67

### Polymerization - Compound IT

Using the same reator design as described in Example 54, and using a molar ratio of ethylene to 1-butene of 1.6 without the addition of a solvent, the temperature of the cleaned reactor containing ethylene and 1-butene was equilibrated at the desired reaction temperature of 180°C. The catalyst solution was prepared by mixing 1.94 g of solid compound IT with 30 wt% methylalumoxane solution and toluene such that the catalyst concentration was 0.388 g/L and the Al/M molar ratio was 600. The preparation was done under an inert atmosphere This catalyst soution was continuously fed by a high pressure pump into the reactor at a rate of 0.42 L/hr which resulted in a temperature of 180°C in the reactor. During this run, ethylene and 1-butene were pressured into the autoclave at a total pressure of 1300 bar. The reactor contents were stirred at 1000 rpm. The yield of polymer porudct was 3.9 kg/hr of an ethylene-1-butene copolymer which had a weight average molecular weight of 50,800, a molecular weight distribution of 2.467 and 69 SCB/1000C as measured by ¹H NMR.

### EXAMPLE 68

### Polymerization - Compound A

Using the same reactor design as described in Example 54, and using a molar ratio of ethylene to 1-butene of 1.6 without the addition of a solvent, the temperature of the cleaned reactor containing ethylene and 1-butene was equilibrated at the desired reaction temperature of 180°C. The catalyst solution was prepared by mixing 1.95 g of solid compound A with 0.67 L of a 30 wt% methylalumoxane solution in 4.3 L of toluene in an inert atmosphere. This catalyst solution was continuously fed by a high pressure pump into the reactor at a rate of 0.4 L_{/}hr which resulted in a temperature of 180°C in the reactor. During this run, ethylene and 1-butene were pressured into the autoclave at a total pressure of 1300 bar. The reactor contents were stirred at 1000 rpm. The yield of polymer products was 3.9 kg/hr of an ethylene-1-butene copolymer which had a weight average molecular weight of 71,100, a molecular weight distribution of 1.801 and 12.4 SCB/1000C as measured by ¹³C NMR.

### EXAMPLE 69

### Polymerization - Compound B

Using the same reactor design as described in Example 54, and using a molar ratio of ethylene to 1-butene of 1.6 without the addition of a solvent, the temperature of the cleaned reactor containing ethylene and 1-butene was equilibrated at the desired reaction temperature of 180°C. The catalyst solution was prepared by mixing 1.97 g of solid compound B with 0.67 L of a 30 wt% methylalumoxane solution in 4.3 L of toluene in an inert atmosphere. This catalyst solution was continuously fed by a high pressure pump into the reactor at a rate of 0.35 L/hr which resulted in a temperature of 180°C in the reactor. During this run, ethylene and 1-butene were pressured into the autoclave at a total pressure of 1300 bar. The reactor contents were stirred at 1000 rpm. The yield of polymer product was 3.9 kg/hr of an ethylene-1-butene copolymer which has a weight average molecular weight of 47,300, and a molecular weight distribution of 2.056 and 34.1 SCB/1000C as measured by ¹³C NMR.

### EXAMPLE 70

### Polymerization - Compound JT

Using the same reactor design as described in Example 54, and using a molar ratio of ethylene to 1-butene of 1.6 without the addition of a solvent, the temperature of the cleaned reactor containing ethylene and 1-butene was equilibrated at the desired reaction temperature of 180°C. The catalyst solution was prepared by mixing 1.78 g of solid compound JT with 30 wt% methylalumoxane solution and toluene such that the catalyst concentration was 0.318 g/L and the Al/M molar ratio was 1400. The preparation was done under an inert atmosphere. This catalyst solution was continuously fed by a high pressure pump into the reactor at a rate of 0.55 L/hr which resulted in a temperature of 180°C in the reactor. During thus run, ethylene and 1-butene were pressured into the autoclave at a total pressure of 1300 bar. The reactor contents were stirred at 1000 rpm. The yield of polymer product was 3.9 kg_{/}hr of an ethylene-1-butene copolymer which had a weight average molecular weight of 72,600, a molecular weight distribution of 2 385 and 110 SCB/1000C as measured by ¹H NMR.

Table 2 summarizes the polymerization conditions employed and the properties obtained in the product polymers as set forth in Examples 1-39 above.

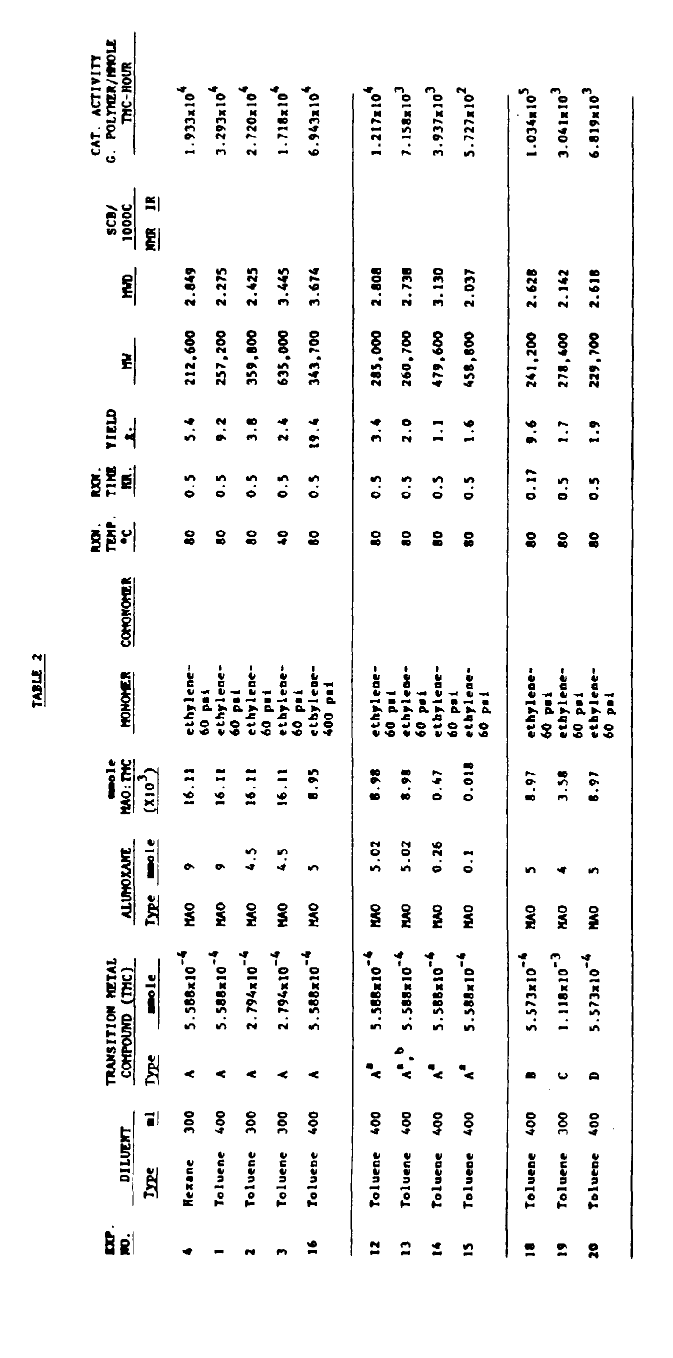

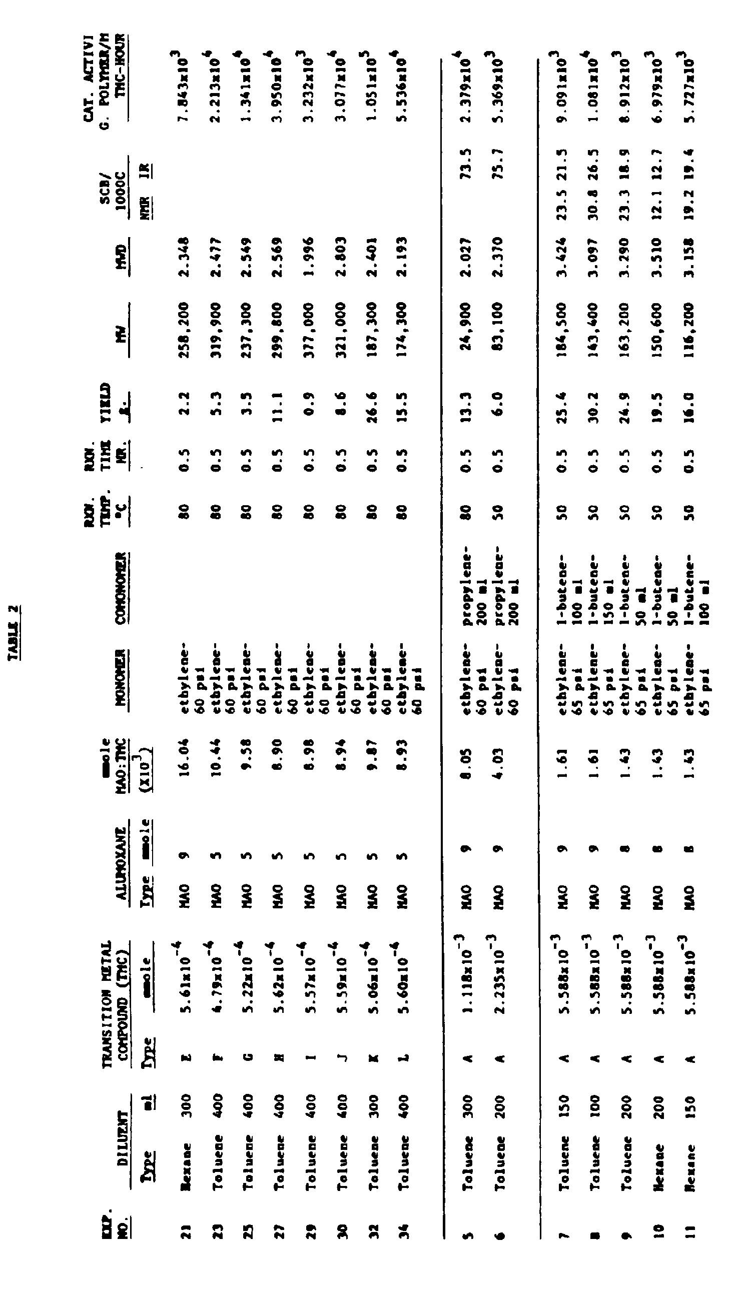

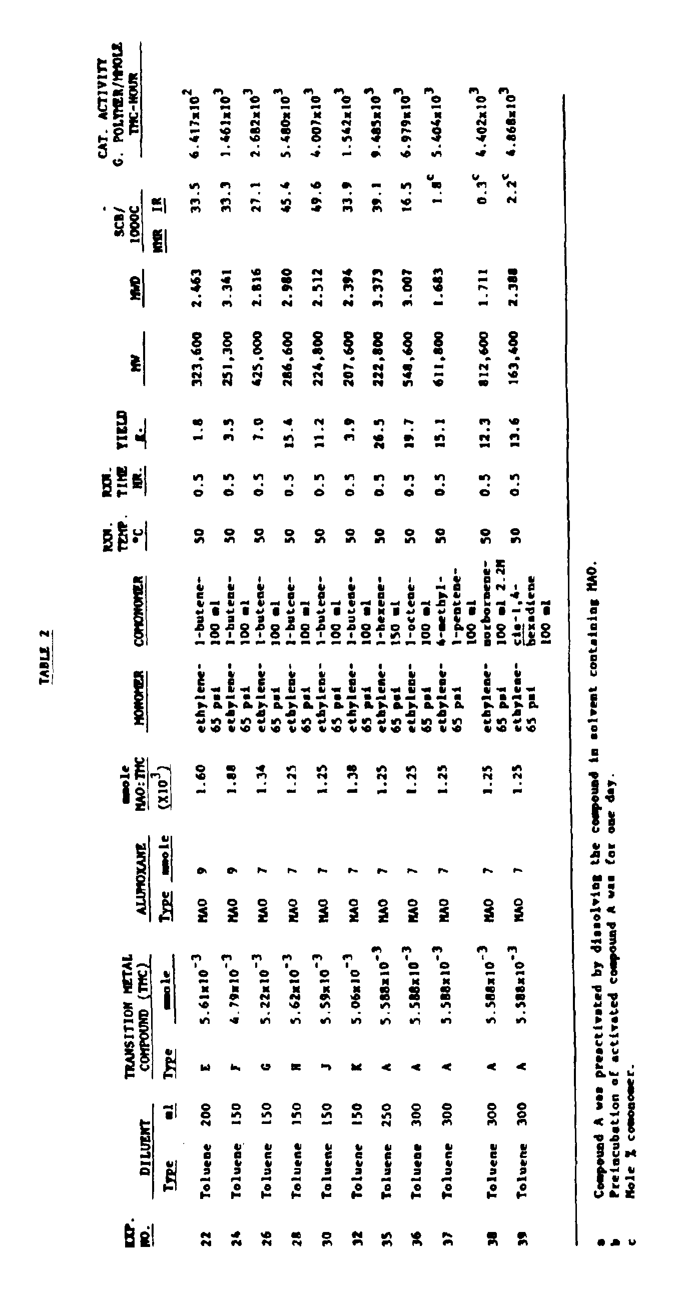

Tables A, B, and C summarize the polymerization conditions employed and the properties obtained in the polymer products of Example Nos 40-50, 52, 54-59, 64, 67 and 70 wherein a titanium species of Group IV B metal component is employed in the catalyst system.

Table D summarizes the condition employed and properties obtained in the polymer products produced by catalyst systems wherein each Group IV B metal is the species of a monocyclopentadienyl compound which is otherwise of identical structure except for the identity of the Group IV B metal itself.

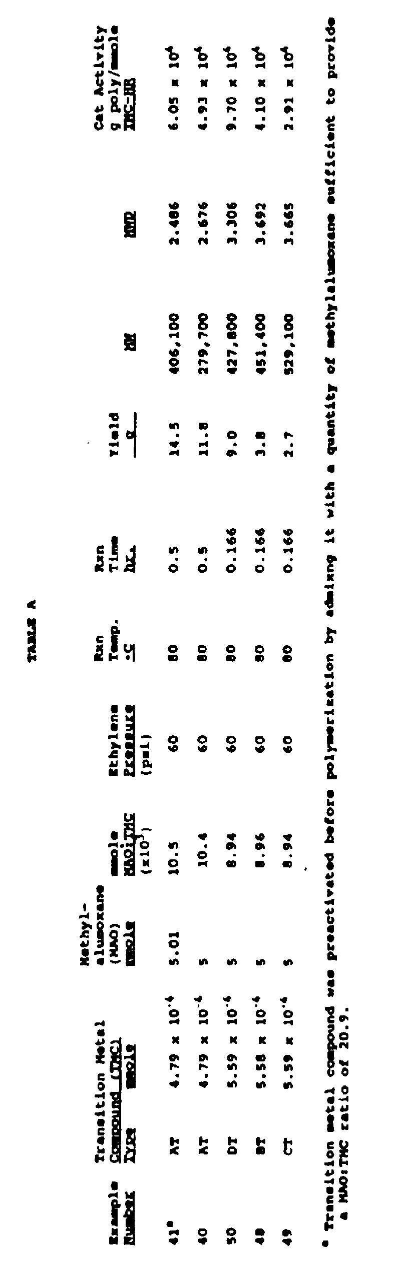

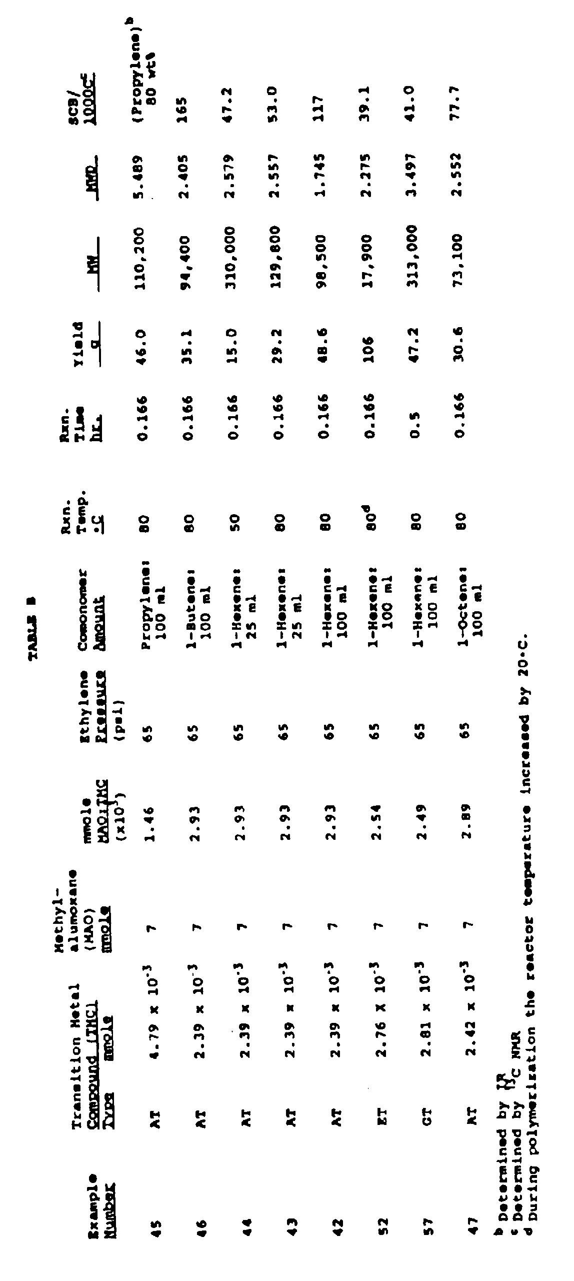

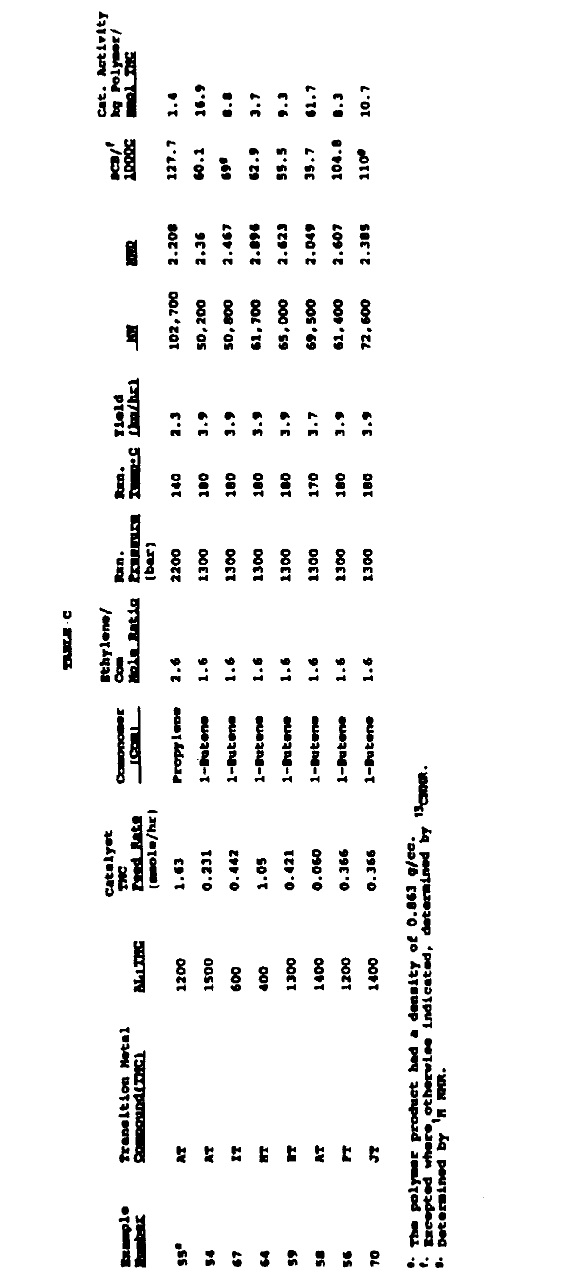

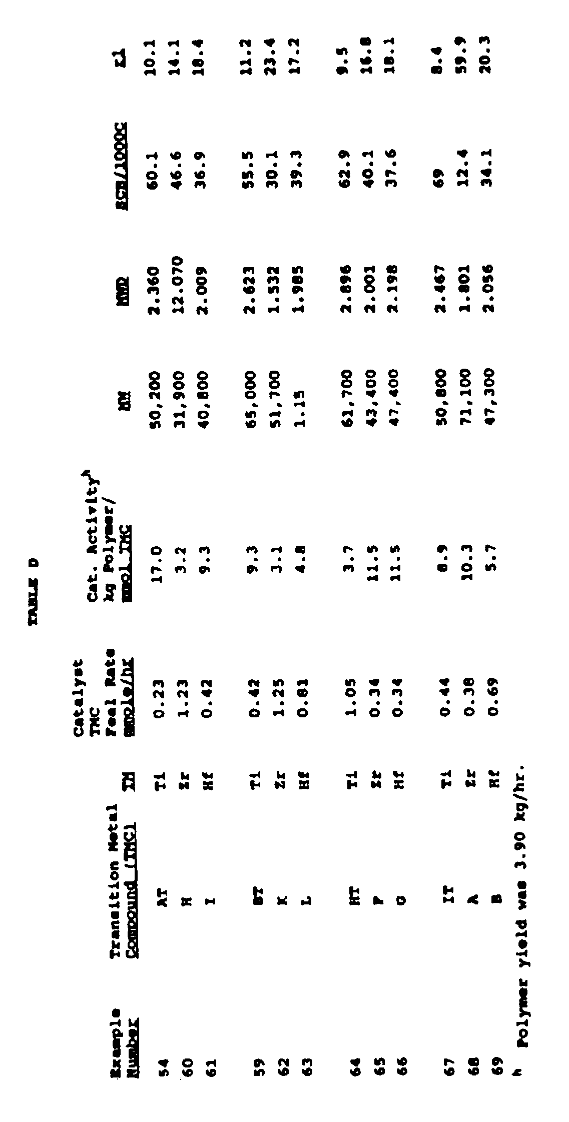

It may be seen that the requirement for the alumoxane component can be greatly diminished by premixing the catalyst with the alumoxane prior to initiation of the polymerization (see Examples 12 through 15).

By appropriate selection of (1) Group IV B transition metal component for use in the catalyst system; (2) the type and amount of alumoxane used; (3) the polymerization diluent type and volume; (4) reaction temperature; and (5) reaction pressure, one may tailor the product polymer to the weight average molecular weight value desired while still maintaining the molecular weight distribution to a value below about 4.0. The preferred polymerization diluents for practice of the process of the invention are aromatic diluents, such as toluene, or alkanes, such as hexane.

From the above examples it appears that for a catalyst system wherein the group IV B transition metal component is a titanium species of the following structure: 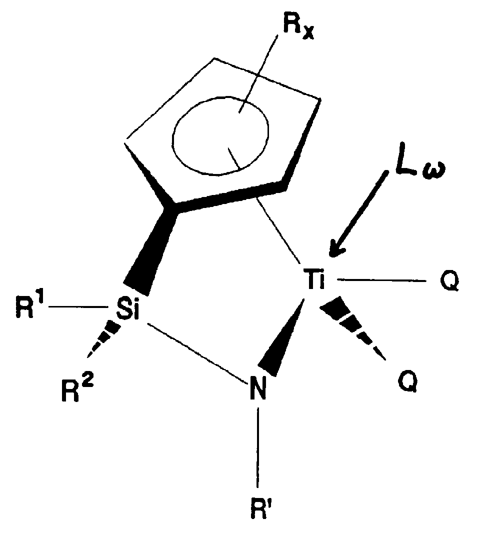 the nature of the R' group may dramatically influence the catalytic properties of the system. For production of ethylene-a-olein copolymers of greatest comonomer content, at a selected ethylene to a-olefin monomer ratio, R' is preferably a non-aromatic substituent, such as an alkyl or cycloalkyl substituent preferably bearing as primary or secondary carbon atom attached to the nitrogen atom.

Further, from the above data, the nature of the Cp ligand structure of a Ti metal component may be seen t6 influence the properties of the catalyst system. Those Cp ligands which are not too sterically hindered and which contain good electron donor groups, for example the Me₄C_{S} ligand, are preferred.

The resins that are prepared in accordance with this invention can be used to make a variety of products including films and fibers.

## Claims (Claims for the following Contracting State(s) : AT, BE, DE, FR, GB, IT, NL, SE)

1. Use, in the production of a polyolefin, of a catalyst component of the general formula: 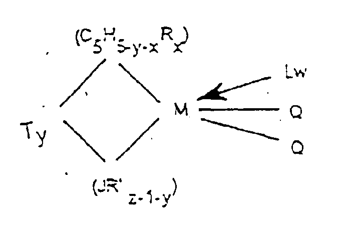 or 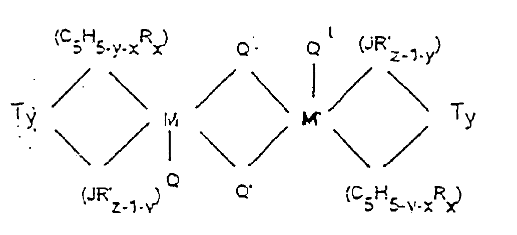 wherein M is Zr, Hf or Ti in its highest formal oxidation state
(C₅H_{5-y-x}Rₓ) is a cyclopentadienyl ring which is substituted with from up to five groups R, "x" is 0, 1, 2, 3, 4 or 5 denoting the degree of substitution, and each R is, independently, a radical selected from a group consisting of C₁-C₂₀ hydrocarbyl radicals, C₁-C₂₀ substituted hydrocarbyl radicals wherein one or more hydrogen atoms are replaced by a halogen atom, C₁-C₂₀ hydrocarbyl-substituted metalloid radicals wherein the metalloid is selected from the Group IV A of the Periodic Table of Elements and halogen radicals or (C₅H_{5-y-x}Rₓ) is a cyclopentadienyl ring in which two adjacent R-groups are joined forming a C₄-C₂₀ ring to give a saturated or unsaturated polycyclic cyclopentadienyl ligand;
(JR'_{z-1-y}) is a heteroatom ligand in rich J is an element with a coordination number of three from Group V A or an element with a coordination number of two from Group VI A of the Periodic Table of Elements, each R' is, independently, a radical selected from a group consisting of C₁-C₂₀ hydrocarbyl radicals, substituted C₁-C₂₀ hydrocarbyl radicals, wherein one or more hydrogen atoms is replaced by a halogen atom, and "z" is the coordination number of the element J;
each Q or Q' is, independently any univalent anionic ligand other than (C₅H_{5-y-x}Rₓ) or Q and Q' are a divalent anionic chelating agent and M' has the same meaning as M; "y" is 0 or 1 when "w" is greater than 0; "y" is 1 when "w" is 0, when "y" is 1, T is covalent bridging group containing a Group IV or V A element; and
L is a neutral Lewis base where "w" denotes a number from 0 to 3 but excluding compounds of the general formula: 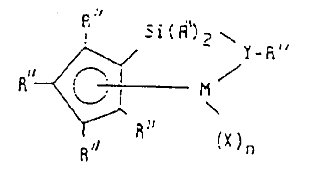 wherein M has the same meaning as above;
R" is independently selected from the group consisting of hydrogen, silyl, alkyl, aryl and combinations thereof having to 10 carbon atoms,
X is independently selected from halo, alkyl, aryl, aryloxy or alkoxyof up to 10 carbons, n being 1 or 2 depending on the valence of M and Y is nitrogen.

2. Use according to claim 1 in which the heteroatom J is nitrogen, phosphor, oxygen or sulfur.

3. A catalyst system for olefin polymerisation comprising (A) a compound of the general formula: 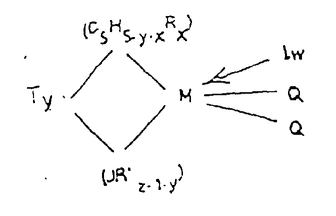 or 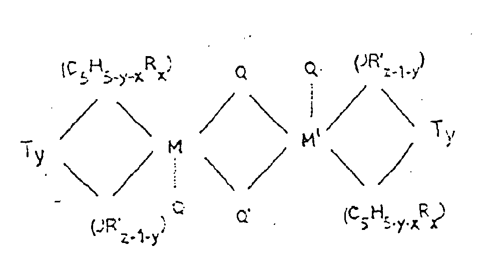 wherein M is Zr, Hf or Ti in its highest formal oxidation state;
(C₅H_{5-y-x}Rₓ) is a cyclopentadienyl ring which is substituted with from zero to five groups R, "x" is 0, 1, 2, 3, 4 or 5 denoting the degree of substitution, and
each R is, independently, a radical selected from a group consisting of C₁-C₂₀ hydrocarbyl radicals, C₁-C₂₀ substituted hydrocarbyl radicals wherein one or more hydrocarbyl radicals wherein one or more hydrogen atoms are replaced by a halogen atom, C₁-C₂₀ hydrocarbyl-substituted metalloid radicals wherein the metalloid is selected from the Group IV A of the Periodic Table of Elements and halogen radicals or (C₅H_{5-y-x}Rₓ) is a cyclopentadienyl ring in which two adjacent R-groups are joined forming C₄-C₂₀ ring to give a saturated or unsaturated polycyclic cyclopentadienyl ligand;
(JR'_{z-1-y}) is a heteroatom ligand in which J is an element with a coordination number of three from Group V A or an element with a coordination number of two from Group VI A of the Periodic Table of Elements, each R' is, independently, a radical selected from a group consisting of C₁-C₂₀ hydrocarbyl radicals, substituted Cₗ-C₂₀ hydrocarbyl radicals wherein one or more hydrogen atoms is replaced by a halogen atom, and "z" is the coordination number of the element J;
each Q or Q' is independently any univalent anionic ligand or Q and Q' are a divalent anionic chelating agent and M' has the same meaning as M;
"y" is 0 or 1 when "w" is greater than 0: "y" is 1 when "w" is 0, when "y" is 1, T is a covalent bridging group containing a Group IV A or V A element; and
L is a Lewis base where "w" denotes a number from 0 to 3 but excluding compounds of the general formula: 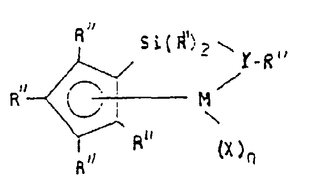 wherein M has the same meaning as above;
R" is independently selected from hydrogen, silyl, alkyl, aryl and combinations thereof having up to 10 carbon atoms,
X is independently selected from halo, alkyl, aryl, aryloxy or alkoxy of up to 10 carbons, n being 1 or 2 depending on the valence of M and Y is nitrogen and (B) an alumoxane.

4. A catalyst system according to claim 3 in which the heteroatom J is nitrogen, phosphorus, oxygen or sulfur.

5. The catalyst system of claims 3 or 4, wherein the mole ratio of AI:M is from 10:1 to 20000:1.

6. A process for preparing an olefin polymer using a catalyst system according to any of claims 3 to 5.

## Claims (Claims for the following Contracting State(s) : CH, DK, LI, LU)

1. Use in the production of a polyolefin, of a catalyst component of the general formula: 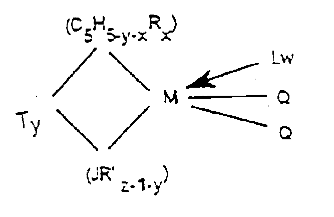 or 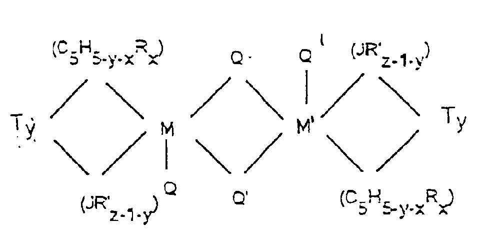 wherein M is Zr, Hf or Ti in its highest formal oxidation state;
(C₅H_{5-y-x}Rₓ) is a cyclopentadienyl ring which is substituted with from zero to five groups R, "x" is 0, 1,2, 3, 4 or 5 denoting the degree of substitution, and each R is, independently, a radical selected from a group consisting of C₁-C₂₀ hydrocarbyl radicals, C₁-C₂₀ substituted hydrocarbyl radicals wherein one or more hydrogen atoms are replaced by a halogen atom, an amido radical, a phosphido radical, an alkoxy radical or any other radical containing a Lewis acidic or basic functionality, C₁-C₂₀ hydrocarbyl-substituted metalloid radicals wherein the metalloid is selected from the Group IV A of the Periodic Table of Elements and halogen radicals, amido radicals, phosphido radicals, alkoxy radicals, alkyl borido radicals or any other radical containing Lewis acidic or basic functionality or (C₅H_{5-y-x}Rₓ) is a cyclopentadienyl ring in which two adjacent R-groups are joined forming a C₄-C₂₀ ring to give a saturated or unsaturated polycyclic cyclopentadienyl ligand;
(JR'_{z-1-}y) is a heteroatom ligand in which J is an element with a coordination number of three from Group V A or an element with a coordination number of two from Group VI A of the Periodic Table of Elements, each R' is, independently, a radical selected from a group consisting of C₁-C₂₀ hydrocarbyl radicals, substituted C₁-C₂₀ hydrocarbyl radicals wherein one or more hydrogen atoms is replaced by a halogen atom, an amido radical, a phosphido radical, an alkoxy radical or any other radical containing a Lewis acidic or basic functionality, and "z" is the coordination number of the element J;
each Q or Q' is, independently any univalent anionic ligand other than (C₅H_{5-y-x}Rₓ) or Q and Q' are divalent anionic chelating agent and M' has the same meaning as M; "y" is 0 or 1 when "w" is greater than 0; "y" is 1 when "w" is 0, when "y" is 1, T is a covalent bridging group containing a Group IV A or V A element; and L is a neutral Lewis base where "w" denotes a number from 0 to 3.

2. Use according to claim 1 in which the heteroatom J is nitrogen, phosphorus, oxygen or sulfur

3. A catalyst system for olefin polymerization comprising (A) a compound of the general formula: 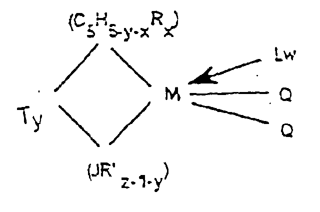 or 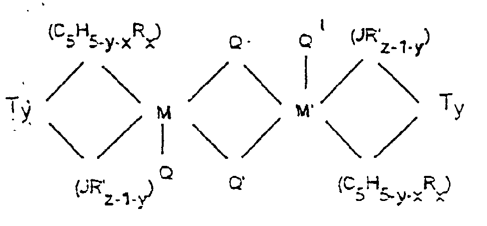 wherein M is Zr, Hf or Ti in its highest formal oxidation state;
(C₅H₅₋y₋ₓRₓ) is a cyclopentadienyl ring which is substituted with from up to five groups R, "X" is 0, 1, 2, 3, 4 or 5 denoting the degree of substitution, and each R is, independently, a radical selected from a group consisting of C₁-C₂₀ hydrocarbyl radicals, C₁-C₂₀ substituted hydrocarbyl radicals wherein one or more hydrogen atoms are replaced by a halogen atom, an amido radical, a phosphido radical, an alkoxy radical or any other radical containing a Lewis acidic or basic funcionality, C₁-C₂₀ hydrocarbyl-substituted metalloid radicals wherein the metalloid is selected from the Group IV A of the Periodic Table of Elements and halogen radicals, amido radicals, phosphido radicals, alkoxy radicals, alkyl borido radicals or any other radical containing Lewis acidic or basic functionality or (C₅H_{5-y-x}Rₓ) is a cyclopentadienyl ring in which two adjacent R-groups are joined forming a C₄-C₂₀ ring to give a saturated or unsaturated polycyclic cyclopentadienyl ligand;
(JR'_{z-1-y}) is a heteroatom ligand in which J is an element with a coordination number of three from Group V A or an element with a coordination number of two from Group VI A of the Periodic Table of Elements, each R' is, independently, a radical selected from a group consisting of C₁-C₂₀ hydrocarbyl radicals, substituted Cₗ-C₂₀ hydrocarbyl radicals wherein one or more hydrogen atoms is replaced by a halogen atom, an amido radical, a phosphido radical, an alkoxy radical or any other radical containing a Lewis acidic or basic funcionality, and "z" is the coordination number of the element J;
each Q or Q' is, independently any univalent anionic ligand other than (C₅H_{5-y-x}Rₓ) or Q and Q' are a divalent anionic chelating agent and M' has the same meaning as M; "y" is 0 or 1 when "w" is greater than 0; "y" is 1 when "w" is 0, when "y" is 1, T is a covalent bridging group containing a Group IV A or V A element; and L is a Lewis base where "w" denotes a number from 0 to 3; and (B) an alumoxane

4. A catalyst system according to claim 3 in which the heteroatom J is nitrogen, phosphorus, oxygen or sulphur.

5. The catalyst system according to claims 3 or 4, wherein the mole ration of Al: M is from 10:1 to 20000:1.

6. A process for preparing an olefin polymer using a catalyst system according to any of claims 3 to 5.

## Claims (Claims for the following Contracting State(s) : ES)

1. Use, in the production of a polyolefin, of a catalyst component of the general formula: 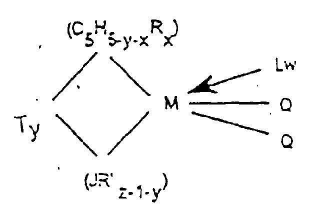 or 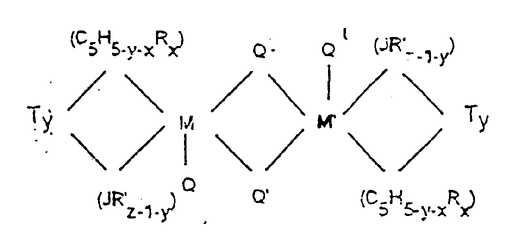 wherein M is Zr, Hf or Ti in its highest formal oxidation state
(C₅H_{5-y-x}Rₓ) is a cyclopentadienyl ring which is substituted with from up to five groups R, "x" is 0, 1, 2, 3, 4 or 5 denoting the degree of substitution, and each R is, independently, a radical selected from a group consisting of C₁-C₂₀ hydrocarbyl radicals, C₁-C₂₀ substituted hydrocarbyl radicals wherein one or more hydrogen atoms are replaced by a halogen atom, C₁-C₂₀ hydrocarbyl-substituted metalloid radicals wherein the metalloid is selected from the Group IV A of the Periodic Table of Elements and halogen radicals or (C₅H_{5-y-x}Rₓ) is a cyclopentadienyl ring in which two adjacent R-groups are joined forming a C₄-C₂₀ ring to give a saturated or unsaturated polycyclic cyclopentadienyl ligand;
(JR'_{z-1-y}) is a heteroatom ligand in which J is an element with a coordination number of three from Group V A or an element with a coordination number of two from Group VI A of the Periodic Table of Elements, each R' is, independently, a radical selected from a group consisting of C₁-C₂₀ hydrocarbyl radicals, substituted C₁-C₂₀ hydrocabyl radicals wherein one or more hydrogen atoms is replaced by a halogen atom, and "z" is the coordination number of the element J;
each Q or Q' is, independently any univalent anionic ligand other, than (C₅H_{5-y-x}Rₓ) or Q and Q' are a divalent anionic chelating agent and M' has the same meaning as M; "y" is 0 or 1 when "w" is greater than 0; "y" is 1 when "w" is 0, when "y" is 1, T is covalent bridging group containing a Group IV or V A element; and
L is a neutral Lewis base where "w" denotes a number from 0 to 3 but excluding compounds of the general formula: 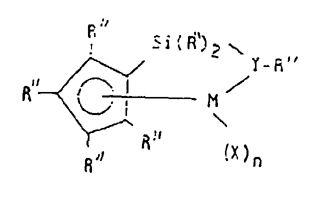 wherein M has the same meaning as above;
R" is independently selected from the group consisting of hydrogen, silyl, alkyl, aryl and combinations thereof having to 10 carbon atoms,
X is independently selected from halo, alkyl, aryl, aryloxy or alkoxyof up to 10 carbons, n being 1 or 2 depending on the valence of M and Y is nitrogen.

2. Use according to claim 1 in which the heteroatom J is nitrogen, phospnor, oxygen or sulfur.

3. A process for preparing an olefin polymer using a catalyst system comprising (A) a compound of the general formula: 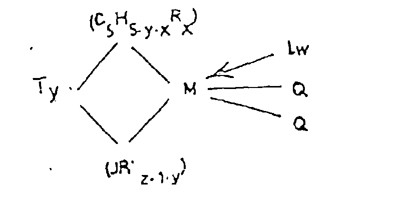 or 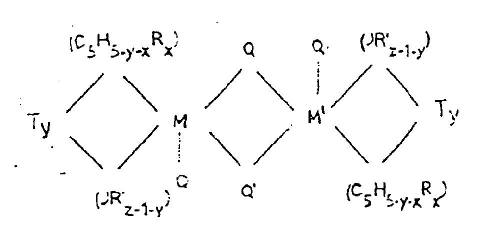 wherein M is Zr, Hf or Ti in its highest formal oxidation state;
(C₅H_{5-y-x}Rₓ) is a cyclopentadienyl ring which is substituted with from zero to five groups R, "x" is 0, 1, 2, 3, 4 or 5 denoting the degree of substitution, and each R is, independently, a radical selected from a group consisting of C₁-C₂₀ hydrocarbyl radicals, C₁-C₂₀ substituted hydrocarbyl radicals wherein one or more hydrocarbyl radicals wherein one or more hydrogen atoms are replaced by a halogen atom C₁-C₂₀ hydrocarbyl-substituted metalloid radicals wherein the metalloid is selected from the Group IV A of the Periodic Table of Elements and halogen radicals or (C₅H_{5-y-x}Rₓ) is a cyclopentadienyl ring in which two adjacent R-groups are joined forming a C₄₋C₂₀ ring to give a saturated or unsaturated polycyclic cyclopentadienyl ligand;
(JR'_{z-1-y}) is a heteroatom ligand in which J is an element with a coordination number of three from Group V A or an element with a coordination number of two from Group VI A of the Periodic Table of Elements, each R' is, independently, a radical selected from a group consisting of C₁-C₂₀ hydrocarbyl radicals, substituted Cₗ-C₂₀ hydrocarbyl radicals wherein one or more hydrogen atoms is replaced by a halogen atom, and "z" is the coordination number of the element J;
each Q or Q' is independently any univalent anionic ligand or Q and Q' are a divalent anionic chelating agent and M' has the same meaning as M;
"y" is 0 or 1 when "w" is greater than 0: "y" is 1 when "w" is 0, when "y" is 1, T is a covalent bridging group containing a Group IV A or V A element; and
L is a Lewis base where "w" denotes a number from 0 to 3 but excluding compounds of the general formula: 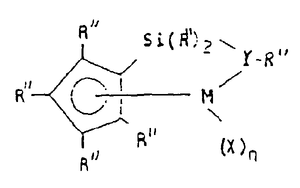 wherein M has the same meaning as above;
R" is independently selected from hydrogen, silyl, alkyl, aryl and combinations thereof having up to 10 carbon atoms,
X is independently selected from halo, alkyl, aryl, aryloxy or alkoxy of up to 10 carbon atoms, n being 1 or 2 depending on the valence of M, and Y is nitrogen,
and (B) an alumoxane.

4. A process according to claim 3 in which the heteroatom J is nitrogen, phosphorus, oxygen or sulfur.

5. A process according to claim 3 or 4, wherein the mole ratio of AI:M is from 10:1 to 20000:1.

6. A process according to any of claims 3 to 5, in the liquid phase which comprises the steps of contacting an olefin monomer with the catalyst system in a suitable polymerization diluent and reacting said monomer in the presence of said catalyst system for a time and at a temperature sufficient to produce a polyolefin of high molecular weight.

7. A process according to claim 6, in which the monomer comprises ethylene alone, for the production of a homopolyethylene, or ethylene in combination with an a-olefin having 3 to 20 carbon atoms for the production of an ethylene-a-olefin copolymer.

8. A process according to claim 7, wherein ethylene is submitted to a reaction zone at pressures of from 1.3x10-³ bar to 3445 bar and a reaction temperature from -100° to 300 °C

## Patentansprüche (Patentansprüche für folgende(n) Vertragsstaat(en) : AT, BE, DE, FR, GB, IT, NL, SE)

1. Verwendung einer Katalysatorkomponente der allgemeinen Formel: 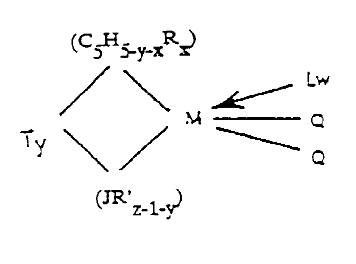 oder 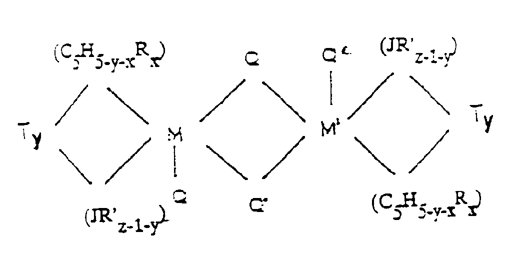 in denen
M Zr, Hf oder Ti in seinem höchsten formalen Oxidationszustand ist,
(C₅H_{5-y-x}Rₓ) ein Cyclopentadienylring ist, der mit bis zu 5 Gruppen R substituiert ist, "x" 0, 1, 2, 3, 4 oder 5 ist und den Substitutionsgrad angibt, wobei jedes R jeweils unabhängig ein Rest ausgewählt aus der Gruppe bestehend aus C₁- bis C₂ₒ-Kohlenwasserstoffresten, substituierten C₁- bis C₂ₒ-Kohlenwasserstoffresten, in denen ein Wasserstoffatom oder mehrere Wasserstoffatome durch ein Halogenatom ersetzt ist/sind, mit C₁- bis C2o-Kohlenwasserstoff substituierten Metalloidresten, in denen das Metalloid ausgewählt ist aus der Gruppe IV A des Periodensystems der Elemente, und Halogenresten, ist oder
(C₅H_{5-y-x-}Rₓ) ein Cyclopentadienylring ist, in dem zwei benachbarte R-Gruppen unter Bildung eines C₄-C₂₀ Ringes verbunden sind, um einen gesättigten oder ungesättigten polycyclischen Cyclopentadienylliganden zu ergeben,
(JR'_{z-1-y}) ein Heteroatomligand ist, in dem J ein Element mit einer Koordinationszahl 3 aus der Gruppe V A oder ein Element mit einer Koordinationszahl 2 aus der Gruppe VI A des Periodensystems der Elemente ist, und jedes R' jeweils unabhängig ein Rest ausgewählt aus einer Gruppe bestehend aus C₁- bis C₂₀-Kohlenwasserstoffresten, substituierten C₁- bis C₂ₒ-Kohlenwasserstoffresten, wobei ein Wasserstoffatom oder mehrere Wasserstoffatome durch ein Halogenatom ersetzt ist/sind, und "z" die Koordinationszahl des Elements J ist,
jedes Q oder Q' jeweils unabhängig irgendein einbindiger anionischer Ligand ist, der von (C₅H_{5-y-x-}Rₓ) verschieden ist, oder Q und Q' ein zweiwertiger anionischer chelatisierender Ligand sind, wobei M' die gleiche Bedeutung wie M hat,
"y" 0 oder 1 ist, wenn "w" größer als 0 ist, "y" 1 ist, wenn "w" 0 ist, wobei, wenn "y" 1 ist, T eine kovalent überbrückende Gruppe ist, die ein Element der Gruppe IV A oder V A enthält, und
L eine neutrale Lewis-Base ist, wobei "w" eine Zahl von 0 bis 3 ist,
bei der Herstellung eines Polyoefins,
aber ausgenommen Verbindungen der allgemeinen Formel 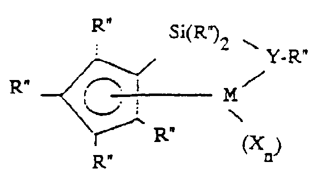 in der M die gleiche Bedeutung wie oben hat,
R" unabhängig ausgewählt ist aus der Gruppe bestehend aus Wasserstoff, Silyl, Alkyl, Aryl und Kombinationen davon mit bis zu 10 Kohlenstoffatomen,
X unabhängig ausgewählt ist aus Halogen, Alkyl, Aryl, Aryloxy oder Alkoxy mit bis zu 10 Kohlenstoffatomen, n 1 oder 2 ist, was von der Wertigkeit von M abhängt, und Y Stickstoff ist.

2. Verwendung nach Anspruch 1, bei der das Heteroatom J Stickstoff, Phosphor, Sauerstoff oder Schwefel ist.

3. Katalysatorsystem für eine Olefinpolymerisation, das
(A) eine Verbindung der allgemeinen Formel: 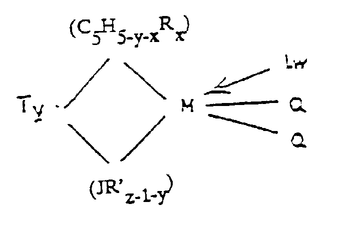 oder 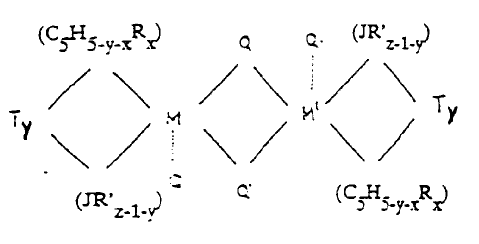 in denen
M Zr, Hf oder Ti in seinem höchsten formalen Oxidationszustand ist,
(C₅H_{5-y-x}Rₓ) ein Cyclopentadienylring ist, der mit 0 bis 5 Gruppen R substituiert ist, "x" 0, 1, 2, 3, 4 oder 5 ist und den Substitutionsgrad angibt, wobei jedes R jeweils unabhängig ein Rest ausgewählt aus der Gruppe bestehend aus C₁- bis C₂ₒ-Kohlenwasserstoffresten, substituierten C₁- bis C₂ₒ-Kohlenwasserstoffresten, in denen ein Wasserstoffatom oder mehrere Wasserstoffatome durch ein Halogenatom ersetzt ist/sind, mit C₁- bis C₂ₒ-Kohlenwasserstoff substituierten Metalloidresten, in denen das Metalloid ausgewählt ist aus der Gruppe IV A des Periodensystems der Elemente, und Halogenresten, ist oder
(C₅H_{5-y-x}Rₓ) ein Cyclopentadienylring ist, in dem zwei benachbarte R-Gruppen unter Bildung eines C₄-C₂ₒ-Ringes verbunden sind, um einen gesättigten oder ungesättigten polycyclischen Cyclopentadienylliganden zu ergeben,
(JR'_{z-1-}y) ein Heteroatomligand ist, in dem J ein Element mit einer Koordinationszahl 3 aus der Gruppe V A oder ein Element mit einer Koordinationszahl 2 aus der Gruppe VI A des Periodensystems der Elemente ist, und jedes R' jeweils unabhängig ein Rest ausgewählt aus einer Gruppe bestehend aus C₁- bis C₂₀-Kohlenwasserstoffresten, substituierten C₁-bis C₂ₒ-Kohlenwasserstoffresten, wobei ein Wasserstoffatom oder mehrere Wasserstoffatome durch ein Halogenatom ersetzt ist/sind, und "z" die Koordinationszahl des Elements J ist,
jedes Q oder Q' jeweils unabhängig irgendein einbindiger anionischer Ligand ist, oder Q und Q' ein zweiwertiger anionischer chelatisierender Ligand sind, wobei M' die gleiche Bedeutung wie M hat,
"y" 0 oder 1 ist, wenn "w" größer als 0 ist, "y" 1 ist, wenn "w" 0 ist, wobei, wenn "y" 1 ist, T eine kovalent überbrückende Gruppe ist, die ein Element der Gruppe IV A oder V A enthält, und
L eine Lewis-Base ist, wobei "w" eine Zahl von 0 bis 3 ist,
aber ausgenommen Verbindungen der allgemeinen Formel 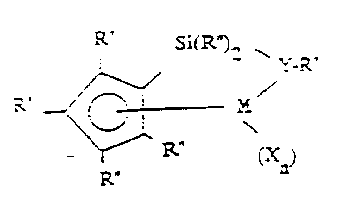 in der M die gleiche Bedeutung wie oben hat,
R" unabhängig ausgewählt ist aus der Gruppe bestehend aus Wasserstoff, Silyl, Alkyl, Aryl und Kombinationen davon mit bis zu 10 Kohlenstoffatomen,
X unabhängig ausgewählt ist aus Halogen, Alkyl, Aryl, Aryl-oxy oder Alkoxy mit bis zu 10 Kohlenstoffatomen, n 1 oder 2 ist, was von der Wertigkeit von M abhängt, und Y Stickstoff ist,
und (B) Alumoxan umfaßt.

4. Katalysatorsystem nach Anspruch 3, bei dem das Heteroatom J Stickstoff, Phosphor, Sauerstoff oder Schwefel ist.

5. Katalysatorsystem nach Anspruch 3 oder 4, bei dem das Molverhältnis von AI:M 10:1 bis 20 000: ist.

6. Verfahren zur Herstellung eines Olefinpolymers, bei dem ein Katalysatorsystem gemäß einem der Ansprüche 3 bis 5 verwendet wird.

## Patentansprüche (Patentansprüche für folgende(n) Vertragsstaat(en) : CH, DK, Li, LU)

1. Verwendung einer Katalysatorkomponente der allgemeinen Formel: 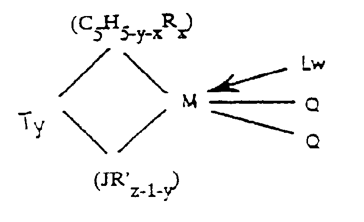 oder 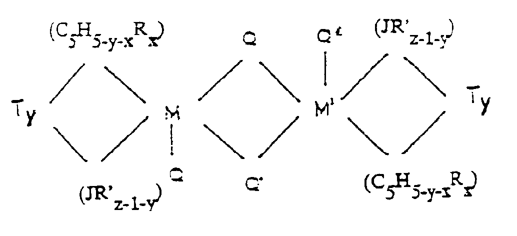 in denen
M Zr, Hf oder Ti in seinem höchsten formalen Oxidationszustand ist,
(C₅H_{5-y-x}Rₓ) ein Cyclopentadienylring ist, der mit 0 bis 5 Gruppen R substituiert ist, "x" 0, 1, 2, 3, 4 oder 5 ist und den Substitutionsgrad angibt, wobei jedes R jeweils unabhängig ein Rest ausgewählt aus der Gruppe bestehend aus C₁- bis C₂ₒ-Kohlenwasserstoffresten, substituierten C₁- bis C₂ₒ-Kohlenwasserstoffresten, in denen ein Wasserstoffatom oder mehrere Wasserstoffatome durch ein Halogenatom, einen Amidrest, einen Phosphidrest, einen Alkoxyrest oder irgendeinen anderen Rest ersetzt ist/sind, der eine Lewis-Säure-oder - Basefunktionalität aufweist, mit C₁- bis C₂ₒ-Kohlenwasserstoff substituierten Metalloidresten, in denen das Metalloid ausgewählt ist aus der Gruppe IV A des Periodensystems der Elemente, und Halogenresten, Amidresten, Phosphidresten, Alkoxyresten, Alkylboridresten oder irgendeinem anderen Rest, der Lewis-Säure-oder -Basefunktionalität aufweist, ist oder
(C₅H_{5-y-x}Rₓ) ein Cyclopentadienylring ist, in dem zwei benachbarte R-Gruppen unter Bildung eines C₄-C₂₀-Ringe- verbunden sind, um einen gesättigten oder ungesättigten polycyclischen Cyclopentadienylliganden zu ergeben,
(JR'_{z-1-}y) ein Heteroatomligand ist, in dem J ein Element mit einer Koordinationszahl 3 aus der Gruppe V A oder ein Element mit einer Koordinationszahl 2 aus der Gruppe VI A des Periodensystems der Elemente ist, und jedes R' jeweils unabhängig ein Rest ausgewählt aus einer Gruppe bestehend aus C₁- bis C₂ₒ-Kohlenwasserstoffresten, substituierten C₁- bis C₂ₒ-Kohlenwasserstoffresten, wobei ein Wasserstoffatom oder mehrere Wasserstoffatome durch ein Halogenatom, einen Amidrest, einen Phosphidrest, einen Alkoxyrest oder irgendeinen anderen Rest ersetzt ist/sind, der eine Lewis-Säure- oder -Basefunktionalität aufweist, ist und "z" die Koordinationszahl des Elements J ist,
jedes Q oder Q' jeweils unabhängig irgendein einbindiger anionischer Ligand ist, der von (C₅H_{5-y-x}Rₓ) verschieden ist, oder Q und Q' ein zweiwertiger anionischer chelatisierender Ligand sind, wobei M' die gleiche Bedeutung wie M hat,
"y" 0 oder 1 ist, wenn "w" größer als 0 ist, "y" 1 ist, wenn "w" 0 ist, wobei, wenn "y" 1 ist, T eine kovalent überbrückende Gruppe ist, die ein Element der Gruppe IV A oder V A enthält, und
L eine neutrale Lewis-Base ist, wobei "w" eine Zahl von 0 bis 3 ist,
bei der Herstellung eines Polyolefins.

2. Verwendung nach Anspruch 1, bei der das Heteroatom J Stickstoff, Phosphor, Sauerstoff oder Schwefel ist.

3. Katalysatorsystem für eine Olefinpolymerisation, das
(A) eine Verbindung der allgemeinen Formel: 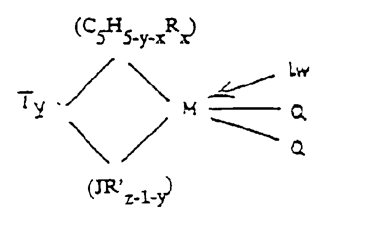 oder 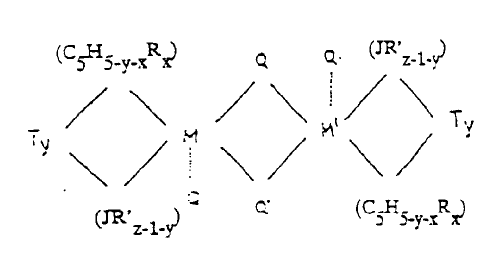 in denen
M Zr, Hf oder Ti in seinem höchsten formalen Oxidationszustand ist,
(C₅H_{5-y-x}Rₓ) ein Cyclopentadienylring ist, der mit 0 bis 5 Gruppen R substituiert ist, "x" 0, 1, 2, 3, 4 oder 5 ist und den Substitutionsgrad angibt, wobei jedes R jeweils unabhängig ein Rest ausgewählt aus der Gruppe bestehend aus C₁- bis C₂ₒ-Kohlenwasserstoffresten, substituierten C₁- bis C₂ₒ-Kohlenwasserstoffresten, in denen ein Wasserstoffatom oder mehrere Wasserstoffatome durch ein Halogenatom, einen Amidrest, einen Phosphidrest, einen Alkoxyrest oder irgendeinen anderen Rest ersetzt ist/sind, der eine Lewis-Säure-oder - Basefunktionalität aufweist, mit C₁- bis C₂ₒ-Kohlenwasserstoff substituierten Metalloidresten, in denen das Metalloid ausgewählt ist aus der Gruppe IV A des Periodensystems der Elemente, und Halogenresten, Amidresten, Phosphidresten, Alkoxyresten, Alkylboridresten oder irgendeinem anderen Rest, der Lewis-Säure-oder -Basefunktionalität aufweist, ist oder
(C₅H_{5-y-x-}Rₓ) ein Cyclopentadienylring ist, in dem zwei benachbarte R-Gruppen unter Bildung eines C₄-C₂ₒ-Ringes verbunden sind, um einen gesättigten oder ungesättigten polycyclischen Cyclopentadienylliganden zu ergeben,
(JR'_{z-1-y}) ein Heteroatomligand ist, in dem J ein Element mit einer Koordinationszahl 3 aus der Gruppe V A oder ein Element mit einer Koordinationszahl 2 aus der Gruppe VI A des Periodensystems der Elemente ist, und jedes R' jeweils unabhängig ein Rest ausgewählt aus einer Gruppe bestehend aus C₁- bis C₂ₒ-Kohlenwasserstoff resten, substituierten C₁- bis C2o-Kohlenwasserstoffresten, wobei ein Wasserstoffatom oder mehrere Wasserstoffatome durch ein Halogenatom, einen Amidrest, einen Phosphidrest, einen Alkoxyrest oder irgendeinen anderen Rest ersetzt ist/sind, der eine Lewis-Säure- oder -Basefunktionalität aufweist, ist und "z" die Koordinationszahl des Elements J ist,
jedes Q oder Q' jeweils unabhängig irgendein einbindiger anionischer Ligand ist, der von (C₅H_{5-y-x}Rₓ) verschieden ist, oder Q und Q' ein zweiwertiger anionischer chelatisierender Ligand sind, wobei M' die gleiche Bedeutung wie M hat,
"y" 0 oder 1 ist, wenn "w" größer als 0 ist, "y" 1 ist, wenn "w" 0 ist, wobei, wenn "y" 1 ist, T eine kovalent überbrückende Gruppe ist, die ein Element der Gruppe IV A oder V A enthält, und
L eine Lewis-Base ist, wobei "w" eine Zahl von 0 bis 3 ist,
und (B) Alumoxan umfaßt

4. Katalysatorsystem nach Anspruch 3, bei dem das Heteroatom J Stickstoff, Phosphor, Sauerstoff oder Schwefel ist.

5. Katalysatorsystem nach Anspruch 3 oder 4, bei dem das Molverhältnis von AI:M 10:1 bis 20 000:1 ist.

6. Verfahren zur Herstellung eines Olefinpolymers, bei dem ein Katalysatorsystem gemäß einem der Ansprüche 3 bis 5 verwendet wird.

## Patentansprüche (Patentansprüche für folgende(n) Vertragsstaat(en) : ES)

1. Verwendung einer Katalysatorkomponente der allgemeinen Formel: 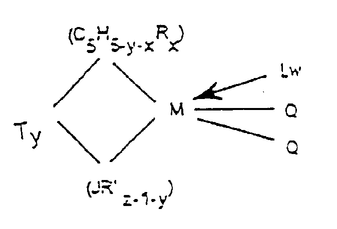 oder 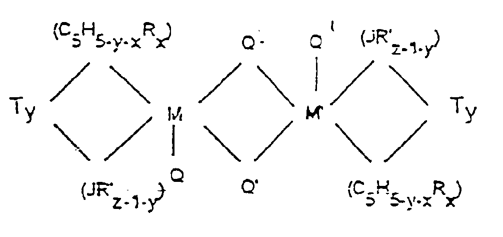 in denen
M Zr, Hf oder Ti in seinem höchsten formalen Oxidationszustand ist,
(C₅H_{5-y-x}Rₓ) ein Cyclopentadienylring ist, der mit bis zu 5 Gruppen R substituiert ist, "x" 0, 1, 2, 3, 4 oder 5 ist und den Substitutionsgrad angibt, wobei jedes R jeweils unabhängig ein Rest ausgewählt aus der Gruppe bestehend aus C₁- bis C₂ₒ-Kohlenwasserstoffresten, substituierten C₁- bis C₂ₒ-Kohlenwasserstoffresten, in denen ein Wasserstoffatom oder mehrere Wasserstoffatome durch ein Halogenatom ersetzt ist/sind, mit C₁- bis C₂ₒ-Kohlenwasserstoff substituierten Metalloidresten, in denen das Metalloid ausgewählt ist aus der Gruppe IV A des Periodensystems der Elemente, und Halogenresten, ist oder
(C₅H_{5-y-x}Rₓ) ein Cyclopentadienylring ist, in dem zwei benachbarte R-Gruppen unter Bildung eines C₄-C₂₀ Ringes verbunden sind, um einen gesättigten oder ungesättigten polycyclischen Cyclopentadienylliganden zu ergeben,
(JR'_{z-1-y}) ein Heteroatomligand ist, in dem J ein Element mit einer Koordinationszahl 3 aus der Gruppe V A oder ein Element mit einer Koordinationszahl 2 aus der Gruppe VI A des Periodensystems der Elemente ist, und jedes R' jeweils unabhängig ein Rest ausgewählt aus einer Gruppe bestehend aus C₁- bis C₂ₒ-Kohlenwasserstoffresten, substituierten C₁- bis C₂ₒ-Kohlenwasserstoffresten, wobei ein Wasserstoffatom oder mehrere Wasserstoffatome durch ein Halogenatom ersetzt ist/sind, und "z" die Koordinationszahl des Elements J ist,
jedes Q oder Q' jeweils unabhängig irgendein einbindiger anionischer Ligand ist, der von (C₅H_{5-y-x}Rₓ) verschieden ist, oder Q und Q' ein zweiwertiger anionischer chelatisierender Ligand sind, wobei M' die gleiche Bedeutung wie M hat,
"y" 0 oder ist, wenn "w" größer als 0 ist, "y" 1 ist, wenn "w" 0 ist, wobei, wenn "y" 1 ist, T eine kovalent überbrückende Gruppe ist, die ein Element der Gruppe IV A oder V A enthält, und
L eine neutrale Lewis-Base ist, wobei "w" eine Zahl von 0 bis 3 ist
bei der Herstellung eines Polyoefins,
aber ausgenommen Verbindungen der allgemeinen Formel 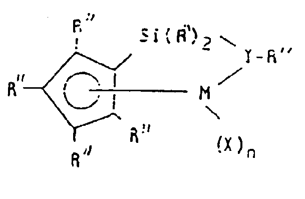 in der M die gleiche Bedeutung wie oben hat,
R" unabhängig ausgewählt ist aus der Gruppe bestehend aus Wasserstoff, Silyl, Alkyl, Aryl und Kombinationen davon mit bis zu 10 Kohlenstoffatomen,
X unabhängig ausgewählt ist aus Halogen, Alkyl, Aryl, Aryloxy oder Alkoxy mit bis zu 10 Kohlenstoffatomen, n 1 oder 2 ist, was von der Wertigkeit von M abhängt, und Y Stickstoff ist.

2. Verwendung nach Anspruch 1, bei der das Heteroatom J Stickstoff, Phosphor, Sauerstoff oder Schwefel ist.

3. Verfahren zur Herstellung eines Olefinpolymers, bei dem ein Katalysatorsystem verwendet wird, das
(A) eine Verbindung der allgemeinen Formel: 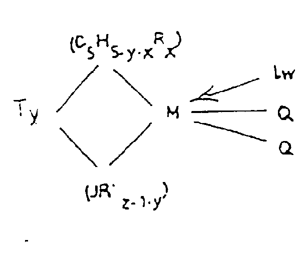 oder 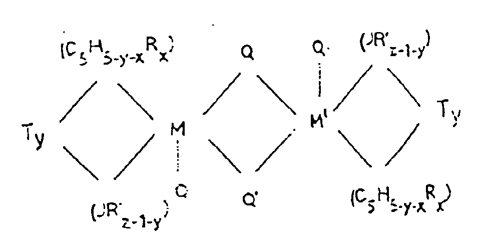 in denen
M Zr, Hf oder Ti in seinem höchsten formalen Oxidationszustand ist,
(C₅H_{5-y-x}Rₓ) ein Cyclopentadienylring ist, der mit 0 bis 5 Gruppen R substituiert ist, "x" 0, 1, 2, 3, 4 oder 5 ist und den Substitutionsgrad angibt, wobei jedes R jeweils unabhängig ein Rest ausgewählt aus der Gruppe bestehend aus C₁- bis C₂ₒ-Kohlenwasserstoffresten, substituierten C₁- bis C₂ₒ-Kohlenwasserstoffresten, in denen ein Wasserstoffatom oder mehrere Wasserstoffatome durch ein Halogenatom ersetzt ist/sind, mit C₁- bis C2o-Kohlenwasserstoff substituierten Metalloidresten, in denen das Metalloid ausgewählt ist aus der Gruppe IV A des Periodensystems der Elemente, und Halogenresten, ist oder
(C₅H_{5-y-x}Rₓ) ein Cyclopentadienylring ist, in dem zwei benachbarte R-Gruppen unter Bildung eines C₄-C₂₀-Ringes verbunden sind, um einen gesättigten oder ungesättigten polycyclischen Cyclopentadienylliganden zu ergeben,
(JR'_{z-1-y}) ein Heteroatomligand ist, in dem J ein Element mit einer Koordinationszahl 3 aus der Gruppe V A oder ein Element mit einer Koordinationszahl 2 aus der Gruppe VI A des Periodensystems der Elemente ist, und jedes R' jeweils unabhängig ein Rest ausgewählt aus einer Gruppe bestehend aus C₁- bis C₂ₒ-Kohlenwasserstoffresten, substituierten C₁- bis C₂ₒ-Kohlenwasserstoffresten, wobei ein Wasserstoffatom oder mehrere Wasserstoffatome durch ein Halogenatom ersetzt ist/- sind, und "z" die Koordinationszahl des Elements J ist,
jedes Q oder Q' jeweils unabhängig irgendein einbindiger anionischer Ligand ist, oder Q und Q' ein zweiwertiger anionischer chelatisierender Ligand sind, wobei M' die gleiche Bedeutung wie M hat,
"y" 0 oder ist, wenn "w" größer als 0 ist, "y" 1 ist, wenn "w" 0 ist, wobei, wenn "y" 1 ist, T eine kovalent überbrückende Gruppe ist, die ein Element der Gruppe IV A oder V A enthält, und
L eine Lewis-Base ist wobei "w" eine Zahl von 0 bis 3 ist,
aber ausgenommen Verbindungen der allgemeinen Formel 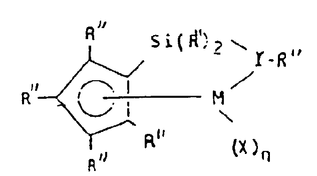 in der M die gleiche Bedeutung wie oben hat,
R" unabhängig ausgewählt ist aus der Gruppe bestehend aus Wasserstoff, Silyl, Alkyl, Aryl und Kombinationen davon mit bis zu 10 Kohlenstoffatomen,
X unabhängig ausgewählt ist aus Halogen, Alkyl, Aryl, Aryloxy oder Alkoxy mit bis zu 10 Kohlenstoffatomen, n 1 oder 2 ist, was von der Wertigkeit von M abhängt, und Y Stickstoff ist,
und (B) Alumoxan umfaßt

4. Verfahren nach Anspruch 3, bei dem das Heteroatom J Stickstoff, Phosphor, Sauerstoff oder Schwefel ist oder das Übergangsmetall M Zirkonium, Hafnium or Titan ist.

5. Verfahren nach Anspruch 3 oder 4, bei dem das Molverhältnis von AI:M 10:1 bis 20 000:1 ist.

6. Verfahren nach einem der Ansprüche 3 bis 5 in der flüssigen Phase, bei dem ein Olefinmonomer mit dem Katalysatorsystem in einem geeigneten Polymerisationsverdünnungsmittel in Kontakt gebracht wird und das Monomer in Gegenwart des Katalysatorsystems über einen Zeitraum und bei einer Temperatur umgesetzt wird, um ein Polyolefin mit hohem Molekulargewicht herzustellen.

7. Verfahren nach Anspruch 6, bei dem das Monomer Ethylen allein für die Herstellung von Homopolyethylen oder Ethylen in Kombination mit einem a-Olefin mit 3 bis 20 Kohlenstoffatomen für die Herstellung von Ethylen/a-Olefin-Coplymer umfaßt.

8. Verfahren nach Anspruch 7, bei dem Ethylen bei Drücken von 1,3 x 10-³ bar bis 3445 bar und einer Reaktionstemperatur von -100 bis 300 °C in eine Reaktionszone eingeführt wird.

## Revendications (Revendications pour l'(les) Etat(s) contractant(s) suivant(s) : AT, BE, DE, FR, GB, IT, NL, SE)

1. Utilisation, dans la production d'une polyoléfine, d'un constituant de catalyseur de formule générale: 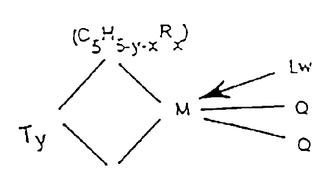 ou 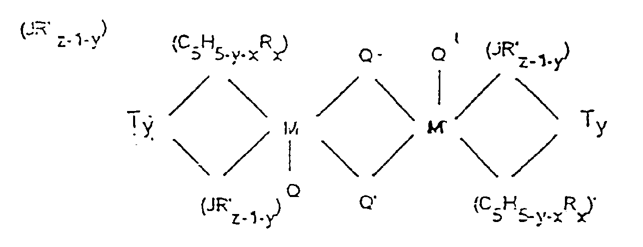 dans laquelle M représente Zr, Hf ou Ti à son état d'oxydation formel le plus élevé ;
(C₅H_{5-y-x}Rₓ) représente un noyau cyclopentadiényle qui est substitué avec jusqu'à cinq groupes R, "x" est égal à 0, 1, 2, 3, 4 ou 5 et désigne le degré de substitution et chaque groupe R représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par un atome d'halogène, radicaux métalloïdiques à substituants hydrocarbyle en C₁ à C₂₀ dans lesquels le métalloïde est choisi dans le Groupe IVA du Tableau Périodique des Eléments, et radicaux halogéno, ou (C₅H_{5-y-x}Rₓ) représente un noyau cyclopentadiényle dans lequel deux groupes R adjacents sont joints en formant un noyau en C₄ à C₂₀ donnant un ligand cyclopentadiényle polycyclique saturé ou insaturé ;
(JR'_{z--1-y}) représente un ligand hétéroatomique dans lequel J est un élément ayant un indice de coordination égal à trois du Groupe VA ou un élément ayant un indice de coordination égal à deux du Groupe VIA du Tableau Périodique des Eléments, chaque radical R' représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par un atome d'halogène, et "z" désigne l'indice de coordination de l'élément J ;
chaque radical Q ou Q' représente indépendamment n'importe quel ligand anionique univalent autre que (C₅H_{5-y-x}Rₓ) ou bien Q et Q' représentent un agent chélatant anionique divalent et M' a la même définition que M ;
"y" est égal à 0 ou 1 lorsque "w" est supérieur à 0 ; "y" est égal à 1 lorsque "w" est égal à 0 ; lorsque "y" est égal à 1, T représente un groupe covalent de pontage contenant un élément du Groupe IVA ou VA ; et L représente une base neutre de Lewis dont l'indice "w" désigne un nombre de O à 3, mais à l'exclusion de composés de formule générale : 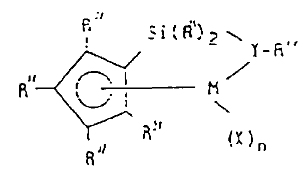 dans laquelle M répond à la définition précitée ;
R" est choisi indépendamment dans le groupe consistant en l'hydrogène, des groupes silyle, alkyle, aryle et leurs associations ayant jusqu'à 10 atomes de carbone,
X est choisi indépendamment entre des groupes halogéno, alkyle, aryle, aryloxy ou alkoxy ayant jusqu'à 10 atomes de carbone, n étant égal à 1 ou 2 en fonction de la valence de M et Y représente l'azote.

2. Utilisation suivant la revendication 1, dans laquelle l'hétéroatome J consiste en azote, phosphore, oxygène ou soufre.

3. Formulation de catalyseur pour la polymérisation d'oléfines, comprenant (A) un composé de formule générale : 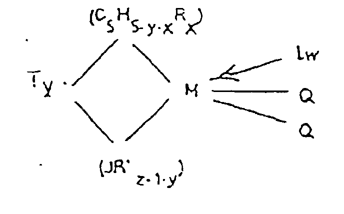 ou 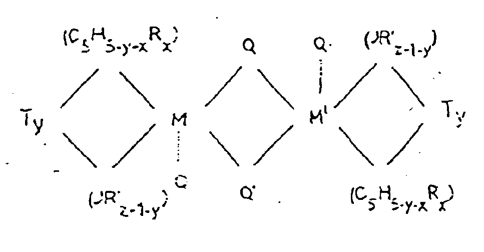 dans laquelle M représente Zr, Hf ou Ti à son état d'oxydation formel le plus élevé ;
(C₅H_{5-y-x}Rₓ) représente un noyau cyclopentadiényle qui est substitué avec 0 à cinq groupes R, "x" est égal à 0, 1, 2, 3, 4 ou 5 et désigne le degré de substitution et chaque groupe R représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par un atome d'halogène, radicaux métalloïdiques à substituants hydrocarbyle en C₁ à C₂₀ dans lesquels le métalloïde est choisi dans le Groupe IVA du Tableau Périodique des Eléments, et radicaux halogéno, ou (C₅H_{5-y-x}Rₓ) représente un noyau cyclopentadiényle dans lequel deux groupes R adjacents sont joints en formant un noyau en C₄ à C₂₀ donnant un ligand cyclopentadiényle polycyclique saturé ou insaturé ;
(JR'_{z-1-y}) représente un ligand hétéroatomique dans lequel J est un élément ayant un indice de coordination égal à trois du Groupe VA ou un élément ayant un indice de coordination égal à deux du Groupe VIA du Tableau Périodique des Eléments, chaque radical R' représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par un atome d'halogène, et "z" désigne l'indice de coordination de l'élément J ;
chaque radical Q ou Q' représente indépendamment n'importe quel ligand anionique univalent ou bien Q et Q' représentent un agent chélatant anionique divalent et M' répond à la même définition que M;
"y" est égal à 0 ou 1 lorsque "w" est supérieur à 0 ; "y" est égal à 1 lorsque "w" est égal à 0 ; lorsque "y" est égal à 1, T représente un groupe covalent de pontage contenant un élément du Groupe IVA ou VA ; et L représente une base de Lewis dont l'indice "w" représente un nombre de 0 à 3, mais à l'exclusion de composés de formule générale : 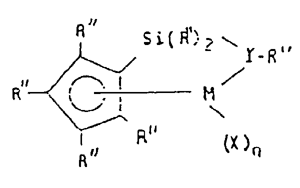 dans laquelle M répond à la définition précitée ;
R" est choisi indépendamment entre l'hydrogène, des groupes silyle, alkyle, aryle et leurs associations ayant jusqu'à 10 atomes de carbone ;
X est choisi indépendamment entre des groupes halogéno, alkyle, aryle, aryloxy et alkoxy ayant jusqu'à 10 atomes de carbone, n étant égal à 1 ou 2 en fonction de la valence de M et Y représente l'azote, et (B) un alumoxane.

4. Formulation de catalyseur suivant la revendication 3, dans laquelle l'hétéroatome J consiste en azote, phosphore, oxygène ou soufre.

5. Formulation de catalyseur suivant la revendication 3 ou 4, dans laquelle le rapport molaire AI:M est compris dans l'intervalle de 10: 1 à 20 000: 1.

6. Procédé pour la préparation d'un polymère oléfinique au moyen d'une formulation de catalyseur suivant l'une quelconque des revendications 3 à 5.

## Revendications (Revendications pour l'(les) Etat(s) contractant(s) suivant(s) : CH, DK, LI, LU)

1. Utilisation, dans la production d'une polyoléfine, d'un constituant de catalyseur de formule générale : 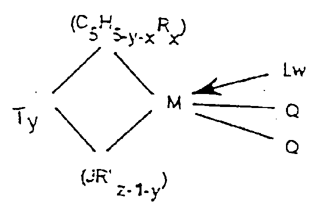 ou 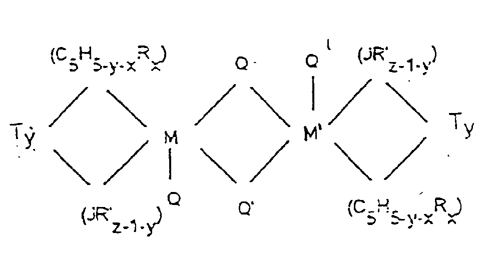 dans laquelle M représente Zr, Hf ou Ti à son état d'oxydation formel le plus élevé ;
(C₅H_{5-y-x}Rₓ) représente un noyau cyclopentadiényle qui est substitué avec zéro à cinq groupes R, "x" est égal à 0, 1, 2, 3, 4 ou 5 et désigne le degré de substitution et chaque groupe R représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par un atome d'halogène, un radical amido, un radical phosphido, un radical alkoxy ou n'importe quel autre radical contenant une fonctionnalité acide ou basique de Lewis, radicaux métalloïdiques à substituants hydrocarbyle en C₁ à C₂₀ dans lesquels le métalloïde est choisi dans le Groupe IVA du Tableau Périodique des Eléments, et radicaux halogéno, radicaux amido, radicaux phosphido, radicaux alkoxy, radicaux alkylborido ou n'importe quel autre radical contenant une fonctionnalité acide ou basique de Lewis, ou
(C₅H_{5-y-x}Rₓ) représente un noyau cyclopentadiényle dans lequel deux groupes R adjacents sont joints en formant un noyau en C₄ à C₂₀ donnant un ligand cyclopentadiényle polycyclique saturé ou insaturé ;
(JR'_{z-1-y}) représente un ligand hétéroatomique dans lequel J est un élément ayant un indice de coordination égal à trois du Groupe VA ou un élément ayant un indice de coordination égal à deux du Groupe VIA du Tableau Périodique des Eléments, chaque radical R' représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par un atome d'halogène, un radical amido, un radical phosphido, un radical alkoxy ou n'importe quel autre radical contenant une fonctionnalité acide ou basique de Lewis, et "z" désigne l'indice de coordination de l'élément J ;
chaque radical Q ou Q' représente indépendamment n'importe quel ligand anionique univalent autre que (C₅H_{5-y-X}R_{X}) ou bien Q et Q' représentent un agent chélatant anionique divalent et M' a la même définition que M ;
"y" est égal à 0 ou 1 lorsque "w" est supérieur à 0 ; "y" est égal à 1 lorsque "w" est égal à 0 ; lorsque "y" est égal à 1, T représente un groupe covalent de pontage contenant un élément du Groupe IVA ou VA ; et
L représente une base neutre de Lewis dont l'indice "w" désigne un nombre de 0 à 3.

2. Utilisation suivant la revendication 1, dans laquelle l'hétéroatome J consiste en azote, phosphore, oxygène ou soufre.

3. Formulation de catalyseur pour la polymérisation d'oléfines, comprenant (A) un composé de formule générale : 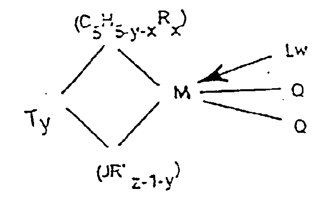 ou 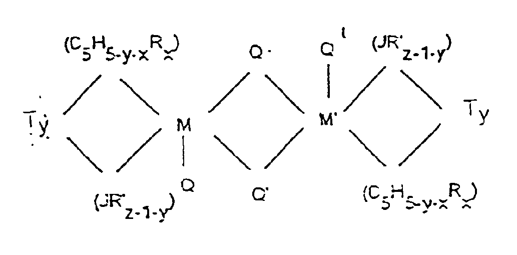 dans laquelle M représente Zr, Hf ou Ti à son état d'oxydation formel le plus élevé ;
(C₅H_{5-y-X}R_{X}) représente un noyau cyclopentadiényle qui est substitué avec jusqu'à cinq groupes R, "x" est égal à 0, 1, 2, 3, 4 ou 5 et désigne le degré de substitution et chaque groupe R représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par un atome d'halogène, un radical amido, un radical phosphido, un radical alkoxy ou n'importe quel autre radical contenant une fonctionnalité acide ou basique de Lewis, radicaux métalloïdiques à substituants hydrocarbyle en C₁ à C₂₀ dans lesquels le métalloïde est choisi dans le Groupe IVA du Tableau Périodique des Eléments et radicaux halogéno, radicaux amido, radicaux phosphido, radicaux alkoxy, radicaux alkylborido ou n'importe quel autre radical contenant une fonctionnalité acide ou basique de Lewis ou
(C₅H_{5-y-X}R_{X}) représente un noyau cyclopentadiényle dans lequel deux groupes R adjacents sont joints en formant un noyau en C₄ à C₂₀ donnant un ligand cyclopentadiényle polycyclique saturé ou insaturé ;
(JR'_{z-1-y}) représente un ligand hétéroatomique dans lequel J est un élément ayant un indice de coordination égal à trois du Groupe VA ou un élément ayant un indice de coordination égal à deux du Groupe VIA du Tableau Périodique des Eléments, chaque radical R' représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par un atome d'halogène, un radical amido, un radical phosphido, un radical alkoxy ou n'importe quel autre radical contenant une fonctionnalité acide ou basique de Lewis, et "z" désigne l'indice de coordination de l'élément J ;
chaque radical Q ou Q' représente indépendamment n'importe quel ligand anionique univalent autre que (C₅H_{5-y-X}R_{X}) ou bien Q et Q' représentent un agent chélatant anionique divalent et M' a la même définition que M ;
"y" est égal à 0 ou 1 lorsque "w" est supérieur à 0 ; "y" est égal à 1 lorsque "w" est égal à 0 ; lorsque "y" est égal à 1, T représente un groupe covalent de pontage contenant un élément du Groupe IVA ou VA ; et
L représente une base neutre de Lewis dont l'indice "w" désigne un nombre de 0 à 3 ;
et (B) un alumoxane.

4. Formulation de catalyseur suivant la revendication 3, dans laquelle l'hétéroatome J consiste en azote, phosphore, oxygène ou soufre.

5. Formulation de catalyseur suivant la revendication 3 ou 4, dans laquelle le rapport molaire AI:M est compris dans l'intervalle de 10:1 à 20 000: 1.

6. Procédé pour la préparation d'un polymère oléfinique au moyen d'une formulation de catalyseur suivant l'une quelconque des revendications 3 à 5.

## Revendications (Revendications pour l'(les) Etat(s) contractant(s) suivant(s) : ES)

1. Utilisation, dans la production d'une polyoléfine, d'un constituant de catalyseur de formule générale : 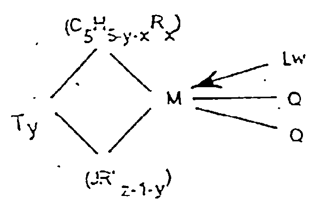 ou 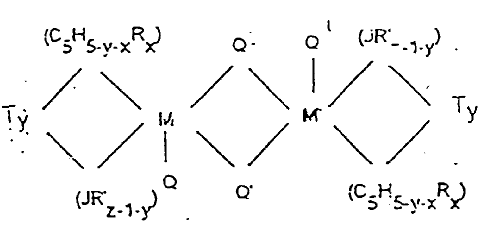 dans laquelle M représente Zr, Hf ou Ti à son état d'oxydation formel le plus élevé ;
(C₅H_{5-y-X}R_{X}) représente un noyau cyclopentadiényle qui est substitué avec jusqu'à cinq groupes R, "x" est égal à 0, 1, 2, 3, 4 ou 5 et désigne le degré de substitution et chaque groupe R représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par un atome d'halogène, radicaux métalloïdiques à substituants hydrocarbyle en C₁ à C₂₀ dans lesquels le métalloïde est choisi dans le Groupe IVA du Tableau Périodique des Eléments, et radicaux halogéno, ou (C₅H_{5-y-X}R_{X}) représente un noyau cyclopentadiényle dans lequel deux groupes R adjacents sont joints en formant un noyau en C₄ à C₂₀ donnant un ligand cyclopentadiényle polycyclique saturé ou insaturé ;
(JR'_{z-1-y}) représente un ligand hétéroatomique dans lequel J est un élément ayant un indice de coordination égal à trois du Groupe VA ou un élément ayant un indice de coordination égal à deux du Groupe VIA du Tableau Périodique des Eléments, chaque radical R' représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par un atome d'halogène, et "z" représente l'indice de coordination de l'élément J ;
chaque radical Q ou Q' représente indépendamment n'importe quel ligand anionique univalent autre que (C₅H_{5-y-X}R_{X}) ou bien Q et Q' représentent un agent chélatant anionique divalent et M' a la même définition que M ;
"y" est égal à 0 ou 1 lorsque "w" est supérieur à 0 ; "y" est égal à 1 lorsque "w" est égal à 0 ; lorsque "y" est égal à 1, T représente un groupe covalent de pontage contenant un élément du Groupe IVA ou VA ; et L représente une base neutre de Lewis dont l'indice "w" désigne un nombre de 0 à 3, mais à l'exclusion de composés de formule générale : 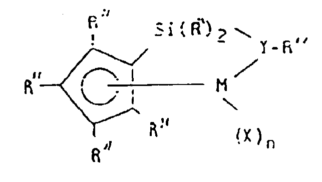 dans laquelle M répond à la définition précitée ;
R" est choisi indépendamment dans le groupe consistant en l'hydrogène, des groupes silyle, alkyle, aryle et leurs associations ayant jusqu'à 10 atomes de carbone,
X est choisi indépendamment entre des groupes halogéno, alkyle, aryle, aryloxy ou alkoxy ayant jusqu'à 10 atomes de carbone, n étant égal à 1 ou 2 en fonction de la valence de M et Y représente l'azote.

2. Utilisation suivant la revendication 1, dans laquelle l'hétéroatome J consiste en azote, phosphore, oxygène ou soufre.

3. Procédé pour la préparation d'un polymère oléfinique au moyen d'une formulation de catalyseur comprenant (A) un composé de formule générale : 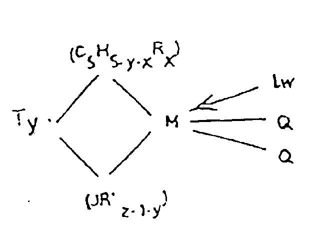 ou 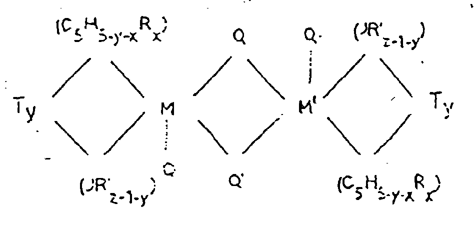 dans laquelle M représente Zr, Hf ou Ti à son état d'oxydation formel le plus élevé ;
(C₅H_{5-y-X}R_{X}) représente un noyau cyclopentadiényle qui est substitué avec 0 à cinq groupes R, "x" est égal à 0, 1, 2, 3, 4 ou 5 et désigne le degré de substitution et chaque groupe R représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par un atome d'halogène, radicaux métalloïdiques à substituants hydrocarbyle en C₁ à C₂₀ dans lesquels le métalloïde est choisi dans le Groupe IVA du Tableau Périodique des Eléments, et radicaux halogéno, ou (C₅H_{5-y-X}R_{X}) représente un noyau cyclopentadiényle dans lequel deux groupes R adjacents sont joints en formant un noyau en C₄ à C₂₀ donnant un ligand cyclopentadiényle polycyclique saturé ou insaturé ;
(JR'_{z-1-y}) représente un ligand hétéroatomique dans lequel J est un élément ayant un indice de coordination égal à trois du Groupe VA ou un élément ayant un indice de coordination égal à deux du Groupe VIA du Tableau Périodique des Eléments, chaque radical R' représente, indépendamment, un radical choisi dans le groupe consistant en radicaux hydrocarbyle en C₁ à C₂₀, radicaux hydrocarbyle en C₁ à C₂₀ substitués dans lesquels un ou plusieurs atomes d'hydrogène sont remplacés par un atome d'halogène, et "z" désigne l'indice de coordination de l'élément J ;
chaque radical Q ou Q' représente indépendamment n'importe quel ligand anionique univalent ou bien Q et Q' représentent un agent chélatant anionique divalent et M' répond à la même définition que M ;
"y" est égal à 0 ou 1 lorsque "w" est supérieur à 0 ; "y" est égal à 1 lorsque "w" est égal à 0 ; lorsque "y" est égal à 1, T représente un groupe covalent de pontage contenant un élément du Groupe IVA ou VA ; et L représente une base de Lewis dont l'indice "w" représente un nombre de 0 à 3, mais à l'exclusion de composés de formule générale : 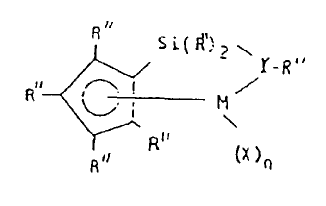 dans laquelle M répond à la définition précitée ;
R" est choisi indépendamment entre l'hydrogène, des groupes silyle, alkyle, aryle et leurs associations ayant jusqu'à 10 atomes de carbone ;
X est choisi indépendamment entre des groupes halogéno, alkyle, aryle, aryloxy et alkoxy ayant jusqu'à 10 atomes de carbone, n étant égal à 1 ou 2 en fonction de la valence de M et Y représente l'azote,
et (B) un alumoxane.

4. Procédé suivant la revendication 3, dans lequel l'hétéroatome J consiste en azote, phosphore, oxygène ou soufre.

5. Procédé suivant la revendication 3 ou 4, dans lequel le rapport molaire AI:M est compris dans l'intervalle de 10:1 à 20 000:1.

6. Procédé suivant l'une quelconque des revendications 3 à 5, en phase liquide, qui comprend les étapes consistant à mettre en contact un monomère oléfinique avec la formulation de catalyseur dans un diluant de polymérisation convenable et faire réagir ledit monomère en présence de ladite formulation de catalyseur pendant un temps et à une température suffisants pour produire une polyoléfine de haut poids moléculaire.

7. Procédé suivant la revendication 6, dans lequel le monomère comprend l'éthylène seul, pour la production d'un homopolyéthylène, ou de l'éthylène en assocation avec une alpha-oléfine ayant 3 à 20 atomes de carbone pour la production d'un copolymère éthylène-alpha-oléfine.

8. Procédé suivant la revendication 7, dans lequel l'éthylène est soumis à une zone réactionnelle à des pressions de 1,3 x 10-³ bar à 3445 bars et une température réactionnelle de -100° à 300°C.
